# EUROPEAN PATENT APPLICATION

(11) **EP 1 536 327 A2**
(43) Date of publication of application: **01.06.2005**
(21) Application number: 04020899.3
(22) Date of filing: 02.09.2004
(51) Int. Cl.: G06F 9/44

(54) **Programming interface for a computer platform**

(30) Priority: 24.10.2003 US 694080
(71) Applicant: MICROSOFT CORPORATION, Redmond, WA 98052 (US)
(72) Inventor: Bogdan, Jeffrey L., Redmond WA 98052 (US); Relyea, Robert A., Redmond WA 98052 (US)
(74) Representative: Grünecker, Kinkeldey, Stockmair & Schwanhäusser Anwaltssozietät

(57) **Abstract**

A programming interface provides functions for generating applications, documents, media presentations and other content. These functions allow developers to obtain services from an operating system, object model service, or other system or service.

## Description

### TECHNICAL FIELD

This invention relates to software and to development of such software. More particularly, this invention relates to a programming interface that facilitates use of a software platform by application programs and computer hardware.

### BRIEF DESCRIPTION OF ACCOMPANYING COMPACT DISCS

Accompanying this specification is a set of three compact discs that stores a Software Development Kit (SDK) for the Microsoft® Windows® Code-Named "Longhorn" operating system. The SDK contains documentation for the Microsoft® Windows® Code-Named "Longhorn" operating system. Duplicate copies of each of these three compact discs also accompany this specification.

The first compact disc in the set of three compact discs (CD 1 of 3) includes a file folder named "lhsdk" that was created on October 22, 2003; it is 586 Mbytes in size, contains 9,692 sub-folders, and contains 44,292 sub-files. The second compact disc in the set of three compact discs (CD 2 of 3) includes a file folder named "ns" that was created on October 22, 2003; it is 605 Mbytes in size, contains 12,628 sub-folders, and contains 44,934 sub-files. The third compact disc in the set of three compact discs (CD 3 of 3) includes a file folder named "ns" that was created on October 22, 2003; it is 575 Mbytes in size, contains 9,881 sub-folders, and contains 43,630 sub-files. The files on each of these three compact discs can be executed on a Windows®-based computing device (e.g., IBM-PC, or equivalent) that executes a Windows®-brand operating system (e.g., Windows® NT, Windows® 98, Windows® 2000, Windows® XP, etc.). The files on each compact disc in this set of three compact discs are hereby incorporated by reference.

Each compact disc in the set of three compact discs itself is a CD-R, and conforms to the ISO 9660 standard. The contents of each compact disc in the set of three compact discs is in compliance with the American Standard Code for Information Interchange (ASCII).

### BACKGROUND

Very early on, computer software came to be categorized as "operating system" software or "application" software. Broadly speaking, an application is software meant to perform a specific task for the computer user such as solving a mathematical equation or supporting word processing. The operating system is the software that manages and controls the computer hardware. The goal of the operating system is to make the computer resources available to the application programmer while at the same time, hiding the complexity necessary to actually control the hardware.

The operating system makes the resources available via functions that are collectively known as the Application Program Interface or API. The term API is also used in reference to a single one of these functions. The functions are often grouped in terms of what resource or service they provide to the application programmer. Application software requests resources by calling individual API functions. API functions also serve as the means by which messages and information provided by the operating system are relayed back to the application software.

In addition to changes in hardware, another factor driving the evolution of operating system software has been the desire to simplify and speed application software development. Application software development can be a daunting task, sometimes requiring years of developer time to create a sophisticated program with millions of lines of code. For a popular operating system such as various versions of the Microsoft Windows@ operating system, application software developers write thousands of different applications each year that utilize the operating system. A coherent and usable operating system base is required to support so many diverse application developers.

Often, development of application software can be made simpler by making the operating system more complex. That is, if a function may be useful to several different application programs, it may be better to write it once for inclusion in the operating system, than requiring dozens of software developers to write it dozens of times for inclusion in dozens of different applications. In this manner, if the operating system supports a wide range of common functionality required by a number of applications, significant savings in applications software development costs and time can be achieved.

Regardless of where the line between operating system and application software is drawn, it is clear that for a useful operating system, the API between the operating system and the computer hardware and application software is as important as efficient internal operation of the operating system itself.

Over the past few years, the universal adoption of the Internet, and networking technology in general, has changed the landscape for computer software developers. Traditionally, software developers focused on single-site software applications for standalone desktop computers, or LAN-based computers that were connected to a limited number of other computers via a local area network (LAN). Such software applications were typically referred to as "shrink wrapped" products because the software was marketed and sold in a shrink-wrapped package. The applications utilized well-defined APIs to access the underlying operating system of the computer.

As the Internet evolved and gained widespread acceptance, the industry began to recognize the power of hosting applications at various sites on the World Wide Web (or simply the "Web"). In the networked world, clients from anywhere could submit requests to server-based applications hosted at diverse locations and receive responses back in fractions of a second. These Web applications, however, were typically developed using the same operating system platform that was originally developed for standalone computing machines or locally networked computers. Unfortunately, in some instances, these applications do not adequately transfer to the distributed computing regime. The underlying platform was simply not constructed with the idea of supporting limitless numbers of interconnected computers.

To accommodate the shift to the distributed computing environment being ushered in by the Internet, Microsoft Corporation developed a network software platform known as the ".NET" Framework (read as "Dot Net"). Microsoft@ .NET is software for connecting people, information, systems, and devices. The platform allows developers to create Web services that will execute over the Internet. This dynamic shift was accompanied by a set of API functions for Microsoft's .NET™ Framework.

As use of the .NET™ Framework has become increasingly common, ways to increase the efficiency and/or performance of the platform have been identified. The inventors have developed a unique set of API functions to allow for such increased efficiency and/or performance.

### SUMMARY

A programming interface provides functions for generating applications, documents, media presentations and other content. These functions allow developers to obtain services from an operating system, object model service, or other system or service. In one embodiment, the functions allow a developer to generate a graphical user interface.

### BRIEF DESCRIPTION OF THE DRAWINGS

The same numbers are used throughout the drawings to reference like features.

Fig. 1 illustrates a network architecture in which clients access Web services over the Internet using conventional protocols.

Fig. 2 is a block diagram of a software architecture for a network platform, which includes an application program interface (API).

Fig. 3 is a block diagram of the presentation subsystem supported by the API, as well as function classes of the various API functions.

Fig. 4 is a block diagram of an exemplary computer that may execute all or part of the software architecture.

Figs. 5, 6, 7, 8, 9, 10, 11, 12, 13, 14, 15 and 16 illustrate various example implementations of a programming interface.

### DETAILED DESCRIPTION

This disclosure addresses an application program interface (API) for a network platform upon which developers can build Web applications and services. More particularly, an exemplary API is described for operating systems that make use of a network platform, such as the .NET™ Framework created by Microsoft Corporation. The .NET™ Framework is a software platform for Web services and Web applications implemented in the distributed computing environment. It represents the next generation of Internet computing, using open communication standards to communicate among loosely coupled Web services that are collaborating to perform a particular task.

In the described implementation, the network platform utilizes XML (extensible markup language), an open standard for describing data. XML is managed by the World Wide Web Consortium (W3C). XML is used for defining data elements on a Web page and business-to-business documents. XML uses a similar tag structure as HTML; however, whereas HTML defines how elements are displayed, XML defines what those elements contain. HTML uses predefined tags, but XML allows tags to be defined by the developer of the page. Thus, virtually any data items can be identified, allowing Web pages to function like database records. Through the use of XML and other open protocols, such as Simple Object Access Protocol (SOAP), the network platform allows integration of a wide range of services that can be tailored to the needs of the user. Although the embodiments described herein are described in conjunction with XML and other open standards, such are not required for the operation of the claimed invention.

As used herein, the phrase application program interface or API includes traditional interfaces that employ method or function calls, as well as remote calls (e.g., a proxy, stub relationship) and SOAP/XML invocations.

It should be appreciated that in some of namespace descriptions below, descriptions of certain classes, interfaces, enumerations and delegates are left blank. More complete descriptions of these classes, interfaces, enumerations and delegates can be found in the subject matter of the compact discs that store the SDK referenced above.

### EXEMPLARY NETWORK ENVIRONMENT

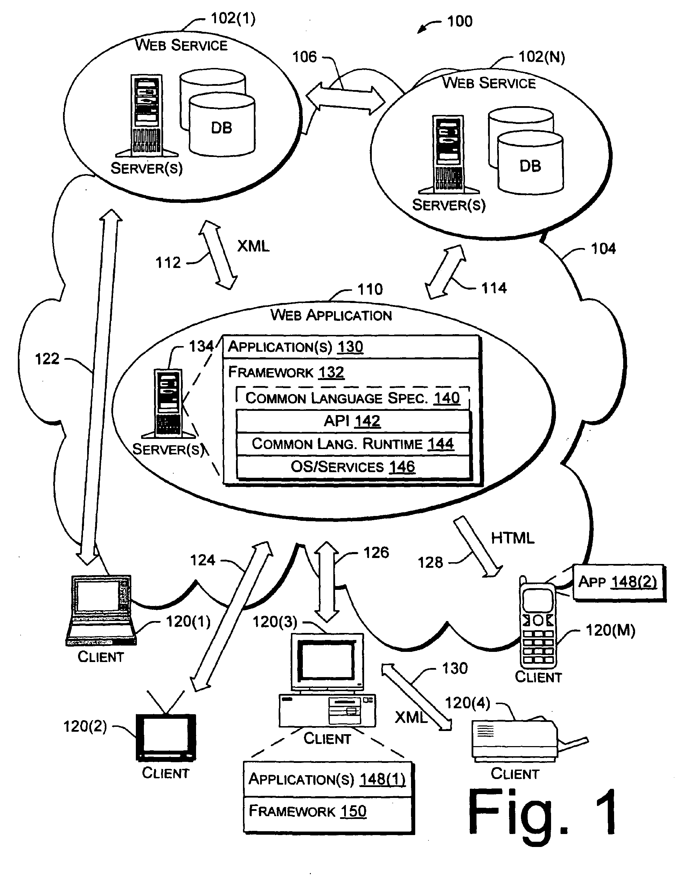

Fig. 1 shows a network environment 100 in which a network platform, such as the .NET™ Framework, may be implemented. The network environment 100 includes representative Web services 102(1), ..., 102(N), which provide services that can be accessed over a network 104 (e.g., Internet). The Web services, referenced generally as number 102, are programmable application components that are reusable and interact programmatically over the network 104, typically through industry standard Web protocols, such as XML, SOAP, WAP (wireless application protocol), HTTP (hypertext transport protocol), and SMTP (simple mail transfer protocol) although other means of interacting with the Web services over the network may also be used, such as Remote Procedure Call (RPC) or object broker type technology. A Web service can be self-describing and is often defined in terms of formats and ordering of messages.

Web services 102 are accessible directly by other services (as represented by communication link 106) or a software application, such as Web application 110 (as represented by communication links 112 and 114). Each Web service 102 is illustrated as including one or more servers that execute software to handle requests for particular services. Such services often maintain databases that store information to be served back to requesters. Web services may be configured to perform any one of a variety of different services. Examples of Web services include login verification, notification, database storage, stock quoting, location directories, mapping, music, electronic wallet, calendar/scheduler, telephone listings, news and information, games, ticketing, and so on. The Web services can be combined with each other and with other applications to build intelligent interactive experiences.

The network environment 100 also includes representative client devices 120(1), 120(2), 120(3), 120(4), ..., 120(M) that utilize the Web services 102 (as represented by communication link 122) and/or the Web application 110 (as represented by communication links 124, 126, and 128). The clients may communicate with one another using standard protocols as well, as represented by an exemplary XML link 130 between clients 120(3) and 120(4).

The client devices, referenced generally as number 120, can be implemented many different ways. Examples of possible client implementations include, without limitation, portable computers, stationary computers, tablet PCs, televisions/set-top boxes, wireless communication devices, personal digital assistants, gaming consoles, printers, photocopiers, and other smart devices.

The Web application 110 is an application designed to run on the network platform and may utilize the Web services 102 when handling and servicing requests from clients 120. The Web application 110 is composed of one or more software applications 130 that run atop a programming framework 132, which are executing on one or more servers 134 or other computer systems. Note that a portion of Web application 110 may actually reside on one or more of clients 120. Alternatively, Web application 110 may coordinate with other software on clients 120 to actually accomplish its tasks.

The programming framework 132 is the structure that supports the applications and services developed by application developers. It permits multi-language development and seamless integration by supporting multiple languages. It supports open protocols, such as SOAP, and encapsulates the underlying operating system and object model services. The framework provides a robust and secure execution environment for the multiple programming languages and offers secure, integrated class libraries.

The framework 132 is a multi-tiered architecture that includes an application program interface (API) layer 142, a common language runtime (CLR) layer 144, and an operating system/services layer 146. This layered architecture allows updates and modifications to various layers without impacting other portions of the framework. A common language specification (CLS) 140 allows designers of various languages to write code that is able to access underlying library functionality. The specification 140 functions as a contract between language designers and library designers that can be used to promote language interoperability. By adhering to the CLS, libraries written in one language can be directly accessible to code modules written in other languages to achieve seamless integration between code modules written in one language and code modules written in another language. One exemplary detailed implementation of a CLS is described in an ECMA standard created by participants in ECMA TC39/TG3. The reader is directed to the ECMA web site at www.ecma.ch.

The API layer 142 presents groups of functions that the applications 130 can call to access the resources and services provided by layer 146. By exposing the API functions for a network platform, application developers can create Web applications for distributed computing systems that make full use of the network resources and other Web services, without needing to understand the complex interworkings of how those network resources actually operate or are made available. Moreover, the Web applications can be written in any number of programming languages, and translated into an intermediate language supported by the common language runtime 144 and included as part of the common language specification 140. In this way, the API layer 142 can provide methods for a wide and diverse variety of applications.

Additionally, the framework 132 can be configured to support API calls placed by remote applications executing remotely from the servers 134 that host the framework. Representative applications 148(1) and 148(2) residing on clients 120(3) and 120(M), respectively, can use the API functions by making calls directly, or indirectly, to the API layer 142 over the network 104.

The framework may also be implemented at the clients. Client 120(3) represents the situation where a framework 150 is implemented at the client. This framework may be identical to server-based framework 132, or modified for client purposes. Alternatively, the client-based framework may be condensed in the event that the client is a limited or dedicated function device, such as a cellular phone, personal digital assistant, handheld computer, or other communication/computing device.

### DEVELOPERS' PROGRAMMING FRAMEWORK

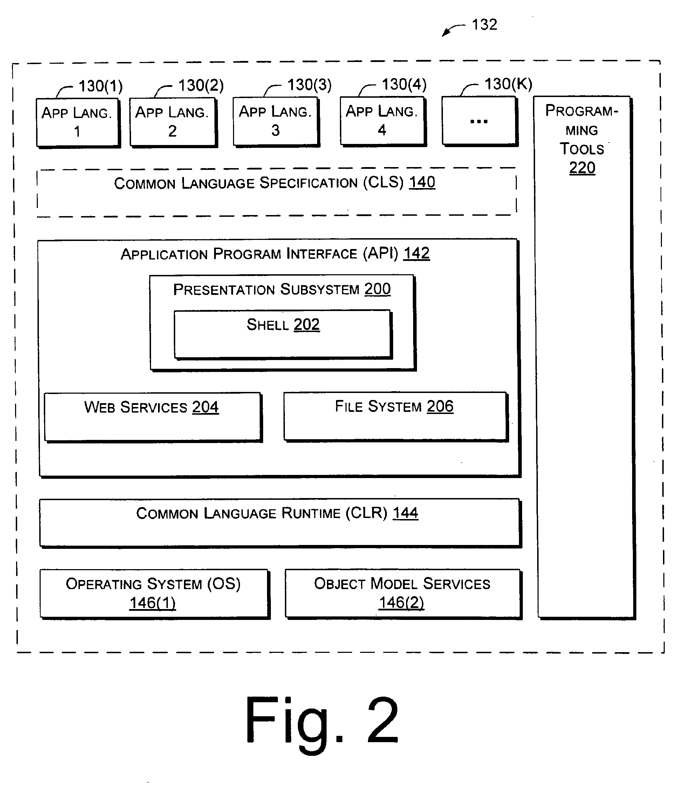

Fig. 2 shows the programming framework 132 in more detail. The common language specification (CLS) layer 140 supports applications written in a variety of languages 130(1), 130(2), 130(3), 130(4), ..., 130(K). Such application languages include Visual Basic, C++, C#, COBOL, Jscript, Perl, Eiffel, Python, and so on. The common language specification 140 specifies a subset of features or rules about features that, if followed, allow the various languages to communicate. For example, some languages do not support a given type (e.g., an "int*" type) that might otherwise be supported by the common language runtime 144. In this case, the common language specification 140 does not include the type. On the other hand, types that are supported by all or most languages (e.g., the "int[]" type) is included in common language specification 140 so library developers are free to use it and are assured that the languages can handle it. This ability to communicate results in seamless integration between code modules written in one language and code modules written in another language. Since different languages are particularly well suited to particular tasks, the seamless integration between languages allows a developer to select a particular language for a particular code module with the ability to use that code module with modules written in different languages. The common language runtime 144 allow seamless multi-language development, with cross language inheritance, and provide a robust and secure execution environment for the multiple programming languages. For more information on the common language specification 140 and the common language runtime 144, the reader is directed to co-pending applications entitled "Method and System for Compiling Multiple Languages", filed 6/21/2000 (serial number 09/598,105) and "Unified Data Type System and Method" filed 7/10/2000 (serial number 09/613,289), which are incorporated by reference.

The framework 132 encapsulates the operating system 146(1) (e.g., Windows@-brand operating systems) and object model services 146(2) (e.g., Component Object Model (COM) or Distributed COM). The operating system 146(1) provides conventional functions, such as file management, notification, event handling, user interfaces (e.g., windowing, menus, dialogs, etc.), security, authentication, verification, processes and threads, memory management, and so on. The object model services 146(2) provide interfacing with other objects to perform various tasks. Calls made to the API layer 142 are handed to the common language runtime layer 144 for local execution by the operating system 146(1) and/or object model services 146(2).

The API 142 groups API functions into multiple namespaces. Namespaces essentially define a collection of classes, interfaces, delegates, enumerations, and structures, which are collectively called "types", that provide a specific set of related functionality. A class represents managed heap allocated data that has reference assignment semantics. A delegate is an object oriented function pointer. An enumeration is a special kind of value type that represents named constants. A structure represents static allocated data that has value assignment semantics. An interface defines a contract that other types can implement.

By using namespaces, a designer can organize a set of types into a hierarchical namespace. The designer is able to create multiple groups from the set of types, with each group containing at least one type that exposes logically related functionality. In the exemplary implementation, the API 142 is organized to include three root namespaces. It should be noted that although only three root namespaces are illustrated in Fig. 2, additional root namespaces may also be included in API 142. The three root namespaces illustrated in API 142 are: a first namespace 200 for a presentation subsystem (which includes a namespace 202 for a user interface shell), a second namespace 204 for web services, and a third namespace 206 for a file system. Each group can then be assigned a name. For instance, types in the presentation subsystem namespace 200 can be assigned the name "Windows", and types in the file system namespace 206 can be assigned names "Storage". The named groups can be organized under a single "global root" namespace for system level APIs, such as an overall System namespace. By selecting and prefixing a top level identifier, the types in each group can be easily referenced by a hierarchical name that includes the selected top level identifier prefixed to the name of the group containing the type. For instance, types in the file system namespace 206 can be referenced using the hierarchical name "System.Storage". In this way, the individual namespaces 200, 204, and 206 become major branches off of the System namespace and can carry a designation where the individual namespaces are prefixed with a designator, such as a "System." prefix.

The presentation subsystem namespace 200 pertains to programming and content development. It supplies types that allow for the generation of applications, documents, media presentations and other content. For example, presentation subsystem namespace 200 provides a programming model that allows developers to obtain services from the operating system 146(1) and/or object model services 146(2).

The shell namespace 202 pertains to user interface functionality. It supplies types that allow developers to embed user interface functionality in their applications, and further allows developers to extend the user interface functionality.

The web services namespace 204 pertains to an infrastructure for enabling creation of a wide variety of applications, e.g. applications as simple as a chat application that operates between two peers on an intranet, and/or as complex as a scalable Web service for millions of users. The described infrastructure is advantageously highly variable in that one need only use those parts that are appropriate to the complexity of a particular solution. The infrastructure provides a foundation for building message-based applications of various scale and complexity. The infrastructure or framework provides APIs for basic messaging, secure messaging, reliable messaging and transacted messaging. In the embodiment described below, the associated APIs have been factored into a hierarchy of namespaces in a manner that has been carefully crafted to balance utility, usability, extensibility and versionability.

The file system namespace 206 pertains to storage. It supplies types that allow for information storage and retrieval.

In addition to the framework 132, programming tools 210 are provided to assist the developer in building Web services and/or applications. One example of the programming tools 210 is Visual Studio™, a multi-language suite of programming tools offered by Microsoft Corporation.

### ROOT API NAMESPACES

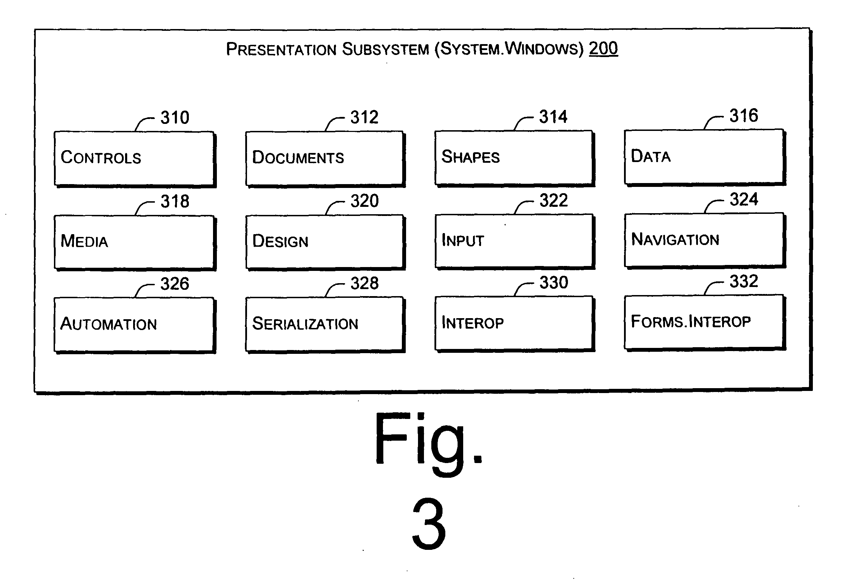

Fig. 3 shows a portion of the presentation subsystem 200 in more detail. In one embodiment, the namespaces are identified according to a hierarchical naming convention in which strings of names are concatenated with periods. For instance, the presentation subsystem namespace 200 is identified by the root name "System.Windows". Within the "Sytem.Windows" namespace is another namespace for various controls, identified as "System.Windows.Controls", which further identifies another namespace for primitives (not shown) known as "System.Windows.Controls.Primitives". With this naming convention in mind, the following provides a general overview of selected namespaces of the API 142, although other naming conventions could be used with equal effect.

As shown in Fig. 3, the presentation subsystem 200 includes multiple namespaces. The namespaces shown in Fig. 3 represent a particular embodiment of the presentation subsystem 200. Other embodiments of the presentation subsystem 200 may include one or more additional namespaces or may omit one or more of the namespaces shown in Fig. 3.

The presentation subsystem 200 is the root namespace for much of the presentation functionality of the API 142. A controls namespace 310 includes controls used to build a display of information, such as a user interface, and classes that allow a user to interact with an application. Example controls include "Button" that creates a button on the display, "RadioButton" that generates a radio-style button on the display, "Menu" that creates a menu on the display, "ToolBar" that creates a toolbar on the display, "Image" that generates an image on the display and "TreeView" that creates a hierarchical view of information.

Certain controls are created by nesting and arranging multiple elements. The controls have a logical model that hides the elements used to create the controls, thereby simplifying the programming model. The controls can be styled and themed by a developer or a user (e.g., by customizing the appearance and behavior of user interface buttons). Some controls have addressable components that allow an individual to adjust the style of individual controls. Additionally, the controls can be sub-classed and extended by application developers and component developers. The controls are rendered using vector graphics such that they can be resized to fit the requirements of a particular interface or other display. The controls are capable of utilizing animation to enhance, for example, the interactive feel of a user interface and to show actions and reactions.

### Controls Namespace

The controls namespace 310 includes one or more panels, which are controls that measure and arrange their children (e.g., nested elements). For example, a "DockPanel" panel arranges children by docking each child to the top, left, bottom or right side of the display, and fills-in the remaining space with other data. For example, a particular panel may dock menus and toolbars to the top of the display, a status bar to the bottom of the display, a folder list to the left side of the display, and fills the rest of the space with a list of messages.

As mentioned above, System.Windows.Controls.Primitives is a namespace that includes multiple controls that are components typically used by developers of the controls in the System.Windows.Controls namespace and by developers creating their own controls. Examples of these components include "Thumb and RepeatButton". "ScrollBar", another component, is created using four repeat buttons (one for "line up", one for "line down", one for "page up", and one for "page down") and a "Thumb" for dragging the current view to another location in the document. In another example, "ScrollViewer" is a control created using two "ScrollBars" and one "ScrollArea" to provide a scrollable area.

The following list contains example classes exposed by the System.Windows.Controls namespace. These classes allow a user to interact with, for example, an application through various input and output capabilities as well as additional display capabilities.
- AccessKey - AccessKey is a FrameworkElement element that wraps a character, indicating that it is to receive keyboard cue decorations denoting the character as a keyboard mnemonic. By default, the keyboard cue decoration is an underline.
- Audio - Audio Element.
- Border - Draws a border, background, or both around another element.
- Button - Represents the standard button component that inherently reacts to the Click event.
- Canvas - Defines an area within which a user can explicitly position child elements by coordinates relative to the Canvas area.
- CheckBox - Use a CheckBox to give the user an option, such as true/false. CheckBox allows the user to choose from a list of options. CheckBox controls let the user pick a combination of options.
- CheckedChangedEventArgs - This CheckedChangedEventArgs class contains additional information about the CheckedChangedEvent event.
- CheckStateChangedEventArgs - This CheckStateChangedEventArgs class contains additional information about the CheckStateChangedEvent event.
- ClickEventArgs - Contains information about the Click event.
- ColumnStyle - Represents a changeable ColumnStyle object.
- ColumnStyles - Changeable pattern IList object that is a collection of Changeable elements.
- ComboBox - ComboBox control.
- ComboBoxItem ― Control that implements a selectable item inside a ComboBox.
- ContactPickerDialog - Allows a user to select one or more contacts.
- ContactPropertyRequest - Allows an application to request information about a contact property through a ContactPickerDialog. This class cannot be inherited.
- ContactPropertyRequest Collection - Represents a collection of ContactPropertyRequest objects.
- ContactSelection - Information about a selected contact from Microsoft@ Windows@ File System, code-named "WinFS" or Microsoft Active Directory®.
- ContactSelectionCollection - Represents a collection of ContactSelection objects.
- ContactTextBox - An edit control that supports picking contacts or properties of contacts.
- ContactTextBoxSelectionChangedEventArgs - Arguments for the ContactTextBoxSelectionChanged event.
- ContactTextBoxTextChangedEventArgs - Arguments for the ContactTextBoxTextChanged event.
- ContactTextBoxTextResolvedEventArgs - Arguments for the TextResolvedToContact event.
- ContentChangedEventArgs - The event arguments for ContentChangedEvent.
- ContentControl - The base class for all controls with a single piece of content.
- ContentPresenter - ContentPresenter is used within the style of a content control to denote the place in the control's visual tree (chrome template) where the content is to be added.
- ContextMenu - Control that defines a menu of choices for users to invoke.
- ContextMenuEventArgs - The data sent on a ContextMenuEvent.
- Control ― Represents the base class for all user-interactive elements. This class provides a base set of properties for its subclasses.
- Decorator - Base class for elements that apply effects onto or around a single child element, such as Border.
- DockPanel - Defines an area within which you can arrange child elements either horizontally or vertically, relative to each other.
- DragDeltaEventArgs - This DragDeltaEventArgs class contains additional information about the DragDeltaEvent event.
- FixedPanel ― FixedPanel is the root element used in fixed-format documents to contain fixed pages for pagination. FixedPanel displays paginated content one page at a time or as a scrollable stack of pages.
- FlowPanel ― FlowPanel is used to break, wrap, and align content that exceeds the length of a single line. FlowPanel provides line-breaking and alignment properties that can be used when the flow of the container's content, Text for example, is likely to exceed the length of a single line.
- Frame - An area that can load the contents of another markup tree.
- Generator - Generator is the object that generates a UI on behalf of an ItemsControl, working under the supervision of a GeneratorFactory.
- GeneratorFactory - A GeneratorFactory is responsible for generating the UI on behalf of an ItemsControl. It maintains the association between the items in the control's ItemsCollection (flattened view) and the corresponding UIElements. The control's item-container can ask the factory for a Generator, which does the actual generation of UI.
- GridPanel - Defines a grid area consisting of columns and rows.
- HeaderItemsControl ― The base class for all controls that contain multiple items and have a header.
- HorizontalScrollBar - The Horizontal ScrollBar class.
- HorizontalSlider ― The Horizontal Slider class.
- HyperLink - The HyperLink class implements navigation control. The default presenter is TextPresenter.
- Image - Provides an easy way to include an image in a document or an application.
- IncludeContactEventArgs - Arguments passed to handlers of the ContactPickerDialog.IncludeContact event.
- ItemCollection - Maintains a collection of discrete items within a control. Provides methods and properties that enable changing the collection contents and obtaining data about the contents.
- ItemsChangedEventArgs - The ItemsChanged event is raised by a GeneratorFactory to inform layouts that the items collection has changed.
- ItemsControl - The base class for all controls that have multiple children.
- ItemsView ― Items View provides a flattened view of an ItemCollection.
- KeyboardNavigation - KeyboardNavigation class provide methods for logical (Tab) and directional (arrow) navigation between focusable controls.
- ListBox - Control that implements a list of selectable items.
- ListItem - Control that implements a selectable item inside a ListBox.
- Menu - Control that defines a menu of choices for users to invoke.
- MenuItem ― A child item of Menu. MenuItems can be selected to invoke commands. MenuItems can be separators. MenuItems can be headers for submenus. MenuItems can be checked or unchecked.
- PageViewer ― Represents a document-viewing composite control that contains a pagination control, a toolbar, and a page bar control.
- PaginationCompleteEventArgs - The event arguments for the PaginationCompleteEvent.
- PaginationProgressEventArgs - The event arguments for the PaginationProgressEvent.
- Pane - Provides a way to define window properties in a markup language (e.g., "XAML") without launching a new window.
- Panel ― Provides a base class for all Panel elements. In order to instantiate a Panel element, use the derived concrete class.
- RadioButton - RadioButton implements an option button with two states: true or false.
- RadioButtonList - This control serves as a grouping control for RadioButtons and is the piece that handles RadioButton mutual exclusivity. The RadioButtonList inherits from Selector. The RadioButtonList is essentially a Single SelectionMode Selector and the concept of Selection (from Selector) is keyed off of the Checked property of the RadioButton it is grouping.
- RowStyle - Changeable pattern Changeable elements.
- RowStyles - Changeable pattern IList object that is a collection of Changeable elements.
- ScrollChangeEventArgs - The ScrollChangeEventsArgs describe a change in scrolling state.
- ScrollViewer -
- SelectedItemsCollection - A container for the selected items in a Selector.
- SelectionChangedEventArgs - The inputs to a selection changed event handler.
- SimpleText - SimpleText is a lightweight, multi-line, single-format text element intended for use in user interface (UI) scenarios. SimpleText exposes several of the same formatting properties as Text and can often be used for a performance gain at the cost of some versatility.
- StyleSelector - StyleSelector allows the app writer to provide custom style selection logic. For example, with a class Bug as the Content, use a particular style for Pri1 bugs and a different style for Pri2 bugs. An application writer can override the SelectStyle method in a derived selector class and assign an instance of this class to the StyleSelector property on ContentPresenter class.
- Text - Represents a Text control that enables rendering of multiple formats of Text. Text is best used within an application UI; more advanced text scenarios benefit from the additional feature set of TextPanel. In most cases where relatively simple text support is required, Text is the preferred element because of its lightweight nature and range of features.
- TextBox - Represents the control that provides an editable region that accepts text input.
- TextChangedEventArgs - The TextChangedEventArgs class represents a type of RoutedEventArgs that are relevant to events raised by TextRange.SetText().
- TextPanel ― Formats, sizes, and draws text. TextPanel supports multiple lines of text and multiple text formats.
- ToolTip - A control to display information when the user hovers over a control.
- ToolTipEventArgs - The data sent on a ToolTipEvent.
- TransformDecorator - TransformDecorator contains a child and applies a specified transform to it. TransformDecorator implements logic to measure and arrange the child in its local (pre-transform) coordinates such that after the transform, the child fits tightly within the decorator's space and uses maximal area. The child therefore needs to have no knowledge that a transform has been applied to it.
- UIElementCollection - A UIElementCollection is a ordered collection of UIElements.
- ValueChangedEventArgs - This ValueChangedEventArgs class contains additional information about the ValueChangedEvent event.
- VerticalScrollBar - The Vertical ScrollBar class.
- VerticalSlider - The Vertical Slider class.
- Video - Plays a streaming video or audio file in a specified rectangle within the current user coordinate system.
- VisibleChangedEventArgs - The VisibleChangedEventArgs class contains additional information about the VisibleChangedEvent event.

The System.Windows.Controls namespace also contains various enumerations. The following list contains example enumerations associated with the System.Windows.Controls namespace.
- CharacterCase - Specifies the case of characters in a TextBox control when the text is typed.
- CheckState - Specifies the state of a control, such as a check box, that can be checked, unchecked, or set to an indeterminate state.
- ClickMode - Specifies when the Click event should fire.
- ContactControlPropertyPosition - Controls the position and display of the property of the contact.
- ContactPickerDialogLayout - Specifies how the ContactPickerDialog should display selected properties.
- ContactPropertyCategory - Specifies which value to treat as the default in the case where a property has multiple values for the user could choose from. For example, if "Work" is specified as the preferred category when requesting a phone number property from the ContactPickerDialog, and the user selects a contact with both a work and home phone number, the work phone number appears as the default selection. The user can then use the UI to choose the home phone number instead.
- ContactPropertyType - Specifies a property of a contact that the ContactPickerDialog can ask the user for.
- ContactType - Specifies which contact types to display in the ContactPickerDialog.
- Direction - This enumeration is used by the GeneratorFactory and Generator to specify the direction in which the generator produces UI.
- Dock - Specifies the Dock position of a child element within a DockPanel.
- GeneratorStatus - This enumeration is used by the GeneratorFactory to indicate its status.
- KeyNavigationMode - The type of TabNavigation property specify how the container will move the focus when Tab navigation occurs.
- MenuItemBehavior ― Defines the different behaviors that a MenuItem could have.
- MenuItemType ― Defines the different placement types of MenuItems.
- Orientation - Slider orientation types.
- PageViewerFit - Selects how pages should be fit into the PageViewer's Client area.
- PageViewerMode - Selects the current Page Viewer mode Reflected in the mode dropdown.
- ScrollerVisibility - ScrollerVisibilty defines the visiblity behavior of a scrollbar.
- SelectionMode - Specifies the selection behavior for the ListBox.

"Position" is an example structure associated with the System.Windows.Controls namespace. A user of the Generator describes positions using this structure. For example: To start generating forward from the beginning of the item list, specify position (-1, 0) and direction Forward. To start generating backward from the end of the list, specify position (-1, 0) and direction Backward. To generate the items after the element with index k, specify position (k, 0) and direction Forward.

The following list contains example delegates associated with the System.Windows.Controls namespace.
- CheckedChangedEventHandler - This delegate is used by handlers of the CheckedChangedEvent event.
- CheckStateChangedEventHandler - This delegate is used by handlers of the CheckStateChangedEvent event.
- ClickEventHandler - Represents the methods that handle the Click event.
- ContactTextBoxSelectionChangedEventHandler - A delegate handler for the ContactTextBoxSelectionChanged event.
- ContactTextBoxTextChangedEventHandler - A delegate handler for the ContactTextBoxTextChanged event.
- ContactTextBoxTextResolvedEventHandler - A delegate handler for the TextResolvedToContact event.
- ContentChangedDelegate - Delegate for the ContentChangedEvent.
- ContextMenuEventHandler - The callback type for handling a ContextMenuEvent.
- DragDeltaEventHandler - This delegate is used by handlers of the DragDeltaEvent event.
- IncludeContactEventHandler - Handler for ContactPickerDialog.IncludeContact event.
- ItemsChangedEventHandler - The delegate to use for handlers that receive ItemsChangedEventArgs.
- OpenedEventHandler - Handler for ContactPickerDialog.Opened event.
- PaginationCompleteDelegate - Delegate for the PaginationCompleteEvent.
- PaginationProgressDelegate - Delegate for the PaginationProgressEvent.
- ScrollChangeEventHandler - This delegate is used by handlers of the ScrollChangeEvent event.
- SelectionChangedEventHandler - The delegate type for handling a selection changed event.
- TextChangedEventHandler - The delegate to use for handlers that receive TextChangedEventArgs.
- ToolTipEventHandler - The callback type for handling a ToolTipEvent.
- ValueChangedEventHandler - This delegate is used by handlers of the ValueChangedEvent event.
- VisibleChangedEventHandler - This delegate is used by handlers of the VisibleChangedEvent event.

Another namespace, System.Windows.Controls.Atoms, is a sub-namespace of the System.Windows.Controls namespace. System.Windows.Controls.Atoms includes associated controls, event arguments and event handlers. The following list contains example classes associated with the System.Windows.Controls.Atoms namespace.
- PageBar - Represents a scrollable pagination control.
- PageElement - Renders a specific page of paginated content. The page to be rendered is specified by the PageSource property.
- PageHoveredEventArgs - PageHoveredEventArgs provides information about where the mouse pointer is hovering.
- PageScrolledEventArgs - The PageScrolledEventArgs contains info pertaining to the PageScrolled Event.
- PageSelectedEventArgs - The PageSelectedEvent is fired when a new row/column range selection is made.
- PageSelector - PageSelector: Allows the user to select a range of rows/columns of pages to be displayed.
- PageSource - Identifies the source of the content to be paginated. It also provides properties and methods for formatting paginated content.

The following list contains example delegates associated with the System.Windows.Controls.Atoms namespace.
- PageHoveredEventHandler - This delegate is used by handlers of the PageHoveredEvent event.
- PageScrolledEventHandler - This delegate is used by handlers of the PageHovered event.
- PageSelectedEventHandler - This delegate is used by handlers of the PageSelectedEvent event.

A System.Windows.Controls.Primitives namespace is another sub-namespace of the System.Windows.Controls namespace. As mentioned above, the Primitives sub-namespace includes controls that are intended to be used as primitives by other more complex controls. The following list contains example classes associated with the System.Windows.Controls.Primitives namespace.
- ButtonBase - When overridden in a derived class, defines the relevant events and properties, and provides handlers for the relevant input events.
- Popup - A control that creates a fly-out window that contains content.
- RangeBase - Represents the base class for elements that have a specific range. Examples of such elements are scroll bars and progress bars. This class defines the relevant events and properties, and provides handlers for the events.
- RepeatButton - RepeatButton control adds repeating semantics of when the Click event occurs.
- ScrollArea - ScrollArea is the effective element for scrolling. It contains content that it clips and provides properties to expose the content's offset and extent. It also provides default input handling such that scrolling can be driven programatically or via keyboard or mouse wheel.
- ScrollBar - The ScrollBar class.
- Selector - The base class for controls that select items from among their children.
- Slider - The Slider class.
- Thumb - The thumb control enables basic drag-movement functionality for scrollbars and window resizing widgets.

"IEnsureVisible" is an example interface associated with the System.Windows.Controls.Primitives namespace. IEnsureVisible is implemented on a visual to scroll/move a child visual into view.

The following list contains example enumerations associated with the System.Windows.Controls.Primitives namespace.
- ArrowButtonStates -
- CloseModeType - Describes how a popup should behave to various mouse events.
- Part - The Part enumeration is used to indicate the semantic use of the controls that make up the scroll bar.
- PartStates - ScrollBar Part States.
- PlacementType - Describes where a popup should be placed on screen.
- SizeBoxStates -

### Documents Namespace

A documents namespace 312 is a collection of semantic and formatting elements that are used to create richly formatted and semantically rich documents. In one embodiment, an "element" is a class that is primarily used in conjunction with a hierarchy of elements (referred to as a "tree"). These elements can be interactive (e.g., receiving user input via keyboard, mouse or other input device), can render images or objects, and can assist with the arrangement of other elements. Example elements include a "Block" element that implements a generic block, a "Body" element that represents content that includes the body of a table, a "Cell" element that contains tabular data within a table, a "Header" element that represents the content included in the header of a table, and a "PageBreak" element that is used to break content across multiple pages.

The following list contains example classes exposed by the System.Windows.Documents namespace.
- AdaptiveMetricsContext - AdaptiveMetricsContext provides the root element for adaptive-flow-format documents. Once a child panel is encapsulated in an AdaptiveMetricsContext element, the content of the panel is processed by the Reading Metrics Engine (RME). The size of the child panel is used to calculate the number and size of any columns as well as optimum font sizes and line heights.
- Block - Implements a generic block element that does not induce default rendering behavior.
- BlockElement - Implements a base class for all Block elements.
- Body - Represents the content that comprises the body of a Table element.
- Bold - Implements a Bold element derived from Inline.
- BreakRecord - Stores information necessary to continue formatting paginated content across page breaks. Inherit from this class to provide pagination support. This is an abstract class.
- Cell - Cells contain tabular data within a Table. Cell elements are contained within a Row.
- CellCollection - Ordered collection of table cells.
- Column - The Column element is used to apportion the contents of a GridPanel or Table.
- ColumnCollection - A ColumnCollection is an ordered collection of Columns.
- ColumnResult - Represents a column's view-related information.
- ContainerParagraphResult - Provides access to calculated layout parameters for a Paragraph object which contains only other Paragraph objects.
- ContentPosition - Represents the position of content within a paragraph. Inherit from this class to describe the position of associated content. This is an abstract class.
- Document - The purpose of the Document class is to decouple the content of a document from the UI "chrome" that surrounds it. "Decoupling" means that you can author a document without thinking about (and without committing to) its UI. The Document class holds document content, typically a TextPanel or a FixedPanel and its children. A visual tree (by default, a PageViewer) is associated with this element through the WPP control styling mechanism.
- DocumentPage - Represents layout information for a control associated with a page of a document subject to pagination. Inherit from this class to implement to describe the layout information for these controls. This is an abstract class.
- DocumentPageParagraphResult - Provides access to calculated layout parameters for objects affected by pagination.
- FindEngine - Base class for find algorithms.
- FindEngineFactory - Find algorithms factory.
- FixedPage - Provides access to a single page of content within a fixed-format layout document.
- Footer - Represents the content that comprises the footer of a Table element.
- Header - Represents the content that comprises the header of a Table element.
- Heading - Implements a block-level element that renders text as a heading.
- HyphenationDictionary - HyphenationDictionary represents a dictionary for the purpose of providing hyphenation support within applications. It can contain both an inline dictionary and a reference to an external dictionary. The inline dictionary has higher priority and will be applied before entries in the external dictionary.
- Hyphenator - The Hyphenator object maintains reference to hyphenation data within a HyphenationDictionary and also performs hyphenation.
- Inline - Implements a generic Inline element that does not induce any default rendering behavior.
- InlineElement - Implements a generic inline element as base class for all inline elements.
- Italic - Implements an Italic element derived from Inline.
- LineBreak - Represents a markup element that forces a line break.
- LineResult - Provides access to calculated information of a line of text.
- List - Implements a List element. Lists are block-level elements designed to be formatted with markers such as bullets or numbering.
- ListElementItem - Implements a ListElementItem, which supports markers such as bullets or numbering.
- Note - Implements a Note element, which is analagous to the note element in HTML.
- PageBreak - Represents a markup element used to break content across various pages.
- PageDescriptor - Implements PageDescriptor, which stores information necessary to create paginated layout.
- Paragraph - Implements a block-level element used to render text in a paragraph. Rendering behavior is analagous to that of the paragraph element in HTML.
- ParagraphResult - Provides access to calculated layout parameters for a Paragraph object.
- Row - Defines a row within a GridPanel or Table element.
- RowCollection ― RowCollection represents an ordered collection of Rows.
- RowGroup - Specifies property defaults for a group of rows in a Table or GridPanel.
- Section - Implements a generic container element. Rendering behavior is analagous to the div element in HTML.
- SmallCaps - Implements an inline SmallCaps element. SmallCaps are typographic forms that render as small capital versions of letters for emphasis, as in a title.
- Subscript - Represents an inline Subscript element. Subscript characters are written immediately below, below and to the left, or below and to the right of other characters.
- Superscript - Represents an inline Superscript element. Superscript characters are typically letters or numbers and render immediately above, above and to the left, or above and to the right of other characters.
- Table - Table is used to display complex data in tabular form using a markup language (e.g., "XAML").
- TextArray - Base API for text access and manipulation.
- TextChangedEventArgs - The TextChangedEventArgs defines the event arguments sent when a TextArray is changed.
- TextElement - TextElement provides TextRange facilities for the TextTree. It is an immutable, continuous TextRange with fixed endpoints. It provides ContentElement Input, Focus and Eventing support. It also provides DependencyObject property support.
- TextNavigator - This can enumerate text content. Implements a movable TextPosition. It can move by text run or be positioned at a know location in text.
- TextParagraphResult - Provides access to calculated layout parameters for text, including floated objects and figures.
- TextPosition - This is an object representing a certain position in a TextArray. A compact object representing a position in text automatically maintains position when text changes. Comparison operations are only applicable to positions within same TextArray (same Context) TextPosition can be static or movable. IsChangeable property tells the kind of position.
- TextRange - TextRange is an abstract class providing generic association of zero or more subranges with properties. Subrange manipulation is defined on derived classes.
- TextRangeMovable - TextRangeMovable is an abstract class for movable TextRanges. It adds the ability to move the start and end points based on TextUnits.
- TextTreeChangedEventArgs - The TextChangedEventArgs defines the event arguments sent when a TextArray is changed.
- TextTreeDumper - TreeDumper is a tree test class that is public due to packaging issues.
- TextTreeNavigator - This is an object representing a certain moveable position in a TextTree. It is a specific implementation of TextNavigator for use only in the TextTree.
- TextTreePosition - This is an object representing a certain immutable position in a TextTree. It is a specific implementation of TextPosition for use only in the TextTree.
- TextTreeRange - Provides TextRange facilities for the TextTree. It is a mutable, continuous TextRange with movable endpoints.
- TextTreeRangeContentEnumerator - Enumerator on object children directly under a TextTreeRange.
- TextUnit - Extensible unit of text navigation.
- TextUnits - Commonly used text units for TextPosition and TextRange.
- Typography - Provides access to a rich set of OpenType typography properties.
- UIElementParagraphResult - The ParagraphResult for a paragraph which is composed entirely of a UIElement. Used for Floaters, Figures and embedded block level UIElements.
- Underline - Implements an Underline element derived from InlineElement.

The following list contains example interfaces associated with the System.Windows.Documents namespace.
- IDocumentContentHost - Implement this interface on a content host so that children of that host can notify the host when content is changing.
- IDocumentFormatter - Implement this interface on an element to provide support for document features such as pagination.
- ITextDocumentResult - Implement this interface to maintain column information for a document.
- ITextParagraphResult - Implement this interface to provide text and positioning information for text paragraphs.

The following list contains example enumerations associated with the System.Windows.Documents namespace.
- ElementEdge - This identifies the edge of an object where a TextPosition is located.
- FindAdvancedOptions - The advanced search options used by FindAlgorithm (search initialization) and TextRangeMovable/TextSelection (simplified search execution) classes.
- FindOptions - The simplified search options used by TextBox.Find methods.
- LogicalDirection - LogicalDirection defines a logical direction for movement in text. It is also used to determine where a TextPosition will move when content is inserted at the TextPosition.
- TextArrayRunType - This identifies the run where a TextPosition is located, taking LogicalDiretion into account.
- TextChangeOptions - Possible text changes for CanChangeText.
- TextMoveOptions - This controls the movement of TextNavigator by specifying conditions to halt navigation.

The following list contains example delegates associated with the System.Windows.Documents namespace.
- ObjectCloneDelegate - Callback method to provide a clone or copy of a DependencyObject when a portion of a TextArray is being copied or moved.
- TextChangedEventHandler - The TextChangedEventHandler delegate is called with TextChangedEventArgs every time content is added to or removed from the TextTree.

### Shapes Namespace

A shapes namespace 314 is a collection of vector graphics elements that is used to create images and objects. The use of vector graphics elements allows the elements to be easily resized to fit the requirements of a particular interface or display device. Example elements include an "Ellipse" element that draws an ellipse, a "Line" element that draws a straight line between two points, a "Rectangle" element that draws a rectangle, and a "Polygon" element that draws a polygon as a connected series of lines that form a closed shape.

The following list contains example classes exposed by the System.Windows.Shapes namespace.
- Ellipse - Draws an ellipse.
- Glyphs - Represents a glyph shape in a markup language such as "XAML". Glyphs are used to represent fonts.
- Line - Draws a straight line between two points.
- Path - Draws a series of connected lines and curves.
- Polygon - Draws a polygon (a connected series of lines that forms a closed shape).
- Polyline - Draws a series of connected straight lines.
- Rectangle - Draws a rectangle.
- Shape - An abstract class that provides base functionality for shape elements, such as ellipse, polygon and rectangle.

### Data Namespace

A data namespace 316 includes classes and interfaces used to bind properties of elements to data sources, data source classes, and data-specific implementations of data collections and views. These classes and interfaces are also used to handle exceptions in data entry and allow runtime creation of a user interface based on information in various data sources. Data can be displayed in textual form or can be utilized to change the formatting of the display, such as displaying dollar amounts in red if they are negative. Example classes include a "Bind" class that represents a binding declaration object that manages bindings between a dynamic property user interface and source data, and an "XmlDataSource" class that serves as a data source for data binding to XML content nodes.

Object-oriented applications typically represent data by classes that define both the value of a piece of data and the operations that can be performed on that data. The term "data item" refers to one such object. Applications can handle individual data items or collections of data items. They may use data items in three ways: (a) converting data from external sources such as file systems, remote servers, databases, etc. into the corresponding in-memory data items, and converting modified data items back into the form expected by these sources; (b) operating on the data items using a combination of data-centric and application-centric logic; (c) presenting the data embodied by the data items to the user through a user interface. Data namespace 316 provides support for the first and third of these tasks.

The first task, obtaining data from external sources, is supported by "data source" objects. A data source object is typically defined as a page-wide or application-wide resource, and serves as the gateway to the data. Data sources implement an IDataSource interface, which defines a standard mechanism by which the classes in the data namespace get access to the data. A particular data source object implements logic for retrieving the actual data by using mechanisms appropriate for the particular source. In one embodiment, the data namespace includes four data source classes:
1. XmlDataSource, for retrieving data represented as XML
2. SqlDataSource, for retrieving data from SQL databases, such as Microsoft SQLServer
3. WinFSDataSource, for retrieving data from the WinFS service
4. ObjectDataSource, for retrieving data from an arbitrary object defined by the application
Applications can also define their own data source classes that are tailored to special-purpose sources.

A data source class is responsible for retrieving data from an external source and converting it into one or more data items suitable for use by the binding classes. If a collection of data items is needed, the application can use any of the standard collection classes from the .Net Framework such as Array, ArrayList, Hashtable, etc., any of the data-centric collection classes from the System.Data namespace such as Dataset, or a data-centric collection class from the data namespace such as ArrayListDataCollection. The latter classes support change notifications; i.e., when the application changes the collection by adding an item, removing an item, sorting the collection, etc., the collection sends a notification. The binding classes listen for these notifications and automatically update the user interface to reflect the change.

Once the data has been converted to in-memory data items, the application can perform computations using the items and can modify the items as a result of the computations. These actions are performed using a combination of data-centric operations (defined by the data item classes) and application-centric operations (defined by the application itself). The actions may be initiated by the application automatically, or in response to an action of the user. Special support or cooperation from the data namespace is not necessary, thereby providing a clean separation of logic and presentation within the application.

The third data-related task, presenting the data through the user interface, is supported by the "binding" classes of the data namespace. These classes enable the application to describe the correspondence (binding) between a data item property (the source) and a user interface property (the target). The term databinding (or simply binding) refers to the establishment of such a correspondence. For example, an application may choose to data-bind the Text property of a Textbox control to the CustomerName property of a data item. Having done so, the control will automatically display the customer's name, updating the display whenever the application changes the data item, and updating the data item whenever the user types a new name into the control.

This kind of correspondence is described using the Bind class, and implemented using the Binding class. Any number of UI properties can share the same description (Bind), but each property has its own unique Binding that holds the state for that particular instance. The description includes the following information about the desired correspondence:
- Path - the name of the data item property to use as the source of the binding. This can be a simple property name, or a more complicated expression involving sub-objects and indexers (e.g., when the source property has a value of complex type) such as "ShippingAddress.Line[2]". When the data source is XML, the path is an XPath expression.
- BindType - whether the correspondence is one-way, two-way, or one-time. In a one-way binding, changes to the data item cause updates to the user interface property; data flows one way - from the source to the target. In a two-way binding the data flows in both directions; in addition to the one-way behavior, changes to the user interface property cause updates to the data item property. In a one-time binding, the data item property is used to initialize the user interface property, but changes do not propagate in either direction.
- Source - a description of where to obtain the source data item. This can be from a data source object, from some other user interface element, or from the value of the target element's DataContext property.
- UpdateType - when to update the source property in a two-way binding: one of Immediate, OnLostFocus, or Explicit. Immediate updates happen as soon as the user interface property changes. OnLostFocus updates are delayed until the target element loses keyboard focus - this is appropriate for a TextBox control, to avoid the expense of updating after every keystroke. Explicit updates happen when the application explicitly calls for them.
- Transformer - an object that implements the IDataTransformer interface. This gives the application a way to modify the data item value before using it in the user interface. The modification can be a simple type conversion (e.g., in a binding of the Background property to the BalanceOwed data property, the application can convert a negative balance to a red background and a positive balance to green), or an application-specific conversion (e.g., in a binding of the Text property to the NetWorth data property, the application can display "Rich" if the NetWorth exceeds $1M, "Bourgeois" if the NetWorth lies between $100K and $1M, and "Poor" if the NetWorth is less than $100K). Transformers are a simple yet powerful tool that help separate presentation from data.

All bindings except one-time rely on getting notified when the data property changes, so that the corresponding change can be made to the user interface. The binding classes recognize the IPropertyChange interface (from the System.ComponentModel namespace) as one way of implementing the required notifications.

The following tables list the members exposed by the System.Windows.Data namespace.

### Classes

- ArrayListCollectionView: Encapsulates the collection view support for the ArrayListDataCollection collection class. This class cannot be inherited.
- ArrayListDataCollection: Provides a built-in implementation of an array-list data collection with an underlying collection-view interface. It also implements ICollectionChange to provide notification when items are added, items are removed, or the whole collection is refreshed.
- Bind: Represents a bind declaration object, used to manage bindings between a dynamic property user interface (UI) and source data.
- Binding: Provides access to the single run-time instance of a binding. This class cannot be inherited.
- BindingListCollectionView: A collection view class used for Microsoft@ ActiveX® Data Objects (ADO) data views.
- CollectionContainer: Objects of this class hold an existing collection structure―for example, an ArrayListDataCollection or some other DataSet inside the ItemCollection.
- ContextAffinityCollectionView: Implements a collection view that includes checks for context affinity.
- DataContextObjectRef: Supports object references to objects being used as data context for a binding. This class cannot be inherited.
- DataSourceObjectRef: Supports object references to data sources. This class cannot be inherited.
- DataTransferEventArgs: Encapsulates arguments for data transfer events. The events are routed events that are handled specifically by a designated handler based on the DataTransferEventHandler delegate.
- ElementObjectRef: Represents an object reference to an its element, with the object being specified by element ID. This class cannot be inherited.
- ExplicitObjectRef: Represents an explicit object reference to an element. This class cannot be inherited.
- ListCollectionView: Implements a collection view for collections based on IList.
- ObjectDataSource: Serves as a data source for data binding. Bindable data items can be specified as common language runtime types.
- ObjectRef: The abstract class that is used as the parent class of ElementObjectRef, ExplicitObjectRef, and TypeObjectRef.
- ParameterCollection: Objects of this class hold the collection of named parameters (with their corresponding values) for an SqlDataSource.
- QueryCommand: This class represents a single select statement to be submitted to the database.
- RefreshCompletedEventArgs: Encapsulates the arguments passed either in the RefreshCompleted event of ObjectDataSource, or in the RefreshCompleted event of XmlDataSource.
- SqlCommandList: A list of sql commands and the names of the tables that they should be used to fill.
- SqlDataSource: SqlDataSource gets data from a Microsoft SQL Server for use in databinding.
- TransformerSource: Allows resource reference to a transformer class that is defined as code-behind in the current application.
- TypeObjectRef: Supports object reference by type. This class cannot be inherited.
- WinFSDataSource: The WinFSDataSource facilitates databinding of data stored in WinFS with Avalon applications
- XmlDataNamespaceManager: XmlDataNamespaceManager Class Used to declare namespaces to be used in Xml data binding XPath queries
- XmlDataSource: Serves as a data source for data binding to Extensible Markup Language (XML) content nodes.
- XmlNamespace: Declares an individual namespace within an XML data source.

### Interfaces

- IContains: Used to create classes that declare filtering criteria for collection views.
- IDataSource: Supports creation of data source objects. Data source objects are used for common representation of data for data binding.
- IDataTransformer: Provides methods that enable client-side transformation of bound data.

### Enumerations

- BindFlags: Describes special properties of a binding. See Using Bind Declarations for "Longhorn" markup language (code-named "XAML") usage. See BindType for the enumeration that is used to specify binding type (one-way, two-way and so on).
- BindStatus: Status of a Binding.
- BindType: Describes how changes in data values will transfer to and from source properties and target properties of a binding.
- SqlDataSourceMode: The enumeration of the possible modes that SqlDataSource can have. The mode determines what sort of data is returned when the application retrieves the value from the Data property.
- UpdateType: Specifies when updates to the data source (target-to-source data transfer) should occur in a binding. Setting these values will only be relevant if a binding's BindType is set to TwoWay (or left as the default).

### Delegates

- DataChangedEventHandler: Represents the method that handles the DataChanged event raised by data sources that implement IDataSource.
- DataTransferEventHandler: Represents the method that handles a data transfer event raised by Binding.
- RefreshCompletedEventHandler: Represents the method that handles the ObjectDataSource.RefreshCompleted and XmlDataSource.RefreshCompleted events.

### Media Namespace

A media namespace 318 provides various media classes. Application developers as well as component developers may use these classes to develop various presentation functionality. Example classes in media namespace 318 include an "ImageEffect" class that permits certain imaging effects (e.g., blur and grayscale), and a "Brush" class that provides a mechanism for filling an area using solid colors, gradients, images, video, and the like.

The media namespace 318 includes a sub-namespace System.Windows.Media.Animation that includes services that allow a developer to animate properties and coordinate a set of animations with a set of timelines. An animation is an object that changes a value over a period of time. Animation effects include moving an object on the display, and changing the size, shape, or color of an object. Multiple animation classes are provided to implement various animation effects. Effects can be achieved by associating an animation with an element's property value. For example, to create a rectangle that fades in and out of view, one or more animations are associated with the opacity property of the rectangle.

The media namespace 318 also includes a sub-namespace System.Windows.Media.TextFormatting that provides various text services. For example, a "TextFormatter" text engine provides services for breaking text lines and formatting text presented on a display. "TextFormatter" is capable of handling different text character formats and paragraph styles as well as handling international text layout.

The following tables list example members exposed by the System.Windows.Media namespace.

### Classes

- ArcSegment: Represents an elliptical arc between two points.
- AudioData: Enables playing of audio files according to the state of a time node.
- AudioDataConverter: AudioDataConverter
- BezierSegment: Represents a cubic Bézier curve drawn between two points.
- Brush: Provides a generic means for filling an area using solid colors (SolidColorBrush), gradients (LinearGradientBrush, RadialGradientBrush), images (ImageBrush), video, and more.
- BrushConverter: Used to convert a Brush object to or from another object type.
- Brushes: Implements a set of predefined solid colors.
- CloseSegment: Represents a line that connects the last point of a PathFigure object with its starting point.
- CodecFilter: Filter for enumerating codecs. Only those codecs that match the properties will be enumerated.
- CodecInfo: Information about a specific codec and a factory for creating the codec. This is returned from the codec enumerator.
- ColorCollection ColorCollectionConverter: ColorCollectionConverter - Converter class for converting instances of other types to and from ColorCollection instances.
- ColorContext ColorConverter: Used to convert a Color object to or from another object type.
- Colors: Implements a set of predefined colors.
- ContainerVisual: Manages a collection of Visual objects.
- DashArrays: DashArrays - The DashArrays class is static, and contains properties for well known dash styles.
- DoubleCollection DoubleCollectionConverter: DoubleCollectionConverter Converter class for converting instances of other types to and from DoubleCollection instances.
- Drawing: A Drawing is a list of 2d drawing primitives.
- DrawingBrush: DrawingBrush - This TileBrush defines its content as a Drawing
- DrawingContext: Drawing context.
- DrawingVisual: Visual that contains graphical content to be drawn.
- EllipseGeometry: Represents the geometry of a circle or ellipse.
- FontFamily: Font family
- FormattedText: The FormattedText class is a part of Avalon MIL easy text API, which is targeted at programmers needing to add some simple text to a MIL visual.
- Geometry: An abstract class that provides base functionality for all geometry classes, such as EllipseGeometry, RectangleGeometry, and PathGeometry. The Geometry class of objects can be used for clipping, hit-testing, and rendering 2-D graphic data.
- GeometryCollection: Represents a collection of Geometry objects.
- GetPageEventArgs: class GetPageEventArgs
- GlyphRun: Glyph run class
- GlyphTypeface: Physical font face corresponds to a font file on the disk
- GradientBrush: An abstract class that describes a gradient fill. Classes that derive from GradientBrush describe different ways of interpreting gradient stops.
- GradientStop: Describes the location and color of a transition point in a gradient.
- GradientStopCollection: cRepresents a collection of GradientStop gradient stops.
- HitTestParameters: This is the base class for packing together parameters for a hit test pass.
- HitTestResult: This base returns the visual that was hit during a hit test pass.
- HwndInterop: HwndInterop
- HwndVisual HyphenationCandidate: Describes one Hyphenation candidate.
- ICCProfile ImageBrush: Fills an area with an image. This class may be used to specify images as the fill or background of other objects.
- ImageCodecCollection: The collection of codecs (actually CodecInfos) on the system.
- ImageCodecEnumerator: The enumerator for Image frames.
- ImageColorTransform: ImageColorTransform Performs color management on an imaging pipeline.
- ImageData: Contains an image and related data.
- ImageDataBuilder: This object is used to build an ImageData object.
- ImageDecoder: ImageDecoder is a container for image frames. Each image frame is an ImageSource. Unlike ImageSource, ImageDecoder is NOT an immutable object and can be re-initialized to a different image stream. However, any ImageSources (frames) that it returns should be immutable.
- ImageDecoderBmp: The built-in Microsoft Bmp (Bitmap) Decoder.
- ImageDecoderGif: The built-in Microsoft GIF Decoder.
- ImageDecoderIcon: The built-in Microsoft Icon Decoder.
- ImageDecoderInternal: For internal use only.
- ImageDecoderJpeg: The built-in Microsoft Jpeg Decoder.
- ImageDecoderPng: The built-in Microsoft PNG Decoder.
- ImageDecoderTiff: The built-in Microsoft Tiff Decoder.
- ImageEffect: The ImageEffect class is the base class for all imaging effects (blur, grayscale, etc) It's possible for an effect to not have any inputs but an effect should have at least one output. The default implementations of things assume this. If a derived effect is going to play with Output/Outputs be sure that at least one is there.
- ImageEffectBlur: Gaussian blur effect. It is a single input, single output effect. Warning: If the effect is being scaled (i.e. Input.ScaleX or Input.ScaleY isn't 1) and Expand is true, then it's possible for the output dimensions to be larger or smaller that PixelWidth and PixelHeight. Adjust the pixel buffer fed to copy to avoid problems.
- ImageEffectFlipRotate: This effect can flip an image in X or Y and rotate by multiples of 90 deg
- ImageEffectGammaCorrect: This effect changes the gamma of an image.
- ImageEffectGlow: Performs a glow effect. It is a single input, single output effect.
- ImageEffectGrayscale: Converts an image to grayscale. It is a single input, single output effect.
- ImageEffectNegate: Negates an image. It is a single input, single output effect.
- ImageEffectSharpen: Unsharp mask. It is a single input, single output effect.
- ImageEffectSource: ImageEffectSource class implementation
- ImageEffectSourceCollection: The collection of image effect outputs
- ImageEffectTint: Tint constructor. It is a single input, single output effect.
- ImageEncoder: ImageEncoder collects a set of frames (ImageSource's) with their associated thumbnails and metadata and saves them to a specified stream. In addition to frame-specific thumbnails and metadata, there can also be an image-wide (global) thumbnail and metadata, if the codec supports it.
- ImageEncoderBmp: Built-in Encoder for Bmp files.
- ImageEncoderGif: Built-in Encoder for Gif files.
- ImageEncoderInternal: ImageEncoderInternal collects a set of frames (ImageSource's) with their associated thumbnails and metadata and saves them to a specified stream. In addition to frame-specific thumbnails and metadata, there can also be an image-wide (global) thumbnail and metadata, if the codec supports it.
- ImageEncoderJpeg: Built-in Encoder for Jpeg files.
- ImageEncoderPng: Built-in Encoder for Png files.
- ImageEncoderTiff: Built-in Encoder for Tiff files.
- ImageExchangeMetaData: ImageExchangeMetaData This class is used to access and set metadata for ImageFiles which have Exif style metadata. MetaData is stored as Key/Value pairs, where Keys are not necessarily unique. This class provides generic access to all meta data within an image, as well as exposes CLR properties for certain well-known properties.
- ImageExchangeProperty: ImageExchangeProperty - a tuple of an ImageExchangeID and the object which is the value of that property
- ImageMetaData: ImageMetaData This class is used to access and set metadata for Images. This class also exposes a CodecMetaData property which exposes a codec-specific means of accessing the metadata for this image.
- ImagePalette: ImagePalette class
- ImageSizeOptions: Sizing options for an image. The resulting image will be scaled based on these options.
- ImageSource: Defines the methods, properties, and events for the imaging pipeline, including decoders and effects.
- ImageSourceCollection: The collection of codecs (actually ImageSource's) on the system.
- ImageSourceConverter: ImageSourceConverter
- IntegerCollection IntegerCollectionConverter: IntegerCollectionConverter Converter class for converting instances of other types to and from IntegerCollection instances.
- LinearGradientBrush: Defines a linear gradient used to fill an area.
- LineGeometry: Represents the geometry of a line.
- LineSegment: Represents a line between two points. Unlike LineGeometry objects, LineSegment should be contained within a PathFigure.
- MatrixTransform: Creates an arbitrary affine matrix transformation used to manipulate objects or coordinate systems in a two-dimensional plane.
- MediaData: MediaData. Use to playback Audio/Video content.
- MediaSystem: The MediaSystem class controls the media layer.
- NineGridBrush: Fills an entire area with an image. Portions of the image are stretched to fit within defined margins.
- PathFigure: Represents a sub-section of a geometry, a single connected series of two-dimensional geometric segments.
- PathFigureCollection PathFigureConverter: PathFigureConverter
- PathGeometry: Represents a complex shape that may be composed of arcs, curves, ellipses, lines, and rectangles.
- PathGeometryConverter: PathGeometryConverter
- PathSegment: An abstract class that represents a segment of a PathFigure object. Classes that derive from PathSegment, such as ArcSegment, BezierSegment, and LineSegment, represent specific types of geometric segments.
- PathSegmentCollection: Represents a list of PathSegment objects.
- PathSegmentConverter: PathSegmentConverter
- Pen: Describes how a shape is outlined.
- PixelFormats: PixelFormats - The collection of supported Pixel Formats
- PointCollection PointCollectionConverter: PointCollectionConverter - Converter class for converting instances of other types to and from PointCollection instances.
- PointHitTestParameters: This is the class for specifying parameters hit testing with a point.
- PointHitTestResult: This class returns the point and visual hit during a hit test pass.
- PolyBezierSegment: PolyBezierSegment
- PolyLineSegment: PolyLineSegment
- PolyQuadraticBezierSegment: PolyQuadraticBezierSegment
- PrintContext: PrintContext holds state and context for a printer interation
- QuadraticBezierSegment: QuadraticBezierSegment
- RadialGradientBrush: Defines a radial gradient used to fill an object. A focal point defines the beginning of the gradient, and a circle defines the end point of the gradient.
- RectangleGeometry: Represents the geometry of a rectangle.
- RetainedVisual: RetainedVisual
- RotateTransform: Used to rotate an object about a specified point in the two-dimensional x-y plane.
- ScaleTransform: Scales an object in the two-dimensional x-y plane, starting from a defined center point. Scale factors are defined in x- and y-directions from this center point.
- SkewTransform: Represents a two-dimensional skew.
- SolidColorBrush: Represents a solid, uniform fill.
- StartSegment: StartSegment
- SubLineCollection: collection of subline. Subline can be object of one of these types GlyphRun LineOver Inline object
- TileBrush: Abstract class that describes a way to fill a region with one or more "tiles." Derived classes define the different types of tiles that can be used; for example, the ImageBrush enables you to fill an area with an image.
- Transform: An abstract class that you use as the parent class of all types of transformations in a two-dimensional plane, including rotation (RotateTransform), scale (ScaleTransform), skew (SkewTransform), and translation (TranslateTransform). This class hierarchy differs from the Matrix structure both because it is a class and because it supports animation and enumeration semantics.
- TransformCollection: Used to create and manipulate a list of Transform objects.
- TransformConverter: Used to convert a Transform object to or from another object type. object to
- TranslateTransform: Translates an object in the two-dimensional x-y plane.
- Typeface: A Typeface is a combination of family, weight, style and stretch:
- VectorCollection VectorCollectionConverter: VectorCollectionConverter - Converter class for converting instances of other types to and from VectorCollection instances.
- VideoData: Enables playing of video files according to the state of a time node.
- VideoDataConverter: V ideoDataConverter
- Visual: Base class for all Visual types. It provides services and properties common to all Visuals, including hit-testing, coordinate transformation, and bounding box calculations.
- VisualCollection: An ordered collection of Visual objects.
- VisualManager: Renders a tree of Visual objects to a rendering target, typically a window.

### Interfaces

- IHyphenate: IHyphenate is the interface for Hyphenation Service Provider
- IRetainedRender: If this interface is implemented on a class that is derived from a RetainedVisual, the RetainedVisual operations in validation mode, i.e. the graphics sub-system will call OnRender in a lazy fashion. (e.g. if the Visual appears for the first time on the screen). Note that OnRender can be called by the system anytime.
- IVisual: This interface defines the common methods and services available from a Visual object.

### Enumerations

- BrushMappingMode: BrushMappingMode - Enum which describes whether certain values should be considered as absolute local coordinates or whether they should be considered multiples of a bounding box's size.
- ChannelDescription: Describes order of each channel of pixel data
- ColorInterpolationMode: ColorInterpolationMode - This determines how the colors in a gradient are interpolated.
- CombineMode: Specifies the method used to combine two geometric areas.
- FillRule GradientSpreadMethod: Specifies how the gradient should be drawn outside of the specified gradient vector or space.
- HitTestFilterBehavior: Behavior for filtering visuals while hit tesitng
- HitTestResultBehavior: Enum controls behavior when a positive hit occurs during hit testing.
- HorizontalAlignment: The HorizontalAlignment enum is used to describe how content is positioned horizontally within a container.
- HyphenationRule: Supported Hyphenation Rules.
- ImagePaletteType: Pre-defined palette types
- MediaState: Holds the current state of the Media
- PenDashCap: PenDashCap - Enum which descibes the drawing of the ends of a dash within a dashed line.
- PenLineCap: Describes the shape at the end of a line or segment.
- PenLineJoin: PenLineJoin - Enum which descibes the drawing of the comers on the line.
- Rotation: The rotation to be applied; only multiples of 90 degrees is supported.
- StandardColorSpace Stretch: Stretch - Enum which descibes how a source rect should be stretched to fit a destination rect.
- StyleSimulations: Font style simulation
- TiffCompressOptions: Compress options for saving TIFF image
- TileMode: TileMode - Enum which descibes the drawing of the ends of a line.
- VerticalAlignment: The VerticalAlignment enum is used to describe how content is positioned vertically within a container.

### Structures

- CharacterIndexer: This class is a helper to implement named indexers for characters.
- Color: Represents colors in terms of alpha, red, green, and blue channels.
- GlyphIndexer: This class is a helper to implement named indexers for glyph metrics.
- ImageExchangeID: ImageExchangeID - This class is the type which can be used as the key for a property in an ImageMetaData instance. This can be either an integer or a string.
- ImageExchangeMetaDataEnumerator: ImageExchangeMetaDataEnumerator The enumerator for
ImageExchangeMetaData. Contains IEnumerator interface as well as strongly typed versions of the APIs
- ImageFrameEnumerator: The enumerator for Image frames.
- ImageMetaDataRational: An ImageMetaDataRational class is represented as a signed numerator and a signed denominator. The effective value of a rational is the numerator / demoninator
- ImageMetaDataUnsignedRational: A rational class is represented as an unsigned numerator and an unsigned denominator. The effective value of a rational is the numerator / demoninator
- ImagePaletteColor: ImagePaletteColor structure
- IntegerRect: A rect composed of integer values. Typically used to specify the source rect (in pixels) of interest from an image.
- Matrix: Represents a 3x3 matrix used for transformations in two-dimensional space. Because "Avalon" only allows affine transformations, the Matrix structure has six entries instead of nine.
- NamedStringIndexer: This class is a helper to implement named indexers for strings localized in multiple cultures.
- PixelFormat: Pixel Format Definition for images and pixel-based surfaces

### Delegates

- GetPageEventHandler: delegate GetPageEventHandler
- HitTestFilterDelegate: Delegate for hit tester to control whether to test against children of visual.
- HitTestResultDelegate: Delegate for hit tester to control returning of hit information on visual.

The following tables list example members exposed by the System.Windows.Media.Animation namespace.

### Classes

- Animatable: Any class that doesn't derive from DependencyObject but which has properties that can be animated should derive from this class.
- AnimationCollection: This abstract class provides base functionality for animation collections, such as ColorAnimationCollection, DoubleAnimationCollection, and SizeAnimationCollection.
- AnimationEffect: Override this class to implement element level animations which can participate in the rendering process to instantiate animations on multiple elements at rendering time.
- AnimationEffectCollection: Holds a collection of AnimationEffects.
- BoolAnimationCollection: Represents a collection of BoolModifier animations.
- BoolModifier BoolTimedModifier ByteAnimationCollection: Represents a collection of BoolModifier animations.
- ByteModifier ByteTimedModifier CharAnimationCollection: Represents a collection of CharModifier animations.
- CharModifier CharTimedModifier ColorAnimation: Animates a color value of a property.
- ColorAnimationCollection: Represents a collection of ColorModifier animations.
- ColorKeyFrameCollection ColorModifier ColorTimedModifier DecimalAnimationCollection: Represents a collection of DecimalModifier animations.
- DecimalModifier DecimalTimedModifier DoubleAnimation: Used to animate properties that accept a Double value.
- DoubleAnimationCollection: Represents a collection of DoubleModifier animations.
- DoubleKeyFrameCollection DoubleModifier DoubleTimedModifier FloatAnimation: Used to animate properties that accept a Single value.
- FloatAnimationCollection: Represents a collection of FloatModifier animations.
- FloatKeyFrameCollection FloatModifier FloatTimedModifier IntAnimationCollection: Represents a collection of IntModifier animations.
- IntModifier IntTimedModifier LengthAnimation: Used to animate properties that accept a Length value.
- LengthAnimationCollection: Represents a collection of LengthModifier animations.
- LengthKeyFrameCollection LengthModifier LengthTimedModifier LongAnimationCollection: Represents a collection of LongModifier animations.
- LongModifier LongTimedModifier MatrixAnimationCollection: Represents a collection of MatrixModifier animations.
- MatrixModifier MatrixTimedModifier Modifier ObjectAnimationCollection: Represents a collection of ObjectModifier animations.
- ObjectModifier ObjectTimedModifier PathAnimation: This animation can be used inside of a MatrixAnimationCollection to move a visual object along a path.
- PointAnimation: Used to animate properties that accept Point values.
- PointAnimationCollection: Represents a collection of PointModifier animations.
- PointKeyFrameCollection PointModifier PointTimedModifier RectAnimation: Used to animate properties that accept a Rect value.
- RectAnimationCollection: Represents a collection of RectModifier animations.
- RectKeyFrameCollection RectModifier RectTimedModifier ShortAnimationCollection: Represents a collection of ShortModifier animations.
- ShortModifier ShortTimedModifier SizeAnimation: Defines an animation based on the Size of an object. By providing Size information, an object can appear to shrink or enlarge over a period of time.
- SizeAnimationCollection: Represents a collection of SizeModifier animations.
- SizeKeyFrameCollection SizeModifier SizeTimedModifier StringAnimationCollection: Represents a collection of StringModifier animations.
- StringModifier StringTimedModifier Timeline: Maintains run-time timing state for timed objects.
- TimelineBuilder: An object that can be used to create Timeline objects.
- TimeManager: The object that controls an entire timing tree.
- TimeSyncValueTypeConverter: An object that performs type conversions involving TimeSyncValue values.
- TimeTypeConverter: An object that performs type conversions involving Time values.
- VectorAnimation: Used to animate properties that accept a Vector value.
- VectorAnimationCollection: Represents a collection of VectorModifier animations.
VectorKeyFrameCollection
VectorModifier
VectorTimedModifier

### Interfaces

- IClock: Represents an object that can provide linear time values.
- IModifier: Defines the basic behavior of a modifier object. A modifier is an object that takes an object, called the *base value*, of a certain type and returns another object of the same type as its output.
- ITimingControl: Defines the behavior of timelines and timed objects.
- ITimingControlBuilder: Represents an object that can build a timeline template.

### Enumerations

- AnimationType: Describes the behavior of an animation.
- CloneType: The types of clones that CloneCore may request.
- InterpolationMethod: Describes how an animation calculates its output values.
- KeyTimeType: The different types of KeyTimes
- TimeEndSync: Values for the endSync attribute, which specifies how a container calculates its simple duration based on the children's durations.
- TimeFill: Specifies how the timeline behaves after it is no longer active.
- TimeRestart: Values for the Timeline.Restart attribute.
- TimeSeekOrigin: Indicates a timeline position; used to specify the behavior of the ITimingControl interface's Seek method by defining the position to which the offset is applied.
- TimeSyncBase: The event to synchronize a begin or end value to.

### Structures

ColorKeyFrame
DoubleKeyFrame
FloatKeyFrame
- KeySpline: This class is used to pass an array of key splines into the KeySplines property of an animation fragment.
- KeyTime: A KeyTime is use to specify when relative to the time of an animation that a KeyFrame takes place.
- LengthKeyFrame PointKeyFrame RectKeyFrame SizeKeyFrame Time: A value representing time, with associated time arithmetic operations.
- TimelineEnumerator: Enumerates items in an TimelineList collection.
- TimeSyncValue: A value representing an absolute or relative begin or end time for a timeline.
VectorKeyFrame

The following tables list example members exposed by the System.Windows.Media.TextFormatting namespace.

### Classes

- InlineObjectInfo: Provides measurement details for inline text objects. The formatting client passes this object as a parameter to the GetInlineObjectInfo method.
- TextFormatter: TextFormatter is the "Avalon" text engine and provides services for formatting text and breaking text lines. TextFormatter can handle different text character formats and paragraph styles, and includes support for international text layout.
- TextHighlightBounds: Bounds of text range
- TextInfo: Represents information about a block of text in the client's text source character store.
- TextLine: Provides services to a line of text. Inherit from this class to implement services that manipulate and format a line of text. This is an abstract class.
- TextMarkerGeneratedContent: Generates line list marker output.
- TextMarkerInfo: Defines the style and type of a paragraph's list marker. The formatting client uses this class as a parameter to provide marker details to the GetTextMarkerInfo method.
- TextParagraphProperties: Represents properties that can change from one paragraph to the next, such as flow direction, alignment, or indentation.
- TextRun: Defines a sequence of characters that share a single property set. The formatting client provides TextRun details into this class when the TextFormatter passes it as a parameter to the GetTextRun method.
- TextRunBounds: Bounds of text run
- TextRunCache: Provides caching services to the TextFormatter object in order to improve performance.
- TextRunClientData: Represents client information data associated with a TextRun.
- TextRunProperties: Provides properties that can change from one TextRun to another, such as typeface or foreground brush. This is an abstract class.
- TextRunTypographyProperties: Provides typography properties for TextRun. This client set of properties generates a set of features that are processed by the OpenType layout engine.
- TextSource: Provides character data and formatting properties to the TextFormatter. All access to the text in the TextSource is achieved through the GetTextRun method, which is designed to allow the client to virtualize text in any way it chooses. This is an abstract class.
- TextTrimmingInfo: Provides description of text trimming characteristics. The formatting client fills trimming details into this class when the TextFormatter passes it as a parameter of the GetTextTrimmingInfo method.

### Enumerations

- TextParagraphFlags: Flags describing paragraph characteristics
- TextRunCacheFlags: Kind of content in text run cache
- TextRunType: Indicates the type of TextRun.

### Structures

- TextSourceCharacterIndex: TextSourceCharacterIndex represents a caret or character position in text.

### Media Integration Layer

A Media Integration Layer (MIL) provides an API for developers or programmers to accomplish possibly complex composition effects within their applications in a straightforward manner, while leveraging the graphics processing unit in a manner that does not adversely impact normal application performance. One aspect of the MIL provides the ability to combine different media types (e.g., 2D, 3D, Video, Audio, text, imaging and so forth) and animate them together smoothly and seamlessly.

The MIL provides a graphics architecture for multi-stage composition and a programming model that allows for functional parity at the programmatic and scripted interfaces. An API and script allows the creation of a retained structure or scene description that is composited when rendered, yet includes areas that have a more immediate-mode nature.

Via the interfaces, the MIL provides access to a data structure for storing visual information so that applications can take advantage of the graphics capabilities provided by the computer hardware. The interfaces are based on an element object model and a vector graphics markup language for using that element object model in a manner that allows program code developers to consistently interface with a scene graph data structure to produce graphics. The data structure may also be used for either directly rendering or for "compiling" the visual information so that it can be provided to a lower level graphics system for fast composition and animation.

The vector graphics element object model generally corresponds to shape elements and other elements including image and video elements that correlate with a scene graph object model of the scene graph. Markup may be parsed into data including elements in an element tree that is translated into the objects of a scene graph data structure. Other markup may be translated directly into data and calls that create the scene graph objects. The markup language provides distinct ways to describe an element, including a simple string format or complex property syntax, which may be named, enabling reuse in other locations in the markup.

An aspect of the MIL is the integration of animation and timing across the API set, providing animation as an inherent base-level concept. To facilitate smooth animation, the MIL provides s multiple-level graphics processing system and method (e.g., of an operating system). One such multiple-level graphics processing system comprises two components, including a tick-on-demand or slow-tick high-level component, and a fast-tick (e.g., at the graphics hardware frame refresh rate) low-level component. In general, the high-level, less frequent component performs computationally intensive aspects of updating animation parameters and traversing scene data structures, in order to pass simplified data structures to the low-level component. The low-level component operates at a higher frequency, such as the frame refresh rate of the graphics subsystem, to process the data structures into constant output data for the graphics subsystem. The low-level processing includes interpolating any parameter intervals as necessary to obtain instantaneous values to render the scene for each frame of animation.

Top level MIL objects include a visual tree, which is an object that contains the main content to be drawn. Controls will derive from visuals of the tree directly. Visuals are device and parent context independent. A render target is the device to which the visual is drawn. This object (e.g., screen) may have its own dirty or invalidation mechanism. Various render targets include a screen in a window, a Printer, a Metafile, a Surface, and a "Sub-window" which is a part of the scene that is drawn separately from the rest of the scene. Other drawing related objects include a Visual Renderer, comprising an object that is configured to draw a visual tree onto a render target, and a Display Scheduler object that knows when to draw the visual tree on to the render target. A Time Manager is a context object for a set of timing nodes, and is the object that the scheduler calls tick on.

A Visual API is provided, which is essentially a starting point for drawing via the media integration layer, and comprises multiple types of objects, including a VisualManager object, which connects a Visual Tree to a medium. The different types of VisualManagers (e.g., Screen, Printer, and Surface) are responsible for rendering a Visual Tree to their particular medium. A visual is where the programmer does the drawing; it is a node in the visual tree and provides a place for a program to draw.

The DrawingContext APIs present a context-based programming model for how to construct visual content that populates a Visual or are rendered to an ImageData. DrawingContext classes are provided, as well as the classes and entrypoints necessary to acquire a DrawingContext and enumerate the visual content in a Retained Visual/Drawing Visual.

To enable mutability, there is provided a single set of types that derive from a common Changeable base class. Any type for which mutability is desired change may derive from the Changeable class. For example, in a graphics programming, the object model includes Brushes, Pens, Geometries, FloatAnimations, GradientStops, Segments, and so forth. An IsChangeable property specifies whether the changeable object can be modified or not, depending on its current value, which defines a state.

A brush is an object that represents a method to fill a plane. In addition to being able to fill a plane in an absolute way, brushes of the media integration layer are also able to adapt how they fill the plane relative to the size of the object that they are filling. Examples of types of brushes include SolidColorBrush, VisualBrush (which can reference a vector graphics resource/Visual), DrawingBrush, LinearGradient, RadialGradient, ImageBrush and NineGridBrush. Certain brush objects will have an idea of how they relate to the coordinate system when they are used, and an idea of how they relate to the bounding box of the geometry with which they are used. This size is based on from the object that the brush is filling. The Brush base class has a Transform, a general opacity, and a blend mode. Brush (and other object resources in Vector Graphics and the MIL API) objects are Changeables and are writable after they have been created, and follow the general Changeable pattern for how they behave after they are used in qualified use.

A Geometry class of objects can be used for clipping, hit-testing and rendering of 2D vector-based data with the Pen and Brush. The derived Geometry classes provide more specific building and enumeration semantics. A number of shape-specific Geometry types are provided, as well as a generalized PathGeometry that allows for explicit definition of more complex shaped Geometry. Geometry is an abstract base class. A GeometryCollection is a collection of multiple Geometry objects that have been combined using particular CombineMode operations on their defined area. This object allows easier building visual combinations of Geometry objects than is possible using strictly PathFigure objects within a PathGeometry.

ImageSource is an abstract class, comprising a basic building block for imaging. An ImageSource conceptually represents a single, constant set of pixels at a certain size and resolution. For example, an ImageSource may be a single frame in an image file that a Decoder could provide, or it may be the results of a transform that operates on a certain ImageSource of its own. An ImageSource is changeable, not because its own properties can be changed, but because the properties of its sub-classes can potentially be changed.

A Transform class of objects is provided for scaling, rotating, translating and skewing vector and raster graphics. The derived Transform classes provide friendly usage and enumeration semantics.

Effects provide a means to alter the visual contents of a scene in a rendering-centric manner. For example, VisualEffects (raster-based bitmap effects) operate on the image-based, fully composited representation of a portion of a scene. Effects are broken down into various types including VisualEffects, BlendModes and VectorEffects. VisualEffects can be used in a retained-mode scene by applying it to a sub-graph or an Element, or it can be used in the standalone image pipeline. BlendModes are a specific form of image-based effects, and can be applied to the retained mode scene in generally the same manner as VisualEffects. Blend modes perform a combination of the source and destination colors as the source is composited, e.g., multiply or add.

Hit testing is used to pick visuals in a scene, and operates by starting from the top of the control tree, and returning a control or set of controls by a point or geometry. A control can define whether it is hit or not with support services including rendered geometry, bounding box, out-of-band geometry (hit region), image opacity or mask, and its own logic. The control can return specific hit-related data on hit. The hit test mechanism can filter hit test results in an efficient manner. The hit test walk is a deep right to left walk of the visual tree, with hits reported through a callback in z-order, top-to-bottom fashion. When descending, the hit tester views the filtering in terms of element level relationships, for example, a canvas with shapes, or a dock panel with an inner canvas. When a hit occurs, the hit tester can either continue processing further hits (if any), or stop.

An animation system is provided, comprised of a timing control engine and a set of animation objects. The timing engine is a service that can be used by any objects that exhibit time-varying behaviors, e.g., animations and audio or video media objects. Animation objects implement a set of functions that map time spans into other data types, which are then used as inputs into other higher-level objects. Graphical animation is achieved by associating an animation collection with a rendering operation. Each animation used in a rendering operation may be run on a separate clock, referred to as a called a "timeline." Once an animated primitive is drawn and animation parameters specified, the low-level rendering system takes care of redrawing the scene at regular intervals. Each time a frame is rendered the current value of the animations involved in the scene is computed, based on the elapsed time (in most cases measured by the system clock), and then the animated primitives are redrawn.

Various primitive types, color features and media support is also provided via the MIL. MediaData can be used to play any audio/video content.

### Design Namespace

A design namespace 320 provides classes that enable the editing of forms and text, formatting data and cross-process data sharing. These classes provide an extensible framework for editing documents, applications, and other content. Design namespace 320 contains functionality on two levels: high-level functionality for application developers desiring pre-packaged ready-to-use editors for different types of information; and lower-level functionality for more advanced applications introducing its own types of data. Example pre-packaged ready-to-use editors offer plain text editing, rich text editing, forms (element layout) editing, and password input.

Design namespace 320 provides a flexible and extensible approach to organizing various functionality. Instead of providing a common fixed-feature editor, design namespace 320 provides a combination of services, behaviors and abstractions that allow developers to build specialized and easily-customizable information editing solutions. Design namespace 320 includes several customizable editing features, including: scoped services, stackable behaviors, editor-designer pattern, abstract designer for element editing, abstract text object model, adorner layer, design surface, generalized data transfer protocol, and extensible undo mechanism.

Scoped services allows the association of specific services with particular portions and sub-portions of application data. This mechanism also allows turning services on and off in different scopes. The main class providing a support for services is ServiceManager; individual services are implemented using IService and IScopedService interfaces.

The concept of "stackable behaviors" allows different behaviors to be activated in appropriate periods of time. In one embodiment, time-based behavior activation is nested, such that a sub-process can be started and finished while a more general process is temporary suspended and then properly restored. Rather than hard-coding a solution, the approach of stackable behavior solves this problem by allowing an integration of processes that do not have pre-defined knowledge about each other. The main class providing support for this mechanism is EditRouter; individual behaviors are subclasses of Editor and EditBehavior classes. Built-in types of editable data are supported by corresponding subclasses of EditBehavior such as TextEditor, ElementEditor and MoveBehavior.

The concept of "editor-designer pattern" allows separation between generic editing functionality and more specific sub-typed of editable information. The editor does not expect a specific data structure on which to operate. Instead, it assumes that data content is exposed through some abstract interface, hiding the implementation details, but sufficient for corresponding action of editing interaction. This pattern is particularly useful with elements (in forms editing) and for text (in rich text editing).

"Abstract designer for element editing" is an application of the "editor-designer pattern" for an area of element editing (e.g., forms editing). Various elements may have different internal structures, appearances and behaviors, but if they expose some standard "designers" for movement, rotation, or resizing, then they become editable by the element editor.

The abstract text model is another application of the "editor-designer pattern" for use in rich text editing. This abstraction allows different backing stores to participate in rich text editing, such as RTF, XHTML, plain text, XAML markup, syntactically highlighted source code, etc. Even though the semantic nature and internal structure of these types of texts can be different, by exposing itself via an abstract text model they allow the application of generic editing mechanisms. Additionally, this approach allows for text and data integration, such that text from different backing stores may contain pieces of each other, while providing a seamless editing experience.

The adorner layer is an unified tool that provides rich visual feedback during editing. The adorner layer provides uniformed support for many types of feedback. Powerful visuals may be dynamically attached and detached to elements and other portions of data to indicate potential user activity applicable to them. The design surface is a XAML control that pre-packages editing resources, such as the adorner layer and edit router. This simplifies middle-level editing development.

Editing functions such as cut/copy/paste and drag/drop are important in an integrated information environment, but can be difficult to support due to the complexity and incompatibility of different data types. The generalized data transfer protocol addresses this difficulty by providing for the combination of abstractions used for data extraction, data insertion, data dragging, and data conversion. This generalized data transfer protocol provides a powerful and flexible mechanism for application-data integration.

The extensible undo mechanism manages an undo stack by collecting data of various types. The undo manager includes protocols to handle undo operations with different data types.

The following tables list example members exposed by the System.Windows.Design namespace.

### Classes

- ActivationEventFilter: EventFilter
- ActivationRectangleAdornerInfo: This is the feedback that shows the border on DesignActive elements
- AdornerInfo: Provides information about a specific adorner in an adornerset.
- AdornerLayer: Provides a surface for displaying decorations on elements that need to transcend Z-order (the elements always need to be on top).
- CanvasDesigner: Default Canvas designer.
- ComponentChangeService: Provides undo and redo functionality for design-time actions that affect components.
- Designer: Provides a means of editing live content.
- DesignerFilterService: Defines an optional service that applications and controls can implement to override the default mapping between an element and the designer provided by the DesignerLookupService.
- DesignerLookupService: Allows edit behaviors to map elements to designers.
- DesignSurface: The recommended root element for editable content. It aggregates adorners, services, and events.
- EditBehavior: Defines the implementation for all edit behaviors.
- Editor: Handles user input for a particular selection type, such as text, element, or table. Typically there is a specific editor for each selection type.
- EditorTypeAttribute: Associates a selection type with the selection mode. This class cannot be inherited.
- EditRouter: Manages the set of currently active EditBehaviors.
- EditRouterChangedEventArgs: Arguments for Changed event
- ElementEditor: Element editor
- EventFilter: Enables event filtering and assignment.
- FrameworkElementDesigner: The default Designer for all controls that derive from FrameworkElement.
- MoveBehavior: Move Behavior
- ObjectSelection: Site Selection
- ParentUndoUnit: ParentUndoUnit
- RichTextDesigner: ITextDesigner implementation for TextPanel and other controls that support ITextDocumentResult.
- RoutedEventAdapter: RoutedEventAdapter thunks a specific eventHandler down to an RoutedEventHandler so that one handler can handle different types of events. Used by EditRouter
- SelectionRouter: SelectionRouter controls mixed selection with multiple selection modes. It derives from EditRouter to route events to modular editors (which derive from Editor).
- SelectionService: Provides programmatic access to selection of UI items. You can get feedback on selected items, as well as change selected items and their properties.
- ServiceConverter: ServiceConverter - Converter class for converting between a string and an instance of IService.
- SimpleTextDesigner: ITextDesigner implementation for Text and other controls that support ITextParagraphResult.
- TextDecorator: TextDecorator defines an object that manages text decoration from competing services. Using TextDecorator instead of writing property values privately ensures that competing decoration will never overlap, even in the case of identical priority.
- TextEditor: Provides text selection services.
- TextSelection: The TextSelection class encapsulates selection state for the TextEditor class. It has no public constructor, but is exposed via a public property on TextEditor.
- UndoService: Framework implementation of IUndoService
- UndoStackChangedEventArgs: Provides data for the UndoStackChanged and RedoStackChanged events

### Interfaces

- IAddRemoveChildDesigner: The IAddRemoveChildDesigner interface is used for adding/removing children
- IAdornerDesigner: Provides access to methods that allow you to retrieve the objects necessary to draw adorners on FrameworkElements.
- IDesignActivationContainer: The inner element in DesignActivation that can become designActive. Has the name container as it is assumed that if an element is DesignActive, then it will most likely be editing some child content
- IDesignActivationContainerParent: An IDesignActivationContainerParent can be host IDesignActivationContainer's in a Design environment
- IDesignSurface: Interface to be implemented by any element wishing to participate in editing.
- IMoveDesigner: Move designer interface
- IParentUndoUnit: IParentUndoUnit interface
- IScopedService: IScopedService
- ISelection: base interface for selection modes
- ISelectionDesigner: Designer interface associated with the SelectionBehavior (SelectionRouter). A class that implements this would be specified in the Designer Attribute of an element type
- IService: This is a placeholder for a TypeConverter for editing services.
- ITextDesigner: An interface components implement to supply the TextEditor service with layout-specific information and actions.
- IUndoService: IUndoService interface
- IUndoUnit: IUndoUnit interface

### Enumerations

- AdornerInfoZOrder: Z-order flags
- AdornerRenderTriggers: Flags indicating the conditions which cause adorners to rerender
- EditRouterChange: Enumeration of possible router change actions
- TextDecorationPriority: TextDecorationPriority ranks the relative importance of various text markup. It it used to z-order decoration runs in the TextDecorator class.
- UndoState: Enum for the state of the undo manager

### Delegates

- UndoStackChangedEventHandler: Represents the method that will handle an UndoStackChanged or RedoStackChanged event.

### Input Namespace

An input namespace 322 includes an input manager that coordinates inputs received by the system. The input namespace 322 also includes classes that help manage and provide control for different input devices, such as a keyboard or a mouse. The input system allows applications to get information from input devices such as mice, keyboards, and styluses (pens). Most input functionality is in the form of properties, methods, and events on the UIElement, FrameworkElement, ContentElement, and ContentFrameworkElement classes in the System.Windows namespace. UIElement and ContentElement have similar input functionality, which is captured by the IInputElement interface. Similarly, FrameworkElement and ContentFrameworkElement, which derive from UIElement and ContentElement respectively, share many input APIs and both implement IFrameworkInputElement.

The input system provides full support for keyboards, mouse, and styles. Keyboard functionality includes keydown/up events, focus management and notification, accessing current key state, and converting keystrokes into input strings. Mouse functionality includes mouse position, clicks, movement, enter/leave events at element boundaries, mouse capture, hover and mouse wheel. Stylus functionality includes position and movement (both when the pen is touching the surface and when it is "in air"), taps/clicks, capture, and gesture recognition.

The Input namespace contains helper classes necessary for the above functionality, such as enumerations, events arguments, delegate signatures, etc. Additionally, the Input namespace includes the Keyboard, Mouse, and Stylus classes, which provide information relating to the current state of those devices. The input system provides ways of specifying mouse cursors on a particular element, and for an entire application.

The input system is integrated with Text Services Framework (TSF), which allows other input software to understand the textual context into which new text is being input. This is used by input method editors (IMEs), which allow users of East Asian languages to turn multiple keystrokes into a single character -- the IME software communicates with TSF to identify the best interpretation of the keystrokes based on context and uses TSF to insert the text into the document. Similarly, speech recognition uses TSF to pick the best recognition and insert it into the document.

The input system offers automatic integration with TSF, in the form of a TextInput event. The Input namespace also offers APIs for describing the textual context, and controlling the conversion from raw keyboard input into textual input. The InputManager class provides filters and monitors, which allow a third party to observe the input stream and create new input events before the original input events have been fired. The InputManager also provides APIs for new devices to be plugged into the input system, using IInputProvider and InputReport.

The following tables list example members exposed by the System.Windows.Input namespace.

### Classes

- AccessKeyManager: AccessKeyManager exposes access key functionality, also known as mnemonics. A typical example is the Ok button, with alt-O being the mnemonic - pressing alt-O is the same as clicking the button.
- Cursor: Represents the mouse cursor to use.
- CursorTypeConverter: Converts mouse cursors to and from strings.
- FocusChangedEventArgs: The FocusChangedEventArgs class contains information about focus changes.
- InputDevice: Provides the base class for all input devices.
- InputEventArgs: The InputEventArgs class represents a type of RoutedEventArgs that are relevant to all input events.
- InputLanguageChangedEventArgs: The InputLanguageEventArgs class represents a type of RoutedEventArgs that are relevant to events raised to indicate a change in (human) input language.
- InputLanguageChangingEventArgs: The InputLanguageEventArgs class represents a type of RoutedEventArgs that are relevant to events raised to indicate a change in (human) input language.
- InputLanguageEventArgs: The InputLanguageEventArgs class represents a type of RoutedEventArgs that are relevant to events raised to indicate a change in (human) input language.
- InputLanguageManager: The InputLanguageManager class is responsible for mmanaging the input language in Avalon.
- InputManager: The InputManager class is responsible for coordinating all of the input system in "Avalon".
- InputMethod: The InputMethod class exposes TSF-related APIs, which are communicating or accessing TIP's properties.
- InputMethodStateChangedEventArgs: This InputMethodStateChangedEventArgs class is used when the input method editor (IME) changes its state.
- InputProviderSite: The object which input providers use to report input to the input manager.
- InputReport: The InputReport is an abstract base class for all input that is reported to the InputManager.
- InputReportEventArgs: Provides data for the event that is raised when an InputReport is being processed.
- Keyboard: The Keyboard class exposes APIs related to the keyboard.
- KeyboardDevice: The KeyboardDevice class represents the keyboard device to the members of a context.
- KeyboardEventArgs: The KeyboardEventArgs class provides access to the logical pointer device for all derived event args.
- KeyEventArgs: The KeyEventArgs class contains information about key states.
- KeyInterop: Provides static methods to convert between Win32 VirtualKeys and the "Avalon" Key enum.
- Mouse: The Mouse class exposes APIs related to the mouse.
- MouseButtonEventArgs: The MouseButtonEventArgs describes the state of a Mouse button.
- MouseDevice: The MouseDevice class represents the mouse device to the members of a context.
- MouseDoubleClickEventArgs: Provides data for events that are raised when the mouse is doubled-clicked.
- MouseEventArgs: The MouseEventArgs class provides access to the logical Mouse device for all derived event args.
- MouseWheelEventArgs: The MouseWheelEventArgs The MouseWheelEventArgs describes the state of a Mouse wheel.
- NotifyInputEventArgs: Provides information about an input event being processed by the input manager.
- PreProcessInputEventArgs: Allows the handler to cancel the processing of an input event.
- ProcessInputEventArgs: Provides access to the input manager's staging area.
- RawKeyboardInputReport: The RawKeyboardInputReport class encapsulates the raw input provided from a keyboard.
- RawMouseInputReport: The RawMouseInputReport class encapsulates the raw input provided from a mouse.
- StagingAreaInputItem: This class encapsulates an input event while it is being processed by the input manager.
- TextInputEventArgs: The TextInputEventArgs class contains a text representation of input.
- TextManager: The TextManager class provides the input-to-text event promotion.
- TextServicesContext: This class manages interop between a UIDispatcher and the Text Services Framework, a native COM API that enables east-asian IME input.
- TextStoreInfo: This is an internal, link demand protected class.

### Interfaces

- IInputLanguageSource: An interface for controlling the input language source.
- IInputProvider: An interface implemented by all input providers.
- IKeyboardInputProvider: An interface for controlling the keyboard input provider.
- IMouseInputProvider: An interface for controlling the mouse input provider.

### Enumerations

- CursorType: An enumeration of the supported cursor types.
- ImeConversionMode: ImeConversionMode
- ImeSentenceMode: ImeSentenceMode
- InputMethodState: State of Ime
- InputMode: The mode of input processing when the input was provided.
- InputType: The type of input being reported.
- Key: An enumeration of all of the possible key values on a keyboard.
- KeyState: The KeyState enumeration describes the state that keyboard keys can be in.
- ModifierKeys: The ModifierKeys enumeration describes a set of common keys used to modify other input operations.
- MouseButton: The MouseButton enumeration describes the buttons available on the mouse device.
- MouseButtonState: The MouseButtonState enumeration describes the possible states of the buttons available on the Mouse input device.
- RawKeyboardActions: The raw actions being reported from the keyboard.
- RawMouseActions: The raw actions being reported from the mouse.
- SpeechMode: Mode of speech

### Structures

- TextServicesMSG: Managed version of the Win32 MSG struct.

### Delegates

- FocusChangedEventHandler: The delegate to use for handlers that receive FocusChangedEventArgs.
- InputEventHandler: The delegate to use for handlers that receive InputEventArgs.
- InputLanguageEventHandler: This is a delegate for InputLanguageChanged and InputLanguageChanging events.
- InputMethodStateChangedEventHandler: The delegate to use for handlers that receive input method state changed event.
- InputReportEventHandler: The delegate to use for handlers that receive PointerMoveEventArgs.
- KeyboardEventHandler: The delegate to use for handlers that receive KeyboardEventArgs.
- KeyEventHandler: The delegate to use for handlers that receive KeyEventArgs.
- MouseButtonEventHandler: The delegate to use for handlers that receive MouseButtonEventArgs.
- MouseDoubleClickEventHandler: The delegate to use for handlers that receive MouseDoubleClickEventArgs.
- MouseEventHandler: The delegate to use for handlers that receive MouseEventArgs.

- MouseWheelEventHandler: The delegate to use for handlers that receive MouseWheelEventArgs.
- NotifyInputEventHandler: Delegate type for handles of events that use NotifyInputEventArgs.
- PreProcessInputEventHandler: Delegate type for handles of events that use PreProcessInputEventArgs.
- ProcessInputEventHandler: Delegate type for handles of events that use ProcessInputEventArgs.
- TextInputEventHandler: The delegate to use for handlers that receive TextInputEventArgs.

### Navigation Namespace

A navigation namespace 324 provides a set of classes and services that allow the building of applications with navigation paradigms, such as a browser application. These classes and services permit the development of applications with customized navigation experiences. For example, when purchasing a product or service from an online merchant, clicking a "Back" button causes the application to display a different page that asks the user if they want to cancel or change their order. In another example, activating a "Refresh" button causes an application to retrieve new data instead of first reloading the application followed by retrieving the new data. The navigation namespace 324 also includes page functions that provide a mechanism for generating a hierarchy of questions that are presented to a user.

The following tables list example members exposed by the System.Windows.Navigation namespace.

### Classes

- BoolWrapper: A wrapper for a Boolean value.
- BoolWrapperPageFunction: A typed page function that returns a Boolean value to the previous page.
- BoolWrapperReturnEventArgs IntWrapper: A wrapper for a Int32 value.
- IntWrapperPageFunction: A typed page function that returns a Int32 value to the previous page.
- IntWrapperReturnEventArgs Journal: Contains an application's navigation history.
- JournalEntry: Represents a journal entry.
- LoaderService: Used to set the current loader in a given appdomain.
- NavigateEventArgs: Obsolete.
- NavigatingCancelEventArgs: Event arguments for the NavigationApplication.Navigating and NavigationWindow.Navigating events.
- NavigatingNewWindowCancelEventArgs: Event args for the NavigatingNewWindow cancelable event The NavigatingNewWindowCancelEventArgs specifies the target NavigationContainer where the navigation will take place with the Uri or element passed in. By default the Cancel property is set to false. Setting Cancel to true will prevent the new window from being opened, and the navigation will not take place.
- NavigationApplication: Represents a "Longhorn" navigation application to the system.
- NavigationContainer: A navigable region that can contain an "Avalon" markup tree. Normally, this class is not used directly but can be used as the parent class for a custom implementation.
- NavigationErrorCancelEventArgs: Contains the arguments for the NavigationApplication.NavigationError and NavigationWindow.NavigationError events.
- NavigationEventArgs: Event arguments for non-cancellable navigation events, including LoadCompleted, LoadStarted, Navigated, and NavigationStopped.
- NavigationProgressEventArgs: Contains the arguments for the NavigationApplication.NavigationProcess and NavigationWindow.NavigationProcess events.
- NavigationService: Contains the delegates used by navigation events, and a dynamic property that contains an INavigator interface.
- NavigationWindow: Represents a navigation window.
- ObjectPageFunction A typed page function that returns an Object value to the previous page.
- ObjectReturnEventArgs PageFunction: This class is not directly supported. Instead use one of the typed classes: BoolWrapperPageFunction, IntWrapperPageFunction, ObjectPageFunction, or StringPageFunction.
- ReturnArgs: The event argument object for the Return event. This class is not directly supported. Instead use the return arguments for the appropriate typed class: BoolWrapperReturnEventArgs, IntWrapperReturnEventArgs, ObjectReturnEventArgs, or StringReturnEventArgs.
- StringPageFunction: A typed page function that returns a String value to the previous page.
- StringReturnEventArgs WindowNavigationContainer: Represents a navigable region within a navigation window.

### Interfaces

- IJournalData: IJournalData interface - Should to be implemented by Controls that need to persist state in the journal, and restore it when the page is revisited
- ILoader: Interface used to resolve Uri's to streams. It can be used to load content from file, http, container and managed and unmanaged resources
- INavigator: Implemented by navigation containers to provide access to the properties, methods, and events that support navigation.
- INavigatorService: INavigatorService interface. This interface will be available on the NavigationWindow enabling any implementor of INavigator to register themselves to participate in Hyperlink targetting.

### Enumerations

- NavigationMode: Used to specify the navigation mode.

### Delegates

BoolWrapperReturnEventHandler
IntWrapperReturnEventHandler
- LoadCompletedEventHandler: Represents the method that handles the NavigationApplication.LoadCompleted and NavigationWindow.LoadCompleted events.
- LoadStartedEventHandler: Represents the method that handles the LoadStarted event.
- NavigatedEventHandler: Represents the method that handles the NavigationApplication.Navigated and NavigationWindow.Navigated events.
- NavigateEventHandler: Obsolete.
- NavigatingCancelEventHandler: Represents the method that handles the NavigationApplication.Navigating and NavigationWindow.Navigating events.
- NavigatingNewWindowCancelEventHandler: Represents the method that handles the NavigatingNewWindow event.
- NavigationErrorCancelEventHandler: This delegate is used with the NavigationApplication.NavigationError and NavigationWindow.NavigationError and NavigationWindow.NavigationError events.
- NavigationProgressEventHandler: This delegate is used with the NavigationWindow.NavigationProgress and NavigationApplication.NavigationProgress events.
- NavigationStoppedEventHandler: Represents the method that handles the NavigationApplication.NavigationStopped and NavigationWindow.NavigationStopped events.
- ObjectReturnEventHandler ReturnEventHandler: Represents the method that handles the Return event.This class is not directly supported. Instead use the return event handler for the appropriate typed class: BoolWrapperReturnEventHandler, IntWrapperReturnEventHandler, ObjectReturnEventHandler, or StringReturnEventHandler.
StringReturnEventHandler

### Automation Namespace

An automation namespace 326 contains members used to support accessibility and user interface automation. The accessibility system includes a client side and a provider side. A system of tools includes client side automation tools including a client automation class for seeking user interface information. The client automation class includes event registration tools and logical element discovery tools. The set of tools further includes provider side automation tools for providing the client with user interface information. The provider side automation tools include an automation provider class having tools for providing the client with event information.

A client automation class provides UI automation methods for one or more clients. The client automation class contains methods that are not specific to any UI element. The client automation class may provide a method for obtaining a logical or raw element from a point, a window handle, or the desktop root element. The client automation class additionally may provide methods for finding a logical element based input criteria. The client automation class preferably also includes a method for registering and un-registering for event notifications. The automation class preferably also provides helper functions for loading proxy DLLs, retrieving the localized names of properties and control patterns and performing element comparisons. The client automation class also includes methods for clients to listen for events. The following tables list example members exposed by the System.Windows.Automation namespace.

### Classes

- ApplicationWindowPattern: Exposes the behavior and information typically associated with a top-level application window. Clients can use this class to tile or cascade the application's multiple document interface (MDI) children, find its button on the taskbar, and locate well-known sections of its user interface such as toolbars and menus.
- AssociatedInformationPattern: Exposes semantic and metadata for UI elements that represent other objects.
- Automation: Contains User Interface (UI) Automation methods for clients (assistive technology or automated test script). These methods are not specific to a particular element.
- AutomationEvent: Do not use. This class will be removed in future versions.
- AutomationEventArgs: Pattern or custom event args class
- AutomationFocusChangedEventArgs: Focus event args class
- AutorriationIdentifier: Base class for object identity-based identifiers. This class is effectively abstract; only derived classes are instantiated.
- AutomationIdentifierProxy: Internal class used to deserialize AutomationIdentifiers. Should not be used directly.
- AutomationPattern: Do not use. This class will be removed in future versions.
- AutomationPermission: Provides a set of permissions for accessing UI elements. This class cannot be inherited.
- AutomationPermissionAttribute: Provides methods and properties for AutomationPermissionAttribute. This class cannot be inherited.
- AutomationProperty: Do not use. This class will be removed in future versions.
- AutomationPropertyChangedEventArgs: PropertyChanged event args class
- AutomationTextAttribute: Identifier for Automation Text Attributes
- AutomationTextPointer: Represents the position of a character within text.
AutomationTextPointer provides methods and properties for accessing text and text navigation.
- AutomationTextRange: Used to get, set, add and remove selection.
- AutomationTextSelection: Purpose: The AutomationTextSelection object handles all text selection management. The selection that the insertion pointer is on is the active selection. Example usages: It is used when clients want to add, remove, modify or set selection. Clients can also find out what is currently selected through AutomationTextSelection.
- AutomationTextUnit: Identifier for Automation Text Units
- BasePattern: Internal class
- DockPattern: Expose an element's ability to change its dock state at run time.
- ElementNotEnabledException: This exception is thrown when client code attemps to manipulate an element or control that is currently not enabled.
- ElementPath: ElementPath provides criteria necessary to subsequently return to the logical element previously recorded, modified, or wholly created by the application provider.
- ExpandCollapsePattern: Exposes a control's ability to expand to display more content or to collapse to hide content. Examples include menu buttons, Start button, tree-view item in Windows Explorer, and combo boxes.
- GridItemPattern: Exposes the elements of a grid. Allows clients to quickly determine the coordinates of a grid item.
- GridPattern: Exposes basic grid functionality, size, and navigation to specified cells.
- HierarchyItemPattern: Exposes the hierarchical relationship between a control's user interface elements independent of their relationship in the logical tree.
- Input: Provides methods for sending mouse and keyboard input
- InvokePattern: Implemented by objects (controls) that perform a single, unambiguous action. Most of these controls do not maintain state; invoking them initiates an action in the application. Examples of controls that implement this interface include push buttons, toolbar buttons, menu items, hyperlinks, check boxes, radio buttons, the plus symbol in the tree-view control, and list-view items in Windows Explorer.
- LogicalElement: Represents a UI element in the logical tree regardless of implementation ("Avalon", Microsoft@ Win32®).
- LogicalStructureChangedEventArgs: Logical structure changed event args class.
- MultipleViewPattern: Exposes an elements's ability to switch between multiple representations of the same set of information, data, or children. Examples include ListView (Thumbnails, Tiles, Icons, List, Details) Excel charts (Pie, Line, Bar, Cell Value with a formula), and Outlook Calendar (Year, Month, Week, Day).
- NoClickablePointException: The exception that is thrown when the value of an argument is outside of the allowable range of values, as defined by GetClickablePoint. For example, when the bounding rectangle is empty, has no width or heigth or the LogicalElement at that point is not the same one that was called.
- ProxyAssemblyNotLoadedException: This exception is thrown when there is a problem laoading a proxy assembly. This can happen In reponse to Automation.RegisterProxyAssembly or when loading the default proxies when the first hwnd base LogicalElement is encountered.
- RangeValuePattern: Exposes a control's ability to manage a value within a finite range. It conveys a control's valid minimum and maximum values and current value.
- RawElement: Represents an element in the raw element tree.
- ScrollPattern: Represents UI elements that are expressing a value
- SelectionItemPattern: Represents individual items in containers that manage selection. UI Automation clients use this class to get information about, or to manipulate, UI elements that support the SelectionItemPattern control pattern. Examples include any items that can be selected in a control that supports the SelectionPattern control pattern, such as an item in a list box or tree view.
- SelectionPattern: Represents containers that manage selection. Used by UI Automation clients to get information about, or to manipulate, user interface elements that support the SelectionPattern control pattern.
- SortPattern: Exposes a container's current sort order and allows clients to programmatically re-sort elements.
- SplitPattern: Represents windows that can clone themselves by creating an adjacent window.
- TableItemPattern: Represents grid items with header information.
- TablePattern: Represents a grid that has header information.
- TextPattern: Represents text, such as an edit control.
- TopLevelWindowEventArgs: TopLevelWindowEventArgs event args class
- TreeLoadEventArgs: TreeLoadEventArgs event args class
- ValuePattern: Exposes values for controls that do not span a range such as radio buttons, toggle buttons, check boxes, edit boxes, RGB color values, and checkable menu items.
- VisualInformationPattern: Exposes information about an image or an animation that conveys information to the user such as Internet Explorer's waving flag or spinning globe that indicates a document in downloading or Windows Explorer's flying papers that indicate copying is in progress.
- WindowPattern: Exposes an element's ability to change its on-screen position or size. Examples include top-level application windows (Word or Windows Explorer), Outlook's main window panes (folders, e-mail messages, tasks), and MDI child windows.
- ZoomPattern: Exposes the current zoom level in a control and allows clients to change it programmatically.

### Enumerations

- AutomationPermissionFlag: Contains the access flags for an AutomationPermission object.
- ChildArrangement: Different ways children may be arranged
- DockPosition: The edge of the container that the dockable window will cling to.
- ExpandCollapseState: Used by ExpandCollapse pattern to indicate expanded/collapsed state
- GetDataOptions: Options for GetData
- HierarchyItemState: Enumeration that indicates the state of a hierarchy item: collapsed, expanded, or partially expanded
- ItemCheckState: Enumeration that indicates state of checkbox, radio buttons, and similar controls
- LoadState: Tree state flags.
- LogicalMapping: Values that indicate whether a node in the raw tree will be displayed in the logical tree
- ProxyFlags: Enum used to indicate results of requesting a property
- RowOrColumnMajor: Is the data data in this table best present by row or column
- ScopeFlags: Flags used to define scope when listening to events
- ScrollAmount: Used by ScrollPattern to indicate direction (forward or backward) and amount (page or line) by which to scroll
- SendMouseInputFlags: Flags for SendMouseInput. These flags indicate whether movementnt took place,or whether buttons were pressed or released.
- SplitStyles: Flag for the directions into which a window may split
- StructureChangeType: Flags that indicate changes in the structure of the logical tree.
- TextPointerGravity: Gravity determines the placement of a AutomationTextPointer when text is inserted at the AutomationTextPointer. Gravity is always from the text pointers point of view, i.e. I am before my character or I am after my character. When the user inserts a character at your text pointer location, Before means that your pointer will be placed before the new character; After means that the pointer will be placed After the new character.
- WindowChangeType: Flags that indicate changes in top-level windows.
- WindowlnteractionState: The current state of the window for user interaction
- WindowVisualState: States used to describe the visual state of the window. WindowVisualState follows the Office and HTML definition of Window State.

### Structures

- MatchCondition: Specifies criteria for finding elements using FindLogicalElement or FindRawElement.
- NameAndData: Contains name, data as an object, and data as a string
- ProxyDescription: Structure containing information about a proxy
- SortInformation: Information used to sort

### Delegates

- AutomationEventHandler: Delegate to handle AutomationEvents
- AutomationFocusChangedEventHandler: Delegate to handle focus change events
- AutomationPropertyChangedEventHandler: Delegate to handle Automation Property change events
- LogicalStructureChangedEventHandler: Delegate to handle logical structure change events
- ProxyFactoryCallback: Implemented by HWND handlers; called by UI Automation framework to request a proxy for specified window. Should return a proxy if supported, or null if not supported.
- TopLevelWindowEventHandler: Delegate to handle top level window events

The following tables list example members exposed by the System.Windows.Automation.InteropProvider namespace.

### Classes

- AutomationInteropProvider: Contains methods used by Win32 applications or controls that implement User Interface (UI) Automation. This class cannot be inherited.
- TextPointerPair: Represent a contiguous block of characters

### Interfaces

- IApplicationWindowInteropProvider: Exposes the behavior and information typically associated with a top-level application window.
- IAssociatedInformationInteropProvider: Exposes semantic and metadata for UI elements that represent other objects.
- IDockInteropProvider: Expose an element's ability to change its dock state at run time.
- IExpandCollapseInteropProvider: Exposes a control's ability to expand to display more content or collapse to hide content. Supported in conjunction with the HierarchyItem pattern on TreeView items to provide tree-like behavior, but is also relevant for individual controls that open and close. Examples of UI that implements this includes: - TreeView items - Office's smart menus that have been collapsed - Chevrons on toolbars - Combo box - Menus - "Expandos" in the task pane of Windows Explorer (left-hand side where folder view is often displayed).
- IGridInteropProvider: Exposes basic grid functionality: size and moving to specified cells.
- IGridItemInteropProvider: Represents an item that is within a grid. Has no methods, only properties.
- IHierarchyItemInteropProvider: Expose and allow clients to traverse the hierarchical relationship between UI elements independent from their relationship in teh logical tree. Hierarchy relationships are by definition noncircular. Examples of UI that implements this includes: - TreeView items - Visio Org Chart - Menus - Listview controls when "Show in groups" mode is active
Implemented by objects (controls) that perform a single, unambiguous action. Most of these controls do not maintain state; invoking them initiates an action in the application.
- IInvokeInteropProvider: Examples of user interface elements that implement this interface include push buttons, toolbar buttons, menu items, hyperlinks, check boxes, radio buttons, the plus symbol in the tree-view control, and list-view items in Windows Explorer.
- IMultipleViewInteropProvider: Exposes an element's ability to switch between multiple representations of the same set of information, data, or children This pattern should be implemented on the container which controls the current view of content.
- IRangeValueInteropProvider: Exposes a related set of properties that reflect a controls ability to manage a value within a finite range. It conveys a controls valid minimum and maximum values and its current value. Examples: Numeric Spinners Progress Bar, IP Control (on the individual octets) some Color Pickers ScrollBars some Sliders public interface that represents UI elements that are expressing a current value and a value range. public interface has same definition as IValueProvider. The two patterns' difference is that RangeValue has additional properties, and properties generally do not appear in the pattern public interfaces.
- IRawElementProviderFragment: Implemented by providers to expose elements that are part of a structure more than one level deep. For simple one-level structures which have no children, IRawElementProviderSimple can be used instead. The root node of the fragment should support the IRawElementProviderFragmentRoot interface, which is derived from this, and has some additional methods.
- IRawElementProviderFragmentRoot: The root element in a fragment of UI should support this interface. Other elements in the same fragment need to support the IRawElementProviderFragment interface.
- IRawElementProviderFragmentRootAdviseEvents: Implemented on the root element of a UI fragment to allow it to be notified of when it is required to raise automation events.
- IRawElementProviderHwndOverride: Implemented by providers which want to provide information about or want to reposition contained HWND-based elements.
- IRawElementProviderOverrideType: Implemented by providers which want to provide information about or want to reposition contained HWND-based elements.
- IRawElementProviderSimple: UIAutomation provider interface, implemented by providers that want to expose properties for a single element. To expose properties and structure for more than a single element, see the derived IRawElementProviderFragment interface
- IScrollInteropProvider: The Scroll pattern exposes a control's ability to change the portion of its visible region that is visible to the user by scrolling its content. Examples: Listboxes TreeViews other containers that maintain a content area larger than the control's visible region Note that scrollbars themselves should not support the Scrollable pattern; they support the Range Value pattern. Servers should normalize scrolling (0 to 100). This public interface represents UI elements that scroll their content.
- ISelectionInteropProvider: Provides access to the properties implemented by non-"Longhorn" providers on containers that manage selection.
- ISelectionItemInteropProvider: Provides access to methods and properties that define and manipulate selected items in a container. Is only supported on logical elements that are children of elements that supports ISelectionInteropProvider and is itself selectable.
- ISortInteropProvider: Expose a container's current sort order and allow clients to programmatically re-sort its elements. Some containers maintain the sort order when inserting new items, or move their contents based on updated content (example: sorted Win32 listboxes). Other containers are only capable of performing a one-time sort that becomes out-of-date when new items are inserted (example: Excel).
- ISplitInteropProvider: Exposes the ability to split an elements content area into multiple panes or interactive areas.
- ITablelnteropProvider: Identifies a grid that has header information.
- ITableItemInteropProvider: Used to expose grid items with header information.
- ITextInteropProvider: The Text pattern exposes a control's ability to manipulate text. Examples: TextBox RichEdit controls other containers that contain text and text related properties This interface represents UI elements that maintain text.
- ITextPointerInteropProvider: The Text pattern exposes a control's ability to manipulate text. Examples: TextBox RichEdit controls other containers that contain text and text related properties This interface represents UI elements that maintain text.
- IValueInteropProvider: public interface that represents UI elements that are expressing a value
- IVisualInformationInteropProvider: Used to express information about an image or an animation that is conveying information to the user.
- IWindowInteropProvider: Expose an element's ability to change its on-screen position or size, as well as change the visual state and close it.
- IZoomInteropProvider: Exposes the current zoom level in a control and allows clients to programmatically change it.

### Enumerations

- NavigateDirection: Directions for navigation the UIAutomation tree
- RawElementProviderOverrideType: Indicates whether this provider is acting as an override or as a non-client-area provider.

### Serialization Namespace

A serialization namespace 328 provides a parser that can load or save a hierarchy of objects (e.g., elements) from or to an XML file or a file with a binary representation. This process also sets properties associated with the objects and associates event handlers. Further, serialization namespace 328 provides functionality for serializing and de-serializing objects. Serialization is a process of taking a live, in-memory representation of objects, and producing a stream of data suitable for saving to a storage device (such as a disk) or sending across a network. Deserialization is the reverse process; i.e., taking a data stream and producing objects from the data stream. Deserialization is also referred to as "parsing", and the code that implements parsing is known as the parser.

Both serialization and deserialization support multiple streaming formats, such as an XML format referred to as XAML or a binary format referred to as BAML. When the parser is used with a markup compiler, if can generate "CAML", where the output is code to generate the serialized objects.

Serialization and deserialization support the full range of XAML features, including: standard syntax, compound properties, compact compound syntax, implicit child syntax, explicit children syntax, collection syntax with explicit collection tag, and collection syntax with implicit collection tag. Both serialization and deserialization are fully extensible. Classes can define how they wish to be serialized and deserialized through several mechanisms, such as:
- By default, class names are treated as markup tag names, and properties and events are treated as markup attributes of the same name.
- Classes define type converters (auxiliary objects driving from System.ComponentModel.TypeConverter) to serialize and deserialize markup attribute values.
- Classes can support implicit children by implementing the IAddChild interface (parsing) and using CLR attributes to describe how to serialize implicit children.
- Classes can control whether a property can be serialized/deserialized by using the DesignerSerializationVisibility, and control whether it is necessary to serialize a property on a particular object by using the DefaultValueAttribute and ShouldPersist methods.
- Or, a component can serialize/deserialize itself using literal content, in which case the component's serialized form does not have to conform to the rules of XAML (the component needs to be well-formed XML). Although the above examples use the word "markup", the same concepts apply to the binary format (BAML).

A second extensibility mechanism is "designer hooks", which allows another piece of code to plug into the serializer and deserializer, and insert and intercept attributes during parsing and serialization. This mechanism allows new markup features to be created, and allows custom processing of existing syntax. The markup compiler uses designer hooks to generate CAML.

Serialization and deserialization support a variety of objects (e.g., any class driving from System.Object). Classes driving from System.Windows.DependencyObject can define dependency properties, which get two extra features:
- Serialization can automatically tell whether a property needs to be serialized (no need for DefaultValueAttribute/ShouldPersist)
- The parser can perform certain optimizations to load faster
Serialization and deserialization support XML namespaces and definition files that map XML namespaces to CLR namespaces. The Mapper class allows the definition of arbitrary mappings from XML namespaces and tag names into CLR classes.

The following tables list example members exposed by the System.Windows.Serialization namespace.

### Classes

- CustomXamlDeserializer: The base class for the deserialization helper. This should be subclassed if design or edit time deserialization direction of the parser is required.
- CustomXamlSerializer: The base class for the serialization helper. This should be subclassed if design or edit time serialization direction of the serializer is required.
- DependencyPropertyContext: Context information about the current property being serialized. The XamlSerializer is responsible for putting an instance of this class on the context stack before serializing any property on an object.
- DPSerializationVisibilityAttribute: Specifies the visibility of this property or method as seen by the designer serializer.
- EntityContext: Abstract base class for ObjectContext and PropertyContext.
- LayoutAttribute: Attribute for specifying the LayoutType for a tag.
- Mapper: Handles mapping between Extensible Markup Language (XML) namepace Uniform Resource Identifier (URI) and Microsoft® .NET namespace types.
- NamespaceMap: Contains information the Mapper uses for Mapping between an xml NamespaceUri and what Assembly, urtNamespace to look in.
- ObjectContext: Context information about the current object being serialized. The XamlSerializer is responsible for putting an instance of this class on the context stack in SerializeObject.
- Parser: "Avalon" Element Parsing class used to Create an "Avalon" Tree.
- ParserContext: Provides all the context information required by Parser
- PropertyContext: Context information about the current property being serialized. The XamlSerializer is responsible for putting an instance of this class on the context stack before serializing any property on an object.
- TextContext: Context information about the current object being serialized. The XamlSerializer is responsible for putting an instance of this class on the context stack in SerializeObject.
- XamlAttributeNode: XamlAttributeNode
- XamlClrArrayPropertyNode: XamlClrArrayPropertyNode
- XamlClrComplexPropertyNode: XamlClrComplexPropertyNode, which is an object specified as the child of a clr object
- XamlClrEventNode: XamlClrEventNode, which is a clr event on any object. Note that this may be on a DependencyObject, or any other object type.
- XamlClrObjectNode: XamlClrObjectNode, which is anything other than a DependencyObject
- XamlClrPropertyNode: XamlClrPropertyNode, which is a clr property on any object. Note that this may be on a DependencyObject, or any other object type.
- XamlClrPropertyParseException: Exception class for parser property parsing specific exceptions
- XamlComplexDependencyPropertyNode: XamlComplexDependencyPropertyNo de, which is a DependencyProperty specified as the xml child of a DependencyObject
- XamlComplexPropertySerializer: XamlComplexPropertySerializer is used to serialize properties that can not be serialized as XML attributes. ComplexProperties are instead serialized as markup within the element.
- XamlDefAttributeNode: XamlDefAttributeNode
- XamlDefTagNode: XamlDefTagNode
- XamlDependencyObjectSerializer: Extends XamlSerializer to include animations (specific to Elements)
- XamlDependencyPropertyNode: XamlDependencyPropertyNode, which is a normal, simple DependencyProperty on a DependencyObject
- XamlDependencyPropertyParse Exception: Exception class for parser dynamic property parsing specific exceptions
- XamlDesignerSerializerAttribute: Specifies the type name of serializer for the given class.
- XamlDocumentNode: XamlDocument Node
- XamlElementNode: XamlElementNode, which represents a DependencyObject. These are different from CLR objects because they can have Dependency Properties associated with them.
- XamlEndAttributesNode: XamlEndAttributesNode
- XamlEndClrArrayPropertyNode: XamlEndClrArrayPropertyNode
- XamlEndClrComplexPropertyNode: XamlEndClrComplexPropertyNode
- XamlEndClrObjectNode: XamlEndClrObjectNode
- XamlEndComplexDependencyPropertyNode: XamlEndComplexDependencyProperty Node
- XamlEndDocumentNode: XamlEndDocumentNode
- XamlEndElementNode: XamlEndElementNode
- XamlEndIDictionaryPropertyNode: XamlEndIDictionaryPropertyNode
- XamlEndIListPropertyNode: XamlEndIListPropertyNode
- XamlEndResourceNode: XamlEndResourceNode
- XamlEndStartElementNode: XamlEndStartElementNode
- XamlIDictionaryPropertyNode: XamlIDictionaryPropertyNode
- XamlIEnumeratorSerializer: Serializes the node collection pointed to by the property.
- XamlIListPropertyNode: XamlIListPropertyNode
- XamlIListSerializer: Serializes the IList pointed to by the property.
- XamlIncludeTagNode: XamlIncludeTagNode
- XamlLanguageNode: XamlLanguageNode
- XamlLiteralContentNode: XamlLiteralContentNode
- XamlNode: Base Node in which all others derive
- XamlParseException: Exception class for parser specific exceptions
- XamlPIMappingNode: XamlPIMappingNode which maps an xml namespace to a clr namespace and assembly
- XamlResourceNode: XamlResourceNode
- XamlRootSerializer: XamlSerializer is used to persist logical tree.
- XamlRoutedEventNode: XamlRoutedEventNode
- XamlSerializationCallbackException: Exception class for serialization callback specific exceptions
- XamlSerializer: XamlSerializer is used to persist the logical tree.
- XamlSerializerBase: Base class for XamlSerializer providing common helper functions.
- XamlTextNode: XamlTextNode
- XamlTextNodeSerializer: Overrides XamlSerializer to special case TextNodes.
- XamlXmlnsPropertyNode: XamlXmlnsPropertyNode
- XmlAttributes: A class to encapsulate XML-specific attributes of a DependencyObject
- XmlnsDictionary: A dictionary to control XML namespace mappings
- XmlParserDefaults: Public class used by Avalon.

### Interfaces

- IAddChild: The IAddChild interface is used for parsing objects that allow objects or text underneath their tags in markup that do not map directly to a property.
- IBamlSerialize: Serialization interface for Dynamic Properties written to BAML files
- ILoaded: This interface provides a read-only boolean property called IsLoaded, a clr event handler called Loaded, and DeferLoad and EndDeferLoad methods
- IPageConnector: Provides methods used internally by the BamlReader on compiled content.
- IParseLiteralContent: For Literal Content - content which has its own parser and saver.
- IUriContext: The IUriContext interface allows elements (like Frame, PageViewer) and type converters (like ImageData TypeConverters) a way to ensure that base uri is set on them by the parser, codegen for xaml, baml and caml cases. The elements can then use this base uri to navigate.

### Enumerations

- LayoutType: Layout Types that can be associated with an Object.
- SerializationAction: Describes the action the serializer or deserializer is to take after it has called back to the CustomXamlSerializer or CustomXamlDeserializer helpers
- SerializationErrorAction: Describes the action the serializer or deserializer is to take when an error has been reported
- XamlNodeType: Identifier for XamlNodes

### Interop Namespace

An interop namespace 330 provides a set of classes that enable interoperability with other operating systems or computing platforms. The following tables list example members exposed by the System.Windows.Interop namespace.

### Classes

- ApplicationProxy: MarshalByRefObject wrapper over Application class to allow interaction with Application object across AppDomains and to allow Application creation on a different thread.
- DocobjHost: Interop class used for implementing the managed part of a Docobj Server for browser hosting
- PresentationInteropHelper: VisualInteropHelper
- WindowInteropHelper: Implements Avalon WindowInteropHelper classes, which helps interop b/w legacy and Avalon Window.

### Delegates

- AppEntryPoint: Delegate for the Application code's entry point method.

### Forms.Interop Namespace

A forms.interop namespace 332 provides an element that allows an application to host a form control operation.

### System.IO.CompoundFile Namespace

Another namespace, System.IO.CompoundFile (not shown in Fig. 3) provides services to utilize a compound file in which various document distributable files are stored. These services allow for the encryption and compression of content. The services also support the storage of multiple renditions of the same content, such as a re-flowable document and a fixed-format document. The following tables list example members exposed by the System.IO.CompoundFile namespace.

### Classes

- CertificateHelper: Helper to get a digital certificate for signing
- CompoundFileByteRangeReference: Substream reference component that refers to a range of bytes within a compound file stream.
- CompoundFileIndexReference: Substream reference component that refers to a logical entry within a compound file stream.
- CompoundFileReference: A reference to a portion of a compound file.
- CompoundFileReferenceCollection: A read-only collection of compound file references.
- CompoundFileStorageReference: Logical reference to a container storage
- CompoundFileStreamReference: Logical reference to a container stream
- CompressionTransform: CompressionTransform for use in Compound File DataSpaces
- ContainerHelper: This class enables users to get access to the StorageRoot of the current container based on the loaded Application instance
- DataSpaceManager: Used to manipulate the data spaces within a specific instance of the "Avalon" container. This is how data transform modules are plugged into the container to enable features like data compression and data encryption.
- DigitalSignature: Read-only class that enables clients to inspect and validate existing digital signatures.
- DigitalSignatureCollection: A read-only collection of digital signatures.
- DigitalSignatureManager: This class is used to create, persist, and manipulate digital signatures in a compound file.
- DocumentSummaryInfo: Contains property elements corresponding to the properties in the standard OLE document summary information property set.
- FormatVersion: Class for manipulating version object
- InstanceDataFormatException: The exception that is thrown when the format of the DrmTransformInstanceData on disk is invalid.
- OleProperty PropSet RenditionInfo: Class for manipulating information of a rendition. This class also provides APIs for adding and removing storages and streams to and from the rendition.
- RenditionInfoCollection: A strongly typed collection of RenditionInfo objects
- RenditionManager: Class for manipulating renditions in a container
- RightsManagementEncryptionTransform: Class implements IDataTRansform interface. so it can be used as a Container data transform that implements RM encryption and decryption of the content
- StorageInfo: Class for manipulating storages in the container file
- StorageRoot: Represents the main container class. There is one instance of the StorageRoot per compound file.
- StreamInfo: Provides access for manipulating streams in the container file.

### SummaryInfo

- TransformEnvironment: An instance of this class is given to each transform object as a means for the transform object to interact with the environment provided by the data space manager. It is not mandatory for a transform object to keep a reference on the given TransformEnvironment object as it might choose to discard it if there is no need to interact with the transform environment.
- TransformInitializationEventArgs: Public class for passing arguments into event handlers
- UseLicenseInfo: Contains information describing a use license returned from the Tungsten server.
- UseLicenseInfoEnumerator: Represents an enumerator over the use licenses stored in the DRM Transform's instance data.
- VersionTuple: Class for a version tuple which consists of major and minor numbers
- XmlDigitalSignatureProcessor: Signature processor used by the digital signature manager to sign and validate data according to the W3C reccomendation.

### Interfaces

- IDataTransform: Interface to be implemented by all data transform objects
- ILicenseStorage: This interface is used to decouple RMTransform and RMWizard by building custom implementation of this insterface we enable 3rd parties to take advantage of the RMWizard without forcing them to use RMTransform
- ISignatureProcessor: Signature processor interface
- IUnknownRCW: This interface is used to opaquely handle any COM interface (wrapped in the Runtime COM Wrapper) as an IUnknown.

### Enumerations

- DigitalSignatureProcessor: Predefined Digital Signature Processors
- SignatureProcessorNameType: Type of signature Processor
- TransformIdentifierTypes: When naming a transform object, the string being passed in can be interpreted in one of several ways. This enumerated type is used to specify the semantics of the identification string.

### Delegates

- InvalidSignatureHandler: Called with signatures that failed hash verification
- TransformInitializeEventHandler: Delegate method for initializing transforms

### System.Windows.Automation Namespace

A System.Windows.Automation namespace contains members used to support accessibility and user interface automation. The accessibility system includes a client side and a provider side. A system of tools includes client side automation tools including a client automation class for seeking user interface information. The client automation class includes event registration tools and logical element discovery tools. The set of tools further includes provider side automation tools for providing the client with user interface information. The provider side automation tools include an automation provider class having tools for providing the client with event information.

A client automation class provides UI automation methods for one or more clients. The client automation class contains methods that are not specific to any UI element. The client automation class may provide a method for obtaining a logical or raw element from a point, a window handle, or the desktop root element. The client automation class additionally may provide methods for finding a logical element based input criteria. The client automation class preferably also includes a method for registering and un-registering for event notifications. The automation class preferably also provides helper functions for loading proxy DLLs, retrieving the localized names of properties and control patterns and performing element comparisons. The client automation class also includes methods for clients to listen for events. The following tables list example members exposed by the System.Windows.Automation namespace.

### Classes

- ApplicationWindowPattern: Exposes the behavior and information typically associated with a top-level application window. Clients can use this class to tile or cascade the application's multiple document interface (MDI) children, find its button on the taskbar, and locate well-known sections of its user interface such as toolbars and menus.
- AssociatedInformationPattern: Exposes semantic and metadata for UI elements that represent other objects.
- Automation: Contains User Interface (UI) Automation methods for clients (assistive technology or automated test script). These methods are not specific to a particular element.
- AutomationEvent: Do not use. This class will be removed in future versions.
- AutomationEventArgs: Pattern or custom event args class
- AutomationFocusChangedEventArgs: Focus event args class
- AutomationIdentifier: Base class for object identity-based identifiers. This class is effectively abstract; only derived classes are instantiated.
- AutomationIdentifierProxy: Internal class used to deserialize AutomationIdentifiers. Should not be used directly.
- AutomationPattern: Do not use. This class will be removed in future versions.
- AutomationPermission: Provides a set of permissions for accessing UI elements. This class cannot be inherited.
- AutomationPermissionAttribute: Provides methods and properties for AutomationPermissionAttribute. This class cannot be inherited.
- AutomationProperty: Do not use. This class will be removed in future versions.
- AutomationPropertyChangedEventArgs: PropertyChanged event args class
- AutomationTextAttribute: Identifier for Automation Text Attributes
- AutomationTextPointer: Represents the position of a character within text. AutomationTextPointer provides methods and properties for accessing text and text navigation.
- AutomationTextRange: Used to get, set, add and remove selection.
- AutomationTextSelection: Purpose: The AutomationTextSelection object handles all text selection management. The selection that the insertion pointer is on is the active selection. Example usages: It is used when clients want to add, remove, modify or set selection. Clients can also find out what is currently selected through AutomationTextSelection.
- AutomationTextUnit: Identifier for Automation Text Units
- BasePattem: Internal class
- DockPattern: Expose an element's ability to change its dock state at run time.
- ElementNotEnabledException: This exception is thrown when client code attemps to manipulate an element or control that is currently not enabled.
- ElementPath: ElementPath provides criteria necessary to subsequently return to the logical element previously recorded, modified, or wholly created by the application provider.
- ExpandCollapsePattern: Exposes a control's ability to expand to display more content or to collapse to hide content. Examples include menu buttons, Start button, tree-view item in Windows Explorer, and combo boxes.
- GridItemPattern: Exposes the elements of a grid. Allows clients to quickly determine the coordinates of a grid item.
- GridPattern: Exposes basic grid functionality, size, and navigation to specified cells.
- HierarchyItemPattern: Exposes the hierarchical relationship between a control's user interface elements independent of their relationship in the logical tree.
- Input: Provides methods for sending mouse and keyboard input
- InvokePattern: Implemented by objects (controls) that perform a single, unambiguous action. Most of these controls do not maintain state; invoking them initiates an action in the application. Examples of controls that implement this interface include push buttons, toolbar buttons, menu items, hyperlinks, check boxes, radio buttons, the plus symbol in the tree-view control, and list-view items in Windows Explorer.
- LogicalElement: Represents a UI element in the logical tree regardless of implementation ("Avalon", Microsoft@ Win32®).
- LogicalStructureChangedEventArgs: Logical structure changed event args class.
- MultipleViewPattern: Exposes an elements's ability to switch between multiple representations of the same set of information. data. or children. Examples include ListView (Thumbnails, Tiles, Icons, List, Details) Excel charts (Pie, Line, Bar, Cell Value with a formula), and Outlook Calendar (Year, Month, Week, Day).
- NoClickablePointException: The exception that is thrown when the value of an argument is outside of the allowable range of values, as defined by GetClickablePoint. For example, when the bounding rectangle is empty, has no width or heigth or the LogicalElement at that point is not the same one that was called.
- ProxyAssemblyNotLoadedException: This exception is thrown when there is a problem laoading a proxy assembly. This can happen In reponse to Automation.RegisterProxyAssembly or when loading the default proxies when the first hwnd base LogicalElement is encountered.
- RangeValuePattern: Exposes a control's ability to manage a value within a finite range. It conveys a control's valid minimum and maximum values and current value.
- RawElement: Represents an element in the raw element tree.
- ScrollPattern: Represents UI elements that are expressing a value
- SelectionItemPattern: Represents individual items in containers that manage selection. UI Automation clients use this class to get information about, or to manipulate, UI elements that support the SelectionItemPattern control pattern. Examples include any items that can be selected in a control that supports the SelectionPattern control pattern. such as an item in a list box or tree view.
- SelectionPattern: Represents containers that manage selection. Used by UI Automation clients to get information about, or to manipulate, user interface elements that support the SelectionPattern control pattern.
- SortPattem: Exposes a container's current sort order and allows clients to programmatically re-sort elements.
- SplitPattem: Represents windows that can clone themselves by creating an adjacent window.
- TableItemPattern: Represents grid items with header information.
- TablePattern: Represents a grid that has header information.
- TextPattern: Represents text, such as an edit control.
- TopLevelWindowEventArgs: TopLevelWindowEventArgs event args class
- TreeLoadEventArgs: TreeLoadEventArgs event args class
- ValuePattem: Exposes values for controls that do not span a range such as radio buttons, toggle buttons, check boxes, edit boxes, RGB color values, and checkable menu items.
- VisualInformationPattern: Exposes information about an image or an animation that conveys information to the user such as Internet Explorer's waving flag or spinning globe that indicates a document in downloading or Windows Explorer's flying papers that indicate copying is in progress.
- WindowPattern: Exposes an element's ability to change its on-screen position or size. Examples include top-level application windows (Word or Windows Explorer), Outlook's main window panes (folders, e-mail messages, tasks), and MDI child windows.
- ZoomPattern: Exposes the current zoom level in a control and allows clients to change it programmatically.

### Enumerations

- AutomationPermissionFlag: Contains the access flags for an AutomationPermission object.
- ChildArrangement: Different ways children may be arranged
- DockPosition: The edge of the container that the dockable window will cling to.
- ExpandCollapseState: Used by ExpandCollapse pattern to indicate expanded/collapsed state
- GetDataOptions: Options for GetData
- HierarchyItemState: Enumeration that indicates the state of a hierarchy item: collapsed, expanded, or partially expanded
- ItemCheckState: Enumeration that indicates state of checkbox, radio buttons, and similar controls
- LoadState: Tree state flags.
- LogicalMapping: Values that indicate whether a node in the raw tree will be displayed in the logical tree
- ProxyFlags: Enum used to indicate results of requesting a property
- RowOrColumnMajor: Is the data data in this table best present by row or column
- ScopeFlags: Flags used to define scope when listening to events
- ScrollAmount: Used by ScrollPattem to indicate direction (forward or backward) and amount (page or line) by which to scroll
- SendMouseInputFlags: Flags for SendMouseInput. These flags indicate whether movementnt took place,or whether buttons were pressed or released.
- SplitStyles: Flag for the directions into which a window may split
- StructureChangeType: Flags that indicate changes in the structure of the logical tree.
- TextPointerGravity: Gravity determines the placement of a AutomationTextPointer when text is inserted at the AutomationTextPointer. Gravity is always from the text pointers point of view, i.e. I am before my character or I am after my character. When the user inserts a character at your text pointer location, Before means that your pointer will be placed before the new character; After means that the pointer will be placed After the new character.
- WindowChangeType: Flags that indicate changes in top-level windows.
- WindowInteractionState: The current state of the window for user interaction
- WindowVisualState: States used to describe the visual state of the window. WindowVisualState follows the Office and HTML definition of WindowState.

### Structures

- MatchCondition: Specifies criteria for finding elements using FindLogicalElement or FindRawElement.
- NameAndData: Contains name, data as an object, and data as a string
- ProxyDescription: Structure containing information about a proxy
- SortInformation: Information used to sort

### Delegates

- AutomationEventHandler: Delegate to handle AutomationEvents
- AutomationFocusChangedEventHandler: Delegate to handle focus change events
- AutomationPropertyChangedEventHandler: Delegate to handle Automation Property change events
- LogicalStructureChangedEventHandler: Delegate to handle logical structure change events
- ProxyFactoryCallback: Implemented by HWND handlers; called by UI Automation framework to request a proxy for specified window. Should return a proxy if supported, or null if not supported.
- TopLevelWindowEventHandler: Delegate to handle top level window events

### System.Windows.Ink Namespace

A System.Windows.Ink namespace provides classes that support electronic ink processing systems. Electronic ink processing techniques are useful to a variety of software applications. These electronic ink processing techniques are particularly applicable to the analysis of electronic ink, including layout analysis, classification, and recognition of electronic ink. Certain electronic ink processing techniques allow the electronic ink to be processed asynchronously with regard to the operation of the software application implementing the techniques, so that the electronic ink can be processed without stopping or significantly delaying the operation of the software application. The software application can even continue to accept new electronic ink input while previous electronic ink input is being processed.

An application programming interface instantiates an ink analyzer object that receives document data for a document containing electronic ink content from a software application hosting the document and running on a first processing thread. The ink analyzer object then employs the first thread to make a copy of the document data, provides the copy of the document data to an electronic ink analysis process, and returns control of the first processing thread to the analysis process. After the analysis process has analyzed the electronic ink, the ink analyzer object reconciles the results of the analysis process with current document data for the document.

In particular embodiments, elements in a file or document may be described based upon their spatial position relative to each other. For example, both an electronic ink stroke and typewritten text may be described in terms of the same spatial coordinate system. Using spatial information to describe the elements of a document, the software application managing the document can maintain a data structure describing the relationship between its document elements. In particular, the software application can maintain a data structure both describing the class of the various document elements and defining associations between the various document elements. These associations can be defined, for example, as information used to link electronic ink stroke data or collections thereof to other elements in the electronic document (such as words, lines, paragraphs, drawings, table cells, etc.).

By describing document elements in a file or document data structure based upon their spatial position, document elements for a variety of file types can employ common techniques for identifying and manipulating their document elements. More particularly, a variety of software applications can describe document elements within a document based upon their spatial position and employ this spatial position referencing to use common electronic ink analysis methods. Still further, by specifying a particular region of a document for analysis, each software application can limit the analysis process to only desired elements within a document.

To analyze new electronic ink input into a document, the software application managing the document modifies a data structure associated with the document to include the new ink to be analyzed. The software application then provides this data structure (or relevant portions thereof) to an ink analysis tool, which copies some or all of the data structure for analysis (and operates on this copy of the data that is independent of the application program's document data structure). The ink analysis tool passes the copy to an analysis process, such as a parsing process (e.g., a layout analysis process and/or a classification process). The software application may resume its normal operation, including receiving new electronic ink input and/or other data, while the ink analysis process(es) is (are) being performed. In addition to receiving new electronic ink, any "other data" may be received by the application program, for example, data modifying a size, location, or content of existing ink, text, images, graphics, tables, flowcharts, diagrams, and the like; data adding additional text, images, graphics, tables, flowcharts, diagrams, and the like; data deleting existing text, images, graphics, tables, flowcharts, diagrams, and the like. After all desired analysis processes are completed, the analysis results are returned to the ink analysis tool.

An ink analysis tool performs a variety of functions to facilitate the processing of electronic ink. The ink analysis tool can be implemented as a programming interface, such as an API. Further, the ink analysis tool can be implemented as a group of software object routines and related information that can be called by a software application as needed to analyze ink in a document.

In one embodiment, an API embodying an implementation of an ink analysis tool (referred hereafter to as an Ink Analysis API), may contain two core classes. The first class is referred to as the "Analysis Context" class, and the second class is the "Ink Analyzer" class. The components of the "Analysis Context" class are used to create an analysis context object. The components of the "Ink Analyzer" class are then used to create and employ an object that provides a document independent analysis context object to an analysis process, determine when the analysis results have been generated, and reconcile the analysis results with the current state of a document.

The Analysis Context class is implemented by a host application to create an analysis context object, which serves as a proxy view onto the internal document tree of the software application. The analysis context object contains all unanalyzed ink data, and the analysis context object is used to identify which unanalyzed ink data should be analyzed. The analysis context object also contains information about previously analyzed ink. This previously analyzed ink may be used to decide how the currently unanalyzed ink should be analyzed, and itself may be modified in the course of analyzing the unanalyzed ink. Further, the analysis content object contains information about non-ink content of the document, which is used to properly classify ink as annotations to the non-ink content.

The Analysis Context class includes a constructor which, when called by the software application, creates the analysis context object. This class may also include various properties for the analysis context object, including the property entitled "Dirty Region {get;}.". The Dirty Region property defines the portion of the document (and thus the portion of the analysis context object) that contains unanalyzed ink data.

The Analysis Context class may also include a property entitled "Rootnode {get;}," which identifies the topmost or root context node in the analysis context object. This root context node contains, as child context nodes, all other context nodes objects for the given analysis context object. In particular embodiments, the root context node should be of the context node type "Root." In embodiments where the application implements its own analysis context object, the analysis context object may have other context nodes as siblings of the root context node, but components of the Ink Analyzer class may be limited to considering context nodes contained by the root context node.

The Analysis Context class may additionally include the property "Analysis Hints {get;}," which returns an array of analysis hint objects set by the software application. As will be discussed in more detail below, the analysis hint objects may contain any type of information that may assist the analysis process. This information may include, for examples, as factoids, guides, or a word list. It may also include information setting a language to be used for analysis, information designating the unanalyzed ink as handwritten text only or drawing only, or providing any kind of guidance to the parsing process, such as identifying the ink as lists, tables, shapes, flow charts, connectors, containers and the like.

In addition to these properties, the Analysis Context class may also include various methods that may be called by, e.g., the software application to have the analysis context object execute a task. For example, the Analysis Context class may include a method entitled "FindNode (Guid id)." Each node in the analysis context object has a globally unique identifier (or GUID), and this method will locate the node specified in the call anywhere in the analysis context object.

Like the Analysis Context class, the Ink Analyzer class also defines a public constructor that allows the software application to create an instance of the class (i.e., an ink analyzer object), along with various properties. For example, it may contain a property entitled "User Interface Context {get; set;}," which defines the processing thread to which the results of the analysis process are returned. This property allows the results to be synchronized to another object. For example, if this is set to the main form, parser results will be fired on the application main thread. It may also contain the property "AnalysisOptions AnalysisOptions {get; set;}", which specifies various criteria that may be used for the analysis process. These criteria may include, for example, enabling text recognition, enabling the use of tables, enabling the use of lists, enabling the use of annotations, and enabling the use of connectors and containers.

The Ink Analyzer class will include various methods. For example, this class may include a method entitled "AnalysisRegion Analyze ()." This method starts a synchronous analysis process. Document element data is passed into this method, which describes the current state of the document and indicates what ink in the document needs to be analyzed. With some embodiments, the document element data can be provided as the analysis context object (i.e., AnalysisRegion Analyze (Analysis Context)), as noted above. Alternately, individual ink strokes may be passed to the analysis process, either using a reference to the strokes (i.e., AnalysisRegion Analyze (Strokes)) or referenced as a property of the Ink Analyzer object (e.g., InkAnalyzer.Strokes {get;set}) with no properties passed to the Analyze method.

Once the analysis process is complete, this method will return a reference to the document independent analysis context object that has been modified to contain the results of the analysis process. The method also returns an AnalysisRegion value describing the area in the document where results have been calculated.

The Ink Analyzer class may also include a method entitled "AnalysisRegion Analyze(AnalysisContext, waitRegion)." This method is the same as the synchronous Analysis Region Analyze () method discussed above, but it only has ink analyzed if results are needed in the specified waitRegion area. More particularly, the call to this method will identify the analysis context object for the document and the region of the analysis context object (referred to as the "waitRegion") for which the analysis process should analyze synchronously. In certain embodiments, all other regions of the analysis context object will be ignored, unless the analysis process needs to analyze content in those regions in order to complete its analysis of the waitRegion. As discussed above, the analysis context object passed with this method contains a property called the "DirtyRegion" which describes the areas of the document that need analysis. By specifying a particular waitRegion, the software application may obtain the analysis results more quickly for one specific region of interest, rather than having all of the ink data in the document analyzed. When either of these Analyze methods is called, every available analysis process will be executed. Also, because these Analyze methods are synchronous calls, there is no need to execute the reconciliation process upon their conclusion, nor will an event fire once it is complete.

The Ink Analyzer class may also include a method entitled "BackgroundAnalyze(AnalysisContext)." This method starts the specified analysis operation, but does so on a separate background analysis thread. Thus, this method will return control to the main processing thread almost immediately while the actual analysis operation completes in the background. In particular, this method will return a value of "true" if the analysis process was successfully started. Again, the AnalysisContext value passed in to the method identifies the analysis context object for the document and indicates what ink in the document needs to be analyzed. Once the analysis operation has completed on the background thread, a Results event is raised to allow the software application to access the results. The event contains the results and the reconcile method which is used to incorporate the results back into the analysis context object for the current state of the document when the results are returned.

Each of these three Analyze methods in turn call the method "Clone" in an "Analysis Region" class. Using the "Clone" method, these Analyze methods create the independent document analysis context object that is subsequently modified by the analysis process to show the analysis results.

The Ink Analyzer class may also include a method entitled "Reconcile (AnalysisContext current, AnalysisResultsEventArgs resultArgs)," which the software application calls after receiving the results event which was caused by calling the BackgroundAnalyze(AnalysisContext) method. The Reconcile method compares the analysis results contained in the document independent analysis context object with the current version of the analysis context object maintained by the software application. This method identifies the nodes that need to be added and removed from the current version of the analysis context object, and identifies if any of the following properties of an existing node has changed: its recognition results, its location, the ink strokes associated with the node, or any other data associated with the results of the analysis operation. This method also writes these identified changes to the current version of the analysis context object. This method is sensitive to the ordering of context node ordering, such as the order of word context nodes on a line context node.

The analysis results (that is, the value of the property AnalysisResultsEventArgs) are passed back with this method, as they contain a public results structure and a private results structure. The public structure is returned so the software application can preview the changes that will occur in the reconcile stage. The private structure is included to prevent the software application from changing any of the analysis results before the reconcile process.

The Ink Analyzer class may also include the methods entitled "Recognizers RecognizersPriority()" and "SetHighestPriorityRecognizer(recognizer)." When ink needs to be recognized, the appropriate recognizer will be used based on language and capabilities. Accordingly, the Recognizers RecognizersPriority() method returns the recognition processes in the order in which they will be evaluated by the Ink Analyzer object. The order is determined per system depending upon recognition processes are available, but can be overridden for the software application by calling the SetHighestPriorityRecognizer(recognizer) on the Ink Analyzer object. The InkAnalyzer will enumerate through this ordered list until an appropriate recognizer can be found. The SetHighestPriorityRecognizer(recognizer) method raises the priority of a recognition process. By raising the priority of a particular recognition process, that recognition process will be used if it matches the needed language and capabilities of the current recognition operation. In essence, the SetHighestPriorityRecognizer(recognizer) pushes the designated recognition process to the top of the list returned by the RecognizersPriority method.

The Ink Analyzer class may also contain a method entitled "AnalysisRegion Abort()," which may use an analysis context object as a parameter. This method allows for a foreground or background analysis operation to be terminated early. This method returns an analysis region that describes the area that was being analyzed prior to the abort. Thus, if the software application intends to continue the analysis operation at a later time, this region can be merged into the DirtyRegion of the analysis context object for the current state of the document. Still further, the Ink Analyzer class may include an event entitled "AnalysisResultsEventHandler," which fires to the InkAnalyzer object as frequently as practical. More particularly, this event may fire between analysis processes and at least once every five seconds. This event can be used to provide the application with an update as to the status of an ongoing asynchronous analysis process (or processes).

The Ink Analysis API may also include classes in addition to the Analysis Context class and the Ink Analyzer class. For example, the Ink Analysis API may include a Context Node class. This class may include various components relating to the context nodes that make up the analysis context object and the document independent analysis context object, such as the property entitled "ContextNodeType Type {get;}." Each context node has a type, and there is a specific set of rules that each type should adhere to. This includes rules such as what types of child context nodes are allowed and whether or not strokes may be directly associated to the context node or only via its child context nodes.

The possible types of context nodes may be defined in a ContextNodeTypes enumeration and may include, for example, the following types: An InkAnnotation node, which represents ink data annotating non-text data; an InkDrawing node which represents ink data forming a drawing, an InkWord node, which represents ink data forming a word, a Line node, which contains one or more InkWord nodes and/or TextWord nodes for words forming a line of text; ListItem node, which may contain Paragraph, Image, or like nodes expected in a list; and a List node, which contains one or more ListItem nodes each describing an entry in the list. The node types may also include a NonInkDrawing node, representing a non-ink drawing image; an Object node, representing data not covered by other values of the ContextNodeType enumeration; a Paragraph node, which contains a one or more Line nodes corresponding to lines forming a paragraph; a Picture or Image node, representing a picture image; a Root node, which serves as the topmost node in an analysis context object; a Table node, which contains nodes representing items making up a table; a TextBox node, representing a text box; a TextWord node; and an UnclassifiedInk node, corresponding to ink data that has not yet been classified. The node types may also include a Group node, for groups of other nodes, an InkBullet node for bullet items, a Row node for documents elements presented in a row of a table, and a Cell node for document elements presented in a cell of a table.

The Context Node class may also include the property entitled "GUID Id {get;}," which is a globally unique identifier for the current context node. In order to allow access to any desired context node, each context node within a single analysis context object should have unique identifier. This class may also include a property entitled "AnalysisRegion Location {get;}," which identifies the location in the document space where the relevant context node is actually positioned. An AnalysisRegion is a two-dimensional structure grouping one or more possibly disjoint rectangle like structures together. This class may also include the property entitled "StrokeCollection Strokes {get;}", which identifies the ink strokes associated with the relevant context node. With particular embodiments, only leaf context nodes (such as Word, Drawing and Bullet nodes) are allowed by the Ink Analysis API to have strokes. The software application may use this property to reference the strokes at the leaf node level by all ancestor context nodes (e.g., the root node would contain a strokes reference to all strokes in the relevant analysis context object.)

Further, this class may include the property entitled "ContextNode ParentNode {get;}," which identifies the parent context node containing the relevant context node. In particular embodiments, context nodes are always created to depend from a parent context node, with the Root context node being a static member of an analysis context object. This class may also include the property "ContextNode[] SubNodes {get;}" which identifies all context nodes that are direct children of the relevant context node. That is, this property will only identify those children context nodes down one level in the analysis context object. For example, the value of this property for a Paragraph context node will only identify the line context nodes contained by the Paragraph node, and not the word context nodes that are children of the line context node.

This class may also include the property entitled "RecognitionResult RecognitionResult {get;},"which provides the recognition result as calculated by the relevant recognition analysis process or processes, as the RecognitionResult can represent more than one line of text from in more than one language. The Recognition Result is available for every context node in the document independent analysis context object even though the RecognitionData property which is set by the recognition analysis process and is used to create the RecognitionResult object might only be set at one level of the context node tree to avoid duplication of data. If the node does not have a RecognitionData associated with it, it will either merge the recognition results of all of its subnodes or extract the recognition result from its parent. This class may also include the property entitled "Stream RecognitionData {get; set;}," which is the persistent form of the RecognitionResult value. Again, the recognition analysis process produces the Stream RecognitionData value that is set on the relevant context node. The RecognitionResult object is then constructed based on this value.

The Context Node class may further include a property entitled "ContextLink[] Links {get;}," which provides an array of ContextLink objects. A ContextLink object describes an alternative relationship between two context nodes. While context nodes typically have a parent-child relationship with other context nodes, a ContextLink allows for an alternative relationship between context nodes. For example, a ContextLink may allow for a connection between two context nodes, anchoring of one context node to another context node, containment of one context node by another context node, or a desired type of link defined by the software application. ContextLinks may be added to this array by calling the AddLink method. Similarly, ContextLinks may be removed from this array by calling the DeleteLink method.

Still further, this class may include the properties "IsContainer {get;}" and "IsInkLeaf {get;)." The property IsContainer {get;} has the value of "true" if the relevant context node is not a leaf context node (that is, if the relevant context node contains children context nodes and is thus considered a container context node), and has the value of "false" otherwise. The IsInkLeaf {get;} property has the value of "true" if the current context node is not a container context node, and has a value of "false" otherwise. That is, if the current context node does not contain any children context nodes, it is considered a leaf context node. In certain embodiments, an InkLeaf context node is expected to contain references to stroke data, whereas container context nodes do not have this restriction. Container context nodes may or may not reference stroke data, as designated by the software application.

The Context Node class may also contain the property "Rect RotatedBoundingBox {get; set;}." The value of this property is calculated by a layout and classification analysis process. If the ink data associated with the relevant context node is written at an angle, then the bounds for the context node will still be horizontally aligned. The value of the RotatedBoundingBox property, however, will be aligned to the angle at which the ink data associated with the relevant context node was written. Still further, this class may include the property "ReClassifiable {get;}," which informs the InkAnalyzer if it is allowed to modify the values of the relevant context node.

In addition to these properties, the Context Node class may also include various methods. For example, this class may include a method entitled "ContextNode CreateSubNode(ContextNodeType type)." This method allows the creation of a child context node of a particular type. In one embodiment, this method may only allow valid child types of the relevant context node to be created, thereby preventing malformed data structures from being created. For example, this method may only allow a Line context node to create InkWord and TextWord child context nodes. This class may also contain a method entitled "void DeleteSubNode(ContextNode node)," which deletes the referenced child context node from the relevant analysis context object. However, in certain embodiments, if the referenced context node still contains strokes or child context nodes, then this method should fail. Also, if the reference context node is not a direct child of the relevant context node, then this method should fail. If a software application implements its own analysis context object and in turn employs this method, it does not delete non-empty context nodes or context nodes that are not direct children of the relevant context node to prevent malformed data structures in the analysis context object.

Additionally, this class may include the method "ContextNode[] HitTestSubNodes(AnalysisRegion region)," which returns an array of context node that are located in the specified region. However, only the immediate children nodes of this element are returned, not all descendants. The region is defined by the AnalysisRegion object, which may be a collection of one or more rectangles. In particular embodiments, if any part of a context node's location intersects the specified region, then that context node will be returned in the array. This method is employed to, for example, create the document independent analysis context object and to reconcile the analysis results with the analysis context object corresponding to the current state of the document. Thus, this method is frequently called, and should be optimized for fast repeated access by the InkAnalyzer object.

The Context Node class may also contain a method entitled "MoveStroke(Stroke stroke, ContextNode destination)." This method moves the association of a stroke from one leaf context node to another. In certain embodiments, this method is only used between leaf context nodes. It may also include a method entitled "MoveSubNodeToPosition(int OldIndex, int NewIndex)," which reorders the relevant context node with respect to its sibling context nodes. For example, if the document has three words on a line, e.g., word 1, word 2 and word3, then their order is implied by the array of subnodes returned from the parent context node. This method allows their order to be changed, so that, relative to the relevant parent context node, word 1 is specified to be the last word on the line by moving the context node for word 1 from position one to position three.

Still further, this class may include the method entitled "AddLink(ContextLink link)," which adds a new ContextLink object to the current context node. In particular embodiments, the ContextLink object should contain a reference to the relevant context node in order for the ContextLink to be successfully added to the array of ContextLinks associated to the relevant context node. It may also contain the method entitled "DeleteLink(ContextLink link)." This method deletes or removes the specified ContextLink object from the array of ContextLinks for the relevant context node. In one embodiment, this method call always completes successfully, even if the ContextLink does not exist in the array of ContextLinks associated with the relevant context node.

The Ink Analysis API may also include an Analysis Hint class. As with many of the previously described classes, the Analysis Hint class may include a constructor, entitled "AnalysisHint()," which initializes an Analysis Hint object to an empty state. This class may also include a number of properties, including a property entitled "AnalysisRegion Location {get;}." This property specifies the location in the document (as an AnalysisRegion) to which the AnalysisHint is applicable. For example, if the document is a free form note with a title section at the top of the page, then the application could set an AnalysisHint for the title region to specify that a horizontal line of ink is expected in that region. This Analysis Hint will help to increase the accuracy of an analysis process.

This class may also include a property entitled "string Factoid {get; set;}," which specifies a particular "factoid" that is to be used for the location in the document to which the AnalysisHint is applicable. Factoids provide hints to a recognition process as to an expected use of ink data (e.g., as regular text, digits, postal codes, filenames, and web URLs). This class may also include the properties entitled "RecognizerGuide Guide {get; set;}" and "OverrideLanguageId {get; set;}." The RecognizerGuide Guide {get; set;} property specifies the writing guide that is to be applied to the location in the document to which the AnalysisHint is applicable. Writing guides may, for example, help improve the accuracy of a recognizer analysis process by specifying to the user and informing the recognizer analysis process where the user will write lines or characters. The OverrideLanguageId {get; set;} property specifies a Language Hint for the document to which the AnalysisHint is applicable. Setting a Language Hint causes the InkAnalyzer object to use the designated language instead of the language specified on the context node.

This class may also include a property entitled "PrefixText {get; set;}," which specifies the text that is written or typed prior to a line of ink that is to be recognized. Still further, this class may include a property entitled "RecognitionModes RecognitionFlags {get; set;}," which specifies particular type of modes a recognition process should respect at the location in the document to which the AnalysisHint is applicable. Additionally, this class may include a property entitled "SuffixText {get; set;}," which specifies the text that is written or typed after to a line of ink that is to be recognized, and a property entitled "WordList WordList {get; set;}," which specifies a particular set of words that should be used by a recognition analysis process. Word lists may be used when the expected recognition results are known before the user has actually written input data, such as a list of medical terms that are expected to be written inside a medical form.

Still further, this class may include a property entitled "WordMode {get; set}." If this value is "true," then the analysis process will bias itself to return a single word for the entire analysis region. It may also include a property entitled "Coerce {get; set}," which, if "true," will force the analysis process to confine its result to any factoid or wordlist value set in the relevant hint. This class may also include a property entitled "AllowPartialDictionaryTerms {get; set}." If this property value is "true," then the recognition analysis process will be allowed to return partial words from its recognition dictionary.

In particular embodiments, the Ink Analysis API may further include an Analysis Region class. This class may include, for example, multiple constructors for constructing an AnalysisRegion object. For example, it may contain a first constructor for constructing an AnalysisRegion object having any region, a second constructor for constructing an AnalysisRegion object based upon the parameters for a two-dimensional rectangle, and a third constructor for constructing an AnalysisRegion object based upon four spatial coordinates. The default constructor may, for example, create an empty region. This class may also include a number of properties. For example, this class may include a property entitled "Rectangle Bounds {get;}," which retrieves the bounding rectangle for the AnalysisRegion, a property entitled "IsEmpty {get;}," which indicates whether the relevant AnalysisRegion object has an empty interior, and a property entitled "IsInfinite {get;}," which indicates whether the relevant AnalysisRegion is set to infinite or not.

This class may also include a number of methods, such as a method entitled "AnalysisRegion Clone()," which clones the relevant AnalysisRegion object. This class may also include a method entitled "Equals(AnalysisRegion otherRegion)," which tests whether the specified AnalysisRegion object (referred to as the otherRegion) is identical to the relevant AnalysisRegion object. This method returns a value of "true" if the interior of the specified Analysis Region object is identical to the interior of the relevant Analysis Region object, and otherwise returns a value of "false."

This class may further include a method "Intersect(AnalysisRegion regionToIntersect)," which crops down the relevant AnalysisRegion object to the specified analysis region. Thus, the resulting AnalysisRegion object will only include areas that overlapped or intersected the specified analysis region. This class may also include the method entitled "Intersect(Rectangle rectangle)," which crops down the relevant AnalysisRegion object to the specified rectangle. Again, the resulting AnalysisRegion object will only include areas that overlapped or intersected the specified rectangle. It may also include the method entitled "MakeEmpty()," which initializes the relevant AnalysisRegion object to an empty interior, and the method entitled "MakeInfinite()," which sets the area occupied by the relevant AnalysisRegion to be infinite. It may further include various methods for uniting or separating differently defined areas, such as method entitled "Union(AnalysisRegion regionToUnion)," which specifies an AnalysisRegion object to union or add to the relevant AnalysisRegion object, and the method entitled "Union(Rectangle rectangle)," which unions a specified rectangle to the relevant Analysis Region object. With this method, the rectangle may be specified in terms of the coordinate space for the relevant AnalysisRegion object. Of course, this class may include numerous other methods for combining areas or extracting one area from another based upon any desired definition for the areas.

The Ink Analysis API may also have a Recognition Result class. As with many of the previously discussed classes, the Recognition Result class may include one or more constructors. For example, this class may include a constructor entitled "RecognitionResult(Stream lattice)", which constructs a RecognitionResults object from a given recognition lattice. In particular embodiments, a recognition lattice is a serialized form of the results from a recognition process. This method may, for example, specify a recognition lattice as a byte array to be used for the construction of the relevant RecognitionResult object. It may also include a constructor entitled "RecognitionResult(ContextNode node)," which constructs a RecognitionResults object from a given context node. It may also include a constructor entitled "RecognitionResult(string Text, int StrokeCount)," which constructs a RecognitionResults object from a specified text value, which in turn is associated to a specified number of strokes and might be used for correction if the recognition process did not come up with an alternate recognition value corresponding to the actual handwritten ink data. Still further, this class may include a constructor entitled "RecognitionResult(RecognitionResult leftRecognitionResult, RecognitionResult rightRecognitionResult)," which constructs a RecognitionResults object by merging two existing Recognition Results objects together.

The Recognition Result class may also include one or more properties, such as a property entitled ""StrokeCollection StrokeCollection {get;}," which provides an array of stroke indexes representing a collection of strokes that are contained in a single ink object, and a property entitled "RecognitionAltemate TopAltemate {get;}," which provides the best alternate of the recognition result. This class may also include the property entitled "RecognitionConfidence RecognitionConfidence {get;}," which provides the level of confidence (e.g., strong, intermediate, or poor) of the top alternate selection for the current results from a recognition analysis process, and a property entitled "string TopString {get;}," which returns the best result string of the analysis results from a recognition analysis process.

The Recognition Results class may also include a number of methods, such as a method entitled "public RecognitionAlternateCollection GetAlternateCollectionFromSelection (selectionStart, selectionLength, maximumAlternates)," which specifies a collection of alternates from a selection within the best result string of analysis results from a recognition analysis process, where each alternate corresponds to only one segment of ink. The input parameters for this method may include, for example, a value which specifies the start of the text selection from which the collection of alternates is returned, a value that specifies the length of the text selection from which the collection of alternates is returned, and a value that specifies the maximum number of alternates to return. This method may then return the RecognitionAlternateCollection collection of alternates from a selection within the best result string of the recognition result.

The Recognition Results class may further include a method entitled "RecognitionResult Merge(RecognitionResult left, string separator, RecognitionResult right)." This method may be used to create a new RecognitionResult object from a single string, resulting in a flat lattice, append a single string to the beginning or end of an existing RecognitionResult object, or concatenate a single string in between two existing RecognitionResult objects. This class may also include a method entitled "ModifyTopAlternate(RecognitionAlternate alternate)," which specifies the recognition result to be modified with a known alternate. With some embodiments, by default the best result string of the results of a recognition analysis process corresponds to the top alternate. However, this method can be used to specify that alternates other than the top alternate are used in the results of the recognition analysis process. If the new top alternate results in a different segmentation than the previous one, the ModifyTopAlternate method will automatically update the context nodes to reflect the changes. To retrieve the alternates that can be used to modify the recognition result, this method calls the GetAlternatesFromSelection method. This class may also have a method entitled "Stream Save()," which persistently maintains the relevant RecognitionResults object in the form of a recognition lattice. A recognition lattice is a serialized format used to express the results from a recognition process.

The Ink Analysis API may also have an Analysis Options enumerated type. This type may contain one or more fields that specify how ink data will be analyzed by an analysis process, such a field entitled "const AnalysisOptions Default," which enables all available options for the analysis process. This field may, for example, enable text recognition, the use of tables, the use of lists, the use of annotations, the use of connectors and containers, and the use of intermediate results. This type may also include a field entitled "const AnalysisOptions EnableAnnotations," which enables and disables the detection of annotations, a field entitled "const AnalysisOptions EnableConnectorsAndContainers," which enables and disables the detection of connectors and containers, and a field entitled "const AnalysisOptions EnableIntermediateResults," enables and disables the return of analysis results to the software application between the use of different, sequential analysis processes (e.g., between a parsing process and a subsequent recognition process). This type may also have a field entitled "const AnalysisOptions EnableLists," which enables and disables the detection of lists, and a field entitled "const AnalysisOptions EnableTables," which enables and disables the detection of tables. This enumerated type may further include a field entitled "const AnalysisOptions EnableTextRecognition," which enables and disables a text recognition analysis process. However, if additional analysis processes are available (or different versions of the same analysis process), then this type may include additional AnalysisOptions accordingly.

Still further, the Ink Analysis API may include an AnalysisResultsEventArgs class. This class may have a constructor entitled "public AnalysisResultsEventArgs()," which creates a data structure that contains the analysis results and is returned to the software application when the AnalysisResults event is raised. This class may also include a property entitled "InkAnalyzer InkAnalyzer {get;}," which identifies the InkAnalyzer object that performed the analysis process.

The API may also have a Line class, which may be useful with some types of operating systems which recognize the use of a "Line" object representing a geometric line. This class may include a constructor, such as a constructor entitled "public Line(Point beginPoint, Point endPoint)," which creates a Line object. This class may also include various properties, such as a property entitled "public Point BeginPoint {get; set;}," which represents the beginning point of the line object and a property entitled "public Point EndPoint {get; set;}," which represents the ending point of the line object.

In addition to these classes, the Ink Analysis API may also contain a Recognition Alternate class. This class may include elements representing the possible word matches for segments of ink that are compared to a recognizer's dictionary. For example, this class may include a property entitled "Line Ascender {get;}," which provides the ascender line of a RecognitionAlternate object that exists on a single line (with a line being represented as two points), a property entitled "public Line Baseline {get;}," which provides the Baseline of a RecognitionAlternate object that exists on a single line, and a property entitled "Line Descender {get;}," which provides the descender line of a RecognitionAlternate object that exists on a single line. This class may also include a property entitled "RecognitionResult Extract {get;}," which provides a RecognitionResults object for the current RecognitionAlternate object. This property can be used, for example, to extract the RecognitionResult object for a word from the RecognitionResult object for a line containing that word.

It may also include the property entitled "Line Midline {get;}," which provides the midline for a RecognitionAlternate object that exists on a single line, a property entitled "StrokeCollection Strokes {get;}," which provides the collection of strokes that are contained in an ink object (that is, it provides a StrokeCollection representing the strokes that are associated to the RecognitionResult), and a property entitled "StrokeCollection[] StrokesArray {get;}," which provides a collection of strokes that are contained in one or more ink objects, representing the strokes that are associated with the RecognitionResult. This class also may include a property entitled "RecognitionConfidence RecognitionConfidence {get;}," which provides the level of confidence (e.g., strong, intermediate, or poor) that a recognition analysis process has determined in the recognition of a RecognitionAlternate object or of a gesture. For non-line nodes, the lowest RecognitionConfidence of the children of the relevant context nodes will be returned. It may also contain the property entitled "string RecognizedString {get;}" which specifies the result string of the alternate. Thus, for any context node above a word context node, the results string is concatenated together by this method. For example, a line node will contain a results string that in turn contains the results of all its children or word nodes. A paragraph node will then contain a results string that contains the results of all its children or line nodes.

The Recognition Alternate class may also contain one or more methods including, for example, a method entitled "StrokeCollection[] GetStrokesArrayFromTextRange(int selectionstart, int selectionlength)," which specifies a StrokeCollection from each ink object that corresponds to the known text range. This class may also contain a method entitled "StrokeCollection[] GetStrokesFromStrokesArrayRanges(StrokeCollection[] strokesArray)," which specifies the smallest collection of strokes that contains a known input collection of strokes and for which the recognizer can provide alternates. More particularly, the strokes are returned by an array of ink objects each containing an array of stroke indexes for the collection. The collection of ink strokes returned by this method may match the input collection, or it may be larger if the input collection matches only part of the smallest recognition result that includes all of the input strokes. This class may further include a method entitled "StrokeCollection GetStrokesFromStrokesRanges(StrokeCollection strokes)," which specifies the smallest collection of strokes that contains a known input collection of strokes and for which the recognizer can provide alternates, and a method entitled "StrokeCollection GetStrokesFromTextRange(int selectionstart, int selectionlength)," which specifies the StrokeCollection that corresponds to the known text range.

This class may further include a method entitled "void GetTextRangeFromStrokes(ref int selectionstart, ref int selectionend, StrokeCollection strokes)," which specifies the smallest range of recognized text for which the recognizer can return an alternate that contains a known set of strokes, and a method entitled "void GetTextRangeFromStrokesArray(ref int selectionstart, ref int selectionend, StrokeCollection[] strokesarray)," which specifies the smallest range of recognized text for which the recognizer can return an alternate that contains a known set of strokes. It also may have a method entitled "RecognitionAlternateCollection SplitWithConstantPropertyValue(GUID propertyType)," which returns a collection of alternates, which are a division of the alternate on which this method is called. Each alternate in the collection contains adjacent recognition segments which have the same property value for the property passed into the method. For example, this method can be used to obtain alternates that divide an original alternate by level of confidence boundaries (strong, intermediate, or poor) in the recognition result, line boundaries, or segment boundaries. It may further include a method entitled "byte[] GetPropertyValue(GUID propertyType)," which specifies the value of a known property of the alternate, such as the recognizer's confidence in the alternate. Not all recognition analysis processes will provide a value for all property types, however. Thus, this method provides the data for the types supported by the relevant recognition analysis process.

The Ink Analysis API may also include a Recognition Alternate Collection class. Like many of the classes discussed above, this class may include a constructor, entitled "RecognitionAlternateCollection()," for creating a RecognitionAlternateCollection object. This class may also include a number of properties, such as a property entitled "Count {get;}," which provides the number of objects or collections contained in a collection of alternate recognition values, a property entitled "IsSynchronized {get;}," which provides a value indicating whether access to the collection of alternate recognition values is synchronized with the software application (i.e., "thread safe"), and a property entitled "SyncRoot {get;}," which provides the object that can be used to synchronize access to the collection of alternate recognition values.

This class may also contain one or more methods, such as a method entitled "virtual void CopyTo(Array array, int index)," which copies all of the elements of the current collection of alternate recognition values to the specified one-dimensional array, starting at the specified destination array index, and a method entitled "IEnumerator IEnumerable.GetEnumerator()," which is a standard implementation of IEnumerable that enables callers to use the for each construct to enumerate through each RecognitionAlternate in the collection of alternate recognition values. This class may also include a method entitled "RecognitionAlternateCollectionEnumerator GetEnumerator()," which returns a RecognitionAlternateCollectionEnumerator that contains all of the objects within the collection of recognition alternate values. This method may be used, for example, to retrieve each object in the collection of recognition alternate values.

The Ink Analysis API may additionally include a Recognition Confidence enumeration and a Recognition Mode enumeration, each of which may contain one or more fields relating to a recognition analysis process. For example, the Recognition Confidence class may contain multiple fields, such as a field entitled "Intermediate," indicating that the recognition analysis process is confident that the correct result is in the list of provided alternate recognition values, a field entitled "Poor," which indicates that the recognition analysis is not confident that the result is in the list of provided alternate recognition values, and a field entitled "Strong," which indicates that the recognition analysis process is confident that the best alternate in the alternate recognition values is correct.

Similarly, the Recognition Mode class may include fields that that specify how a recognition analysis process interprets electronic ink data and thus determines a recognition result string. For example, this class may include a field entitled "Coerce," which specifies that the recognition analysis process coerce a recognition result based on a factoid that was specified for the context, and a field entitled "Line," which specifies that the recognition analysis process treat the electronic ink data as a single line. This class also may include a field entitled "None," which specifies that the recognition analysis process apply no recognition modes, and a field entitled "Segment," which specifies that the recognition analysis process treat the electronic ink data as forming a single word or character. Still further this class may include a field entitled "TopInkBreaksOnly," which disables multiple segmentation.

Still further, the Ink Analysis API may include a Context Link class, which defines how two context nodes may be linked together. The ContextLink object by itself represents which two context nodes are linked, the direction of the link, and the type of link. This class may include a property entitled "ContextNode SourceNode{get;}," which specifies the source context node that is being linked from another context node, a property entitled "ContextLinkType LinkType{get;}," which specifies the type of link relationship that exists between the source and destination context nodes, and a property entitled "CustomLinkType{get;}," which specifies that a custom link is being used. This situation would occur when an application decides to use the linking system of the Ink Analyzer API to represent application specific links beyond what the API can recognize.

This class may also include a property entitled "ContextNode DestinationNode {get;}," which specifies the destination context node that is being linked from another context node. There may be two constructors available to this class, which create a relationship between existing source and destination context nodes.

This class may also include an enumeration entitled "ContextLinkType enum," which defines the type of relationship shared by two context nodes. These various link types may include, for example, an "AnchorsTo" type, which describes that one node is anchored to the other node. Both nodes can use the SourceNode or DestinationNode property based on the parsing situation. The link types may also include the type "Contains," which describes that the one node contains the other node. With this relationship, the container node could be referenced as the SourceNode, while the containee node could be referenced as the DestinationNode. The link types may further include a "PointsTo" type, which describes that one node is pointing to another node. For this relationship, the node doing the pointing could be referenced as the SourceNode, while the node being pointed to could be referenced as the DestinationNode. Still further, the link types may have a "PointsFrom" type, which describes that one node is pointing from the other node. In this relationship, the node pointing away from the other node could be referenced as the SourceNode, while the node being pointed from could be referenced as the DestinationNode.

The link types may additionally include a "SpansHorizontally" type, which describes that one node runs the length horizontally of another node, and a "SpansVertically" type, which describes that one node runs the length vertically of another node. For these types, the node covering (strike out, underline, margin bar) the other node, usually written last, could be referenced as the SourceNode, while the node being spanned could be referenced as the DestinationNode. The link types may also include a "Custom" type, which describes that a custom link type has been used. When this value is used, the "CustomLinkType" property on the ContextLink object could provide more details as to the purpose of this link.

### Application Model

A Windows Client integrates characteristics of the Web with characteristics of traditional desktop applications. The Application Model provides a framework for secure applications and simplifies development, deployment and maintenance of client applications. This framework provides a simple and consistent user experience. For example, local applications can leverage familiar browser-like features regardless of whether the application is hosted in the browser or is a standalone application, while retaining the benefits of executing on the local client. This framework allows users to leverage their familiarity with the Web, thereby increasing the user's comfort level and reducing the time required to learn to use a new application. The Application Model is part of the System.Windows namespace.

Applications utilizing the Application Model operate in a manner similar to Web pages. When a user browses to an application, the application is automatically installed without requiring user confirmation of the installation, rebooting the client system, or risking the malfunctioning of other applications. In one embodiment, applications download progressively, thereby providing an initial level of interactivity before the application is completely downloaded. Application updates are handled automatically and in a manner that is transparent to the user. Thus, the user always has access to the latest version of the application without having to explicitly perform an application upgrade.

Applications that use the Application Model run locally on the client system regardless of whether the client system is on-line (i.e., actively coupled to the Web) or off-line (i.e., not actively coupled to the Web). This allows an application to provide better performance than a server-based application that needs an active Web connection and continually exchanges data with the server across the Web. After an application is installed on a client system, the application can be accessed from a "Start" menu (like a traditional desktop application) or by navigating to the application (like a Web application). The Application Model contains three primary parts: application lifecycle management, an application framework and a navigation framework.

Two different types of applications are supported by the Application Model: an "on-line application" and a "managed application". Applications utilizing the Application Model can execute in the browser or in a standalone top-level window. An "on-line application" is an application that executes from a server and is hosted in a browser. The application can be cached for offline access or the application may require certain on-line resources to execute properly. A "managed application" is available off-line and is installed on the client. The operating system services the managed application. An entry for the managed application can be added to the "Start" menu on the client. Applications can be downloaded progressively to allow the user to begin interacting with the application as it is being downloaded rather than delaying interaction until an installation process has finished.

Applications have an associated application manifest that describes the application's dependencies, such as additional libraries and resources needed to execute the application. An installer uses the application manifest to control downloading and installation of the application. A "trust manager" is invoked as part of the installation process. The trust manager uses the application manifest to determine what permissions are needed for the application to execute. The application manifest also specifies shell information, such as file associations and whether to add an entry to the Start menu as well as the icon and text for the entry.

Applications utilizing the Application Model include markup, code, resources and a manifest. An application is defined and scoped by its application object, which is a global object that persists in memory for the lifetime of each application session. The application object has knowledge of all the resources that belong to the application and provides a boundary between itself and other applications or external resources. The application framework uses the application object to identify, reference and communicate with the application. The application object is also used within the application to manage windows and resources, specify startup and shutdown behavior, handle configuration settings, specify visual styles for the application, share code, state and resources across navigations, and handle application-wide events.

A navigation framework supports navigation-based applications that leverage users' familiarity with navigation and journaling activities on the Web to provide a more familiar, consistent user experience on the client system, regardless of whether the application is hosted in the system browser or in a standalone top-level window. Journaling is the process used by the navigation framework to track navigation history. The journal allows users to retrace their steps backward and forward in a linear navigation sequence. Whether a navigation experience is hosted in the browser or in a standalone navigation window, each navigation is persisted in the journal and can be revisited in a linear sequence by using "forward" and "back" buttons or by invoking "go forward" and "go back" methods. Each navigation window has an associated journal.

A NavigationApplication class simplifies the task of creating navigation-based applications by providing properties and events related to navigation. The NavigationApplication class includes a startup property that specifies the page or element to which the system navigates when the application is first launched. This class also has a properties collection that allows an application developer to share global state information across pages without having to subclass the application, and supports data binding to these properties.

### EXEMPLARY COMPUTING SYSTEM AND ENVIRONMENT

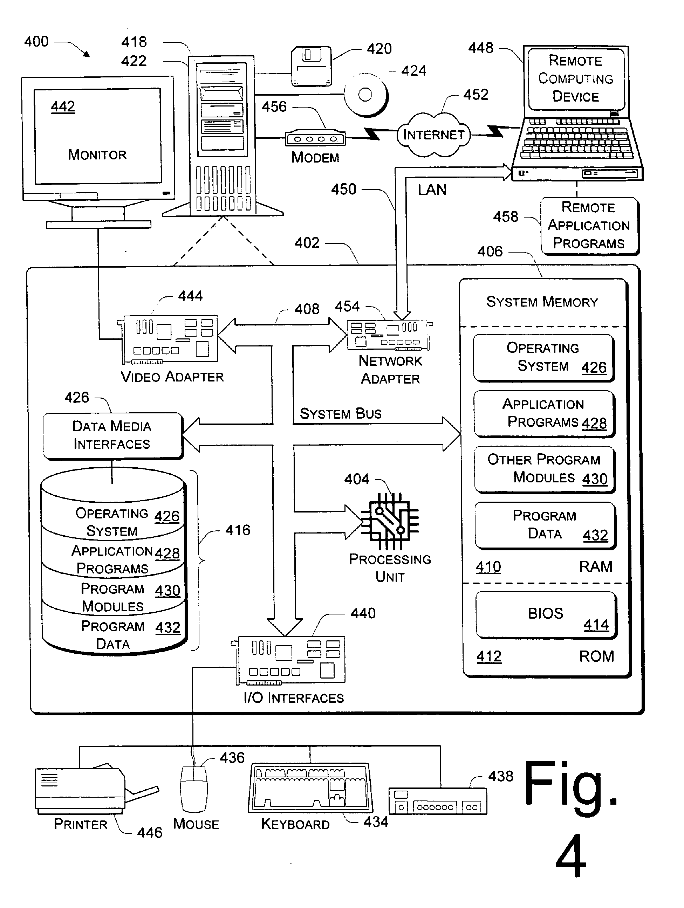

Fig. 4 illustrates an example of a suitable computing environment 400 within which the programming framework 132 may be implemented (either fully or partially). The computing environment 400 may be utilized in the computer and network architectures described herein.

The exemplary computing environment 400 is only one example of a computing environment and is not intended to suggest any limitation as to the scope of use or functionality of the computer and network architectures. Neither should the computing environment 400 be interpreted as having any dependency or requirement relating to any one or combination of components illustrated in the exemplary computing environment 400.

The framework 132 may be implemented with numerous other general purpose or special purpose computing system environments or configurations. Examples of well known computing systems, environments, and/or configurations that may be suitable for use include, but are not limited to, personal computers, server computers, multiprocessor systems, microprocessor-based systems, network PCs, minicomputers, mainframe computers, distributed computing environments that include any of the above systems or devices, and so on. Compact or subset versions of the framework may also be implemented in clients of limited resources, such as cellular phones, personal digital assistants, handheld computers, or other communication/computing devices.

The framework 132 may be described in the general context of computer-executable instructions, such as program modules, being executed by one or more computers or other devices. Generally, program modules include routines, programs, objects, components, data structures, etc. that perform particular tasks or implement particular abstract data types. The framework 132 may also be practiced in distributed computing environments where tasks are performed by remote processing devices that are linked through a communications network. In a distributed computing environment, program modules may be located in both local and remote computer storage media including memory storage devices.

The computing environment 400 includes a general-purpose computing device in the form of a computer 402. The components of computer 402 can include, by are not limited to, one or more processors or processing units 404, a system memory 406, and a system bus 408 that couples various system components including the processor 404 to the system memory 406.

The system bus 408 represents one or more of several possible types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

Computer 402 typically includes a variety of computer readable media. Such media can be any available media that is accessible by computer 402 and includes both volatile and non-volatile media, removable and non-removable media.

The system memory 406 includes computer readable media in the form of volatile memory, such as random access memory (RAM) 410, and/or non-volatile memory, such as read only memory (ROM) 412. A basic input/output system (BIOS) 414, containing the basic routines that help to transfer information between elements within computer 402, such as during start-up, is stored in ROM 412. RAM 410 typically contains data and/or program modules that are immediately accessible to and/or presently operated on by the processing unit 404.

Computer 402 may also include other removable/non-removable, volatile/non-volatile computer storage media. By way of example, Fig. 4 illustrates a hard disk drive 416 for reading from and writing to a non-removable, non-volatile magnetic media (not shown), a magnetic disk drive 418 for reading from and writing to a removable, non-volatile magnetic disk 420 (e.g., a "floppy disk"), and an optical disk drive 422 for reading from and/or writing to a removable, non-volatile optical disk 424 such as a CD-ROM, DVD-ROM, or other optical media. The hard disk drive 416, magnetic disk drive 418, and optical disk drive 422 are each connected to the system bus 408 by one or more data media interfaces 426. Alternatively, the hard disk drive 416, magnetic disk drive 418, and optical disk drive 422 can be connected to the system bus 408 by one or more interfaces (not shown).

The disk drives and their associated computer-readable media provide non-volatile storage of computer readable instructions, data structures, program modules, and other data for computer 402. Although the example illustrates a hard disk 416, a removable magnetic disk 420, and a removable optical disk 424, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 416, magnetic disk 420, optical disk 424, ROM 412, and/or RAM 410, including by way of example, an operating system 426, one or more application programs 428, other program modules 430, and program data 432. Each of the operating system 426, one or more application programs 428, other program modules 430, and program data 432 (or some combination thereof) may include elements of the programming framework 132.

A user can enter commands and information into computer 402 via input devices such as a keyboard 434 and a pointing device 436 (e.g., a "mouse"). Other input devices 438 (not shown specifically) may include a microphone, joystick, game pad, satellite dish, serial port, scanner, and/or the like. These and other input devices are connected to the processing unit 404 via input/output interfaces 440 that are coupled to the system bus 408, but may be connected by other interface and bus structures, such as a parallel port, game port, or a universal serial bus (USB).

A monitor 442 or other type of display device can also be connected to the system bus 408 via an interface, such as a video adapter 444. In addition to the monitor 442, other output peripheral devices can include components such as speakers (not shown) and a printer 446 which can be connected to computer 402 via the input/output interfaces 440.

Computer 402 can operate in a networked environment using logical connections to one or more remote computers, such as a remote computing device 448. By way of example, the remote computing device 448 can be a personal computer, portable computer, a server, a router, a network computer, a peer device or other common network node, and so on. The remote computing device 448 is illustrated as a portable computer that can include many or all of the elements and features described herein relative to computer 402.

Logical connections between computer 402 and the remote computer 448 are depicted as a local area network (LAN) 450 and a general wide area network (WAN) 452. Such networking environments are commonplace in offices, enterprise-wide computer networks, intranets, and the Internet.

When implemented in a LAN networking environment, the computer 402 is connected to a local network 450 via a network interface or adapter 454. When implemented in a WAN networking environment, the computer 402 typically includes a modem 456 or other means for establishing communications over the wide network 452. The modem 456, which can be internal or external to computer 402, can be connected to the system bus 408 via the input/output interfaces 440 or other appropriate mechanisms. It is to be appreciated that the illustrated network connections are exemplary and that other means of establishing communication link(s) between the computers 402 and 448 can be employed.

In a networked environment, such as that illustrated with computing environment 400, program modules depicted relative to the computer 402, or portions thereof, may be stored in a remote memory storage device. By way of example, remote application programs 458 reside on a memory device of remote computer 448. For purposes of illustration, application programs and other executable program components such as the operating system are illustrated herein as discrete blocks, although it is recognized that such programs and components reside at various times in different storage components of the computing device 402, and are executed by the data processor(s) of the computer.

An implementation of the framework 132, and particularly, the API 142 or calls made to the API 142, may be stored on or transmitted across some form of computer readable media. Computer readable media can be any available media that can be accessed by a computer. By way of example, and not limitation, computer readable media may comprise "computer storage media" and "communications media." "Computer storage media" include volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

Alternatively, portions of the framework may be implemented in hardware or a combination of hardware, software, and/or firmware. For example, one or more application specific integrated circuits (ASICs) or programmable logic devices (PLDs) could be designed or programmed to implement one or more portions of the framework.

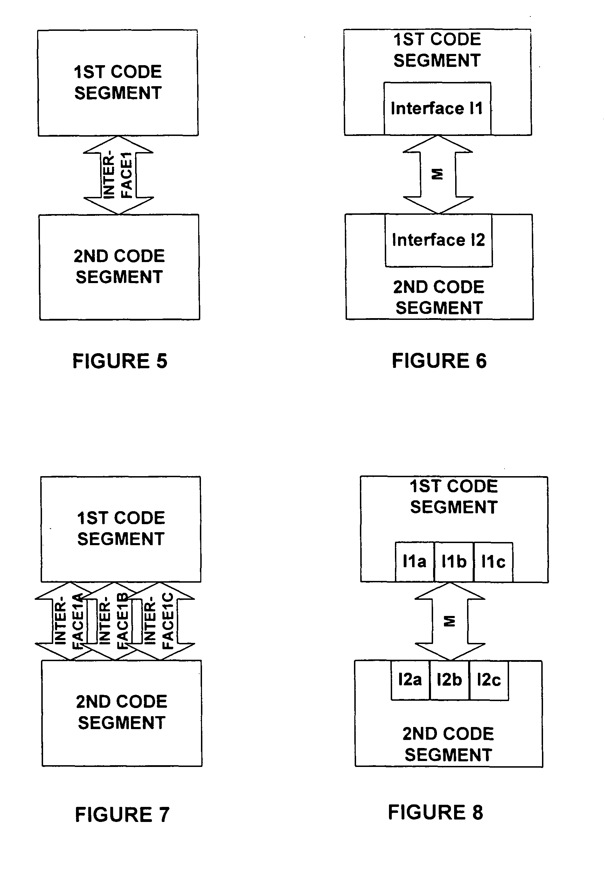

Notionally, a programming interface may be viewed generically, as shown in Fig. 5 or Fig. 6. Fig. 5 illustrates an interface Interface1 as a conduit through which first and second code segments communicate. Fig. 6 illustrates an interface as comprising interface objects I1 and I2 (which may or may not be part of the first and second code segments), which enable first and second code segments of a system to communicate via medium M. In the view of Fig. 6, one may consider interface objects I1 and I2 as separate interfaces of the same system and one may also consider that objects I1 and I2 plus medium M comprise the interface. Although Figs. 5 and 6 show bi-directional flow and interfaces on each side of the flow, certain implementations may only have information flow in one direction (or no information flow as described below) or may only have an interface object on one side. By way of example, and not limitation, terms such as application programming or program interface (API), entry point, method, function, subroutine, remote procedure call, and component object model (COM) interface, are encompassed within the definition of programming interface.

Aspects of such a programming interface may include the method whereby the first code segment transmits information (where "information" is used in its broadest sense and includes data, commands, requests, etc.) to the second code segment; the method whereby the second code segment receives the information; and the structure, sequence, syntax, organization, schema, timing and content of the information. In this regard, the underlying transport medium itself may be unimportant to the operation of the interface, whether the medium be wired or wireless, or a combination of both, as long as the information is transported in the manner defined by the interface. In certain situations, information may not be passed in one or both directions in the conventional sense, as the information transfer may be either via another mechanism (e.g. information placed in a buffer, file, etc. separate from information flow between the code segments) or non-existent, as when one code segment simply accesses functionality performed by a second code segment. Any or all of these aspects may be important in a given situation, e.g., depending on whether the code segments are part of a system in a loosely coupled or tightly coupled configuration, and so this list should be considered illustrative and non-limiting.

This notion of a programming interface is known to those skilled in the art and is clear from the foregoing detailed description of the invention. There are, however, other ways to implement a programming interface, and, unless expressly excluded, these too are intended to be encompassed by the claims set forth at the end of this specification. Such other ways may appear to be more sophisticated or complex than the simplistic view of Figs. 5 and 6, but they nonetheless perform a similar function to accomplish the same overall result. We will now briefly describe some illustrative alternative implementations of a programming interface.

### A. FACTORING

A communication from one code segment to another may be accomplished indirectly by breaking the communication into multiple discrete communications. This is depicted schematically in Figs. 7 and 8. As shown, some interfaces can be described in terms of divisible sets of functionality. Thus, the interface functionality of Figs. 5 and 6 may be factored to achieve the same result, just as one may mathematically provide 24, or 2 times 2 times 3 times 2. Accordingly, as illustrated in Fig. 7, the function provided by interface Interface1 may be subdivided to convert the communications of the interface into multiple interfaces Interface1A, Interface 1B, Interface 1C, etc. while achieving the same result. As illustrated in Fig. 8, the function provided by interface I1 may be subdivided into multiple interfaces I1a, I1b, I1c, etc. while achieving the same result. Similarly, interface I2 of the second code segment which receives information from the first code segment may be factored into multiple interfaces I2a, I2b, I2c, etc. When factoring, the number of interfaces included with the 1^{st} code segment need not match the number of interfaces included with the 2^{nd} code segment. In either of the cases of Figs. 7 and 8, the functional spirit of interfaces Interface1 and I1 remain the same as with Figs. 5 and 6, respectively. The factoring of interfaces may also follow associative, commutative, and other mathematical properties such that the factoring may be difficult to recognize. For instance, ordering of operations may be unimportant, and consequently, a function carried out by an interface may be carried out well in advance of reaching the interface, by another piece of code or interface, or performed by a separate component of the system. Moreover, one of ordinary skill in the programming arts can appreciate that there are a variety of ways of making different function calls that achieve the same result.

### B. REDEFINITION

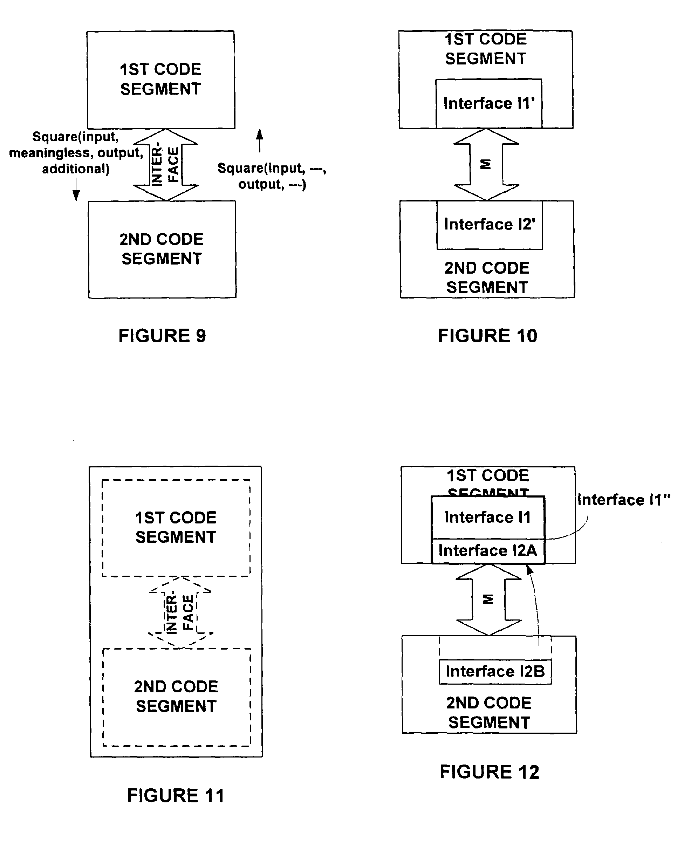

In some cases, it may be possible to ignore, add or redefine certain aspects (e.g., parameters) of a programming interface while still accomplishing the intended result. This is illustrated in Figs. 9 and 10. For example, assume interface Interface1 of Fig. 5 includes a function call *Square(input, precision, output),* a call that includes three parameters, *input, precision and output,* and which is issued from the 1^{st} Code Segment to the 2^{nd} Code Segment., If the middle parameter *precision* is of no concern in a given scenario, as shown in Fig. 9, it could just as well be ignored or even replaced with a *meaningless* (in this situation) parameter. One may also add an *additional* parameter of no concern. In either event, the functionality of square can be achieved, so long as output is returned after input is squared by the second code segment. *Precision* may very well be a meaningful parameter to some downstream or other portion of the computing system; however, once it is recognized that *precision* is not necessary for the narrow purpose of calculating the square, it may be replaced or ignored. For example, instead of passing a valid *precision* value, a meaningless value such as a birth date could be passed without adversely affecting the result. Similarly, as shown in Fig. 10, interface I1 is replaced by interface I1', redefined to ignore or add parameters to the interface. Interface I2 may similarly be redefined as interface I2', redefined to ignore unnecessary parameters, or parameters that may be processed elsewhere. The point here is that in some cases a programming interface may include aspects, such as parameters, that are not needed for some purpose, and so they may be ignored or redefined, or processed elsewhere for other purposes.

### C. INLINE CODING

It may also be feasible to merge some or all of the functionality of two separate code modules such that the "interface" between them changes form. For example, the functionality of Figs. 5 and 6 may be converted to the functionality of Figs. 11 and 12, respectively. In Fig. 11, the previous 1^{st} and 2^{nd} Code Segments of Fig. 5 are merged into a module containing both of them. In this case, the code segments may still be communicating with each other but the interface may be adapted to a form which is more suitable to the single module. Thus, for example, formal Call and Return statements may no longer be necessary, but similar processing or response(s) pursuant to interface Interfacel may still be in effect. Similarly, shown in Fig. 12, part (or all) of interface I2 from Fig. 6 may be written inline into interface I1 to form interface I1". As illustrated, interface I2 is divided into I2a and I2b, and interface portion I2a has been coded in-line with interface I1 to form interface I1". For a concrete example, consider that the interface I1 from Fig. 6 performs a function call square *(input, output),* which is received by interface I2, which after processing the value passed with *input* (to square it) by the second code segment, passes back the squared result with *output.* In such a case, the processing performed by the second code segment (squaring *input)* can be performed by the first code segment without a call to the interface.

### D. DIVORCE

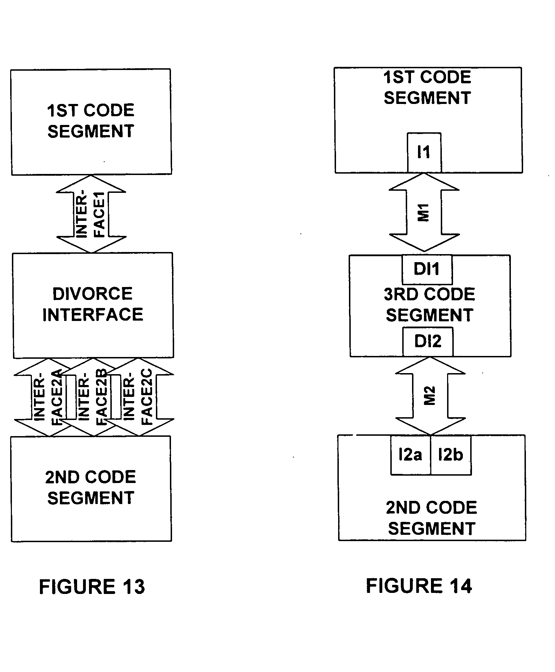

A communication from one code segment to another may be accomplished indirectly by breaking the communication into multiple discrete communications. This is depicted schematically in Figs. 13 and 14. As shown in Fig. 13, one or more piece(s) of middleware (Divorce Interface(s), since they divorce functionality and / or interface functions from the original interface) are provided to convert the communications on the first interface, Interface1, to conform them to a different interface, in this case interfaces Interface2A, Interface2B and Interface2C. This might be done, e.g., where there is an installed base of applications designed to communicate with, say, an operating system in accordance with an Interface1 protocol, but then the operating system is changed to use a different interface, in this case interfaces Interface2A, Interface2B and Interface2C. The point is that the original interface used by the 2^{nd} Code Segment is changed such that it is no longer compatible with the interface used by the 1^{st} Code Segment, and so an intermediary is used to make the old and new interfaces compatible. Similarly, as shown in Fig. 14, a third code segment can be introduced with divorce interface DI1 to receive the communications from interface I1 and with divorce interface DI2 to transmit the interface functionality to, for example, interfaces I2a and I2b, redesigned to work with DI2, but to provide the same functional result. Similarly, DI1 and DI2 may work together to translate the functionality of interfaces I1 and I2 of Fig. 6 to a new operating system, while providing the same or similar functional result.

### E. REWRITING

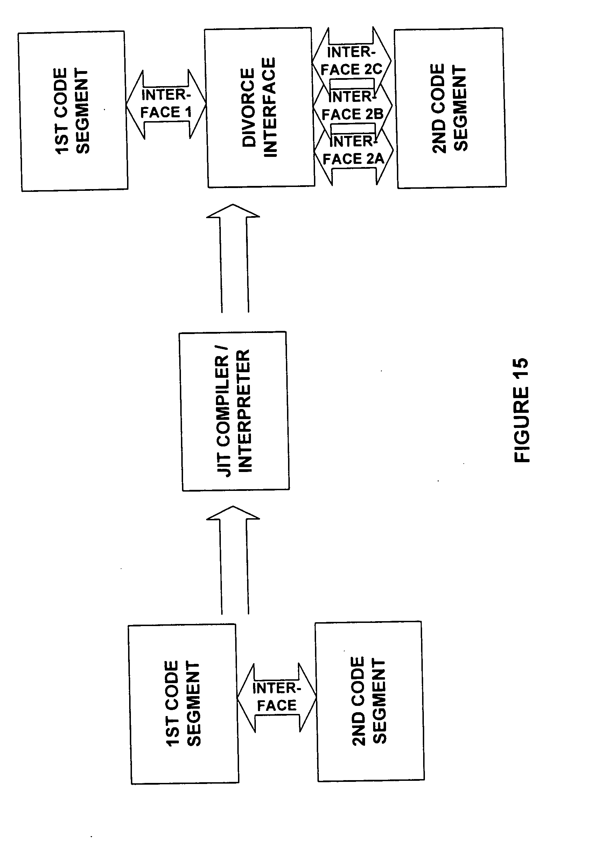

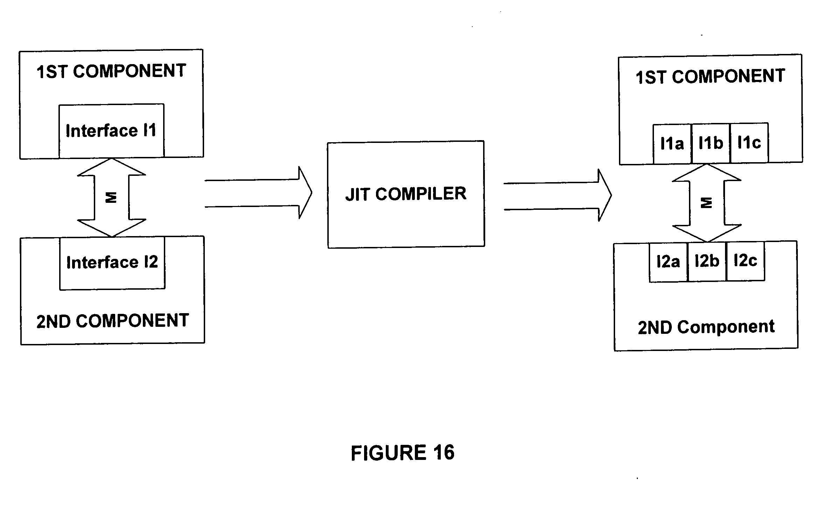

Yet another possible variant is to dynamically rewrite the code to replace the interface functionality with something else but which achieves the same overall result. For example, there may be a system in which a code segment presented in an intermediate language (e.g. Microsoft IL, Java ByteCode, etc.) is provided to a Just-in-Time (JIT) compiler or interpreter in an execution environment (such as that provided by the .Net framework, the Java runtime environment, or other similar runtime type environments). The JIT compiler may be written so as to dynamically convert the communications from the 1^{st} Code Segment to the 2^{nd} Code Segment, i.e., to conform them to a different interface as may be required by the 2^{nd} Code Segment (either the original or a different 2^{nd} Code Segment). This is depicted in Figs. 15 and 16. As can be seen in Fig. 15, this approach is similar to the Divorce scenario described above. It might be done, e.g., where an installed base of applications are designed to communicate with an operating system in accordance with an Interface 1 protocol, but then the operating system is changed to use a different interface. The JIT Compiler could be used to conform the communications on the fly from the installed-base applications to the new interface of the operating system. As depicted in Fig. 16, this approach of dynamically rewriting the interface(s) may be applied to dynamically factor, or otherwise alter the interface(s) as well.

It is also noted that the above-described scenarios for achieving the same or similar result as an interface via alternative embodiments may also be combined in various ways, serially and/or in parallel, or with other intervening code. Thus, the alternative embodiments presented above are not mutually exclusive and may be mixed, matched and combined to produce the same or equivalent scenarios to the generic scenarios presented in Figs. 5 and 6. It is also noted that, as with most programming constructs, there are other similar ways of achieving the same or similar functionality of an interface which may not be described herein, but nonetheless are represented by the spirit and scope of the invention, i.e., it is noted that it is at least partly the functionality represented by, and the advantageous results enabled by, an interface that underlie the value of an interface.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A programming interface embodied on one or more computer readable media, comprising:
a first group of services related to generating graphical components;
a second group of services related to binding properties of a class to a data source; and
a third group of services related to formatting content.

2. A programming interface as recited in claim 1, wherein the first group of services includes a service that determines an appearance of the graphical components.

3. A programming interface as recited in claim 1, wherein the first group of services includes a service that determines a behavior of the graphical components.

4. A programming interface as recited in claim 1, wherein the first group of services includes a service that determines an arrangement of the graphical components.

5. A programming interface as recited in claim 1, wherein the first group of services includes a plurality of nested primitive controls that define the graphical components.

6. A programming interface as recited in claim 1, wherein the graphical components are defined by vector graphics.

7. A programming interface as recited in claim 1, further comprising a fourth group of services related to animating at least one graphical component.

8. A programming interface as recited in claim 1, further comprising a fourth group of services related to creating applications having navigation capabilities.

9. A programming interface as recited in claim 1, further comprising a fourth group of services related to supporting electronic ink processing systems.

10. A programming interface as recited in claim 1, further comprising a fourth group of services related to combining a plurality of different media types.

11. A programming interface as recited in claim 1, further comprising a fourth group of services related to executing applications on a client using a browser-type interface.

12. A programming interface as recited in claim 1, further comprising a fourth group of services related to automatically installing and executing an application.

13. A programming interface as recited in claim 1, further comprising a fourth group of services related to serializing content.

14. A programming interface as recited in claim 1, further comprising a fourth group of services related to automating the generation of a user interface.

15. A software architecture comprising the programming interface as recited in claim 1.

16. A programming interface embodied on one or more computer readable media, comprising:
a first group of services related to formatting content prior to displaying the content;
a second group of services related to binding properties of a class to a data source; and
a third group of services related to generating imaging effects.

17. A programming interface as recited in claim 16, wherein the first group of services includes arranging a plurality of data elements.

18. A programming interface as recited in claim 16, wherein the third group of services includes animating at least one graphical item.

19. A programming interface as recited in claim 16, further comprising a fourth group of services related to creating applications that allow a user of the application to navigate between a plurality of images.

20. A programming interface as recited in claim 16, further comprising a fourth group of services related to editing previously created content.

21. A programming interface as recited in claim 16, further comprising a fourth group of services related to managing input received from an input device.

22. A programming interface as recited in claim 16, further comprising a fourth group of services related to enabling interoperability with other computing systems.

23. A computer system including one or more microprocessors and one or more software programs, the one or more software programs utilizing an application program interface to request services from an operating system, the application program interface including separate commands to request services comprising the following groups of services:
a first group of services related to generating graphical objects;
a second group of services related to creating components of the graphical objects; and
a third group of services related to modifying an appearance of the graphical objects.

24. A computer system as recited in claim 23, wherein the first group of services includes a service for defining a behavior of at least one graphical object.

25. A computer system as recited in claim 23, wherein the first group of services includes a service for defining arrangement of the graphical objects.

26. A computer system as recited in claim 23, wherein modifying an appearance of the graphical objects includes animating the graphical objects.

27. A computer system as recited in claim 23, wherein the second group of services includes services to generate geometric shapes.

28. A computer system as recited in claim 23, wherein the application program interface further includes a fourth group of services related to formatting text.

29. A method comprising:
calling one or more first functions to facilitate formatting data;
calling one or more second functions to facilitate creating graphical objects; and
calling one or more third functions to facilitate changing an appearance of the graphical objects.

30. A method as recited in claim 29, further including calling one or more fourth functions to facilitate generating a user interface using a plurality of graphical objects.

31. A method as recited in claim 29, further including calling one or more fourth functions to facilitate runtime creation of a user interface.

32. A method as recited in claim 29, further including:
calling one or more fourth functions to facilitate generating a user interface using a plurality of graphical objects; and
calling one or more fifth functions to facilitate runtime creation of the user interface.

33. A method as recited in claim 29, wherein the first functions facilitate:
receiving user input; and
arranging data elements on a display.

34. A method as recited in claim 29, wherein the second functions facilitate generating geometric shapes.

35. A method as recited in claim 29, wherein the second functions facilitate generating at least one geometric shape and the third functions facilitate modifying an appearance of the geometric shape.

36. A system comprising:
means for exposing a first set of functions that enable creating a plurality of geometric shapes;
means for exposing a second set of functions that enable changing the manner in which the geometric shapes are arranged; and
means for exposing a third set of functions that enable modifying appearances of the geometric shapes.

37. A system as recited in claim 36, wherein the second set of functions further enable arrangement of the geometric shapes on a page to be rendered.

38. A system as recited in claim 36, wherein the plurality of geometric shapes include a line.

39. A system as recited in claim 36, wherein the third set of functions further enable associating imaging effects with at least one geometric shape.

40. A system as recited in claim 36, wherein the third set of functions further enable changing an appearance of a particular geometric shape over a period of time.

41. A system as recited in claim 36, further comprising means for exposing a fourth set of functions that enable generation of a user interface using the plurality of geometric shapes.

42. A system as recited in claim 36, further comprising means for exposing a fourth set of functions that enable associating a graphical object with one or more data sources.

43. A system as recited in claim 36, further comprising means for exposing a fourth set of functions that enable displaying data-specific versions of graphical objects.

44. A method comprising:
calling one or more first functions to facilitate creating components of graphical objects;
calling one or more second functions to facilitate generating graphical objects;
calling one or more third functions to facilitate modifying an appearance of the graphical objects;
calling one or more fourth functions to facilitate arranging the graphical objects; and
calling one or more fifth functions to facilitate associating the graphical objects with data sources.

45. A method as recited in claim 44, further comprising calling one or more sixth functions to facilitate navigating between a plurality of displays of content.

46. A method as recited in claim 44, wherein the components of the graphical objects include a plurality of shapes.

47. A method as recited in claim 44, wherein the second functions further facilitate generating a graphical user interface.

48. A method as recited in claim 44, wherein the third functions include functions that modify the appearance of a particular graphical object.

49. A method as recited in claim 44, wherein the third functions include functions that modify the appearance of one or more components of a graphical object.

50. A method as recited in claim 44, wherein the third functions include functions that move graphical objects to different positions on a display.

51. A method as recited in claim 44, wherein the third functions modify an appearance of a graphical object in response to user input.

52. A method as recited in claim 44, wherein the fourth functions modify an arrangement of graphical objects in response to user input.

53. A method of developing a program, the method comprising:
accessing a first group of functions to select components of a graphical image;
accessing a second group of functions to generate the graphical image;
accessing a third group of functions to modify an appearance of at least one component of the graphical image; and
accessing a fourth group of functions to format content associated with the graphical image.

54. A method as recited in claim 53, wherein the graphical image is a user interface.

55. A method as recited in claim 53, wherein the content is textual information.

56. A method as recited in claim 53, wherein the content is graphical data.

57. A method as recited in claim 53, further comprising accessing a fifth group of functions to associate a component of the graphical image with a data source.

58. A method as recited in claim 53, wherein the third group of functions further modify a behavior associated with the at least one component of the graphical image.
